# EUROPEAN PATENT APPLICATION

(11) **EP 2 535 902 A1**
(43) Date of publication of application: **19.12.2012**
(21) Application number: 11774980.4
(22) Date of filing: 26.04.2011
(51) Int. Cl.: H01B 13/012, H01B 7/00, H02G 3/04

(54) **MANUFACTURING METHOD FOR WIRE HARNESS**

(30) Priority: 28.04.2010 JP 2010104372; 28.04.2010 JP 2010104467
(71) Applicant: AutoNetworks Technologies, Ltd., Yokkaichi-shi, Mie 510-8503 (JP); Sumitomo Wiring Systems, Ltd., Yokkaichi-shi, Mie 510-8503 (JP); Sumitomo Electric Industries, Ltd., Osaka-shi, Osaka 541-0041 (JP)
(72) Inventor: HIRANO, Nobuyuki, Yokkaichi-shi Mie 510-8503 (JP); MURATA, Atsushi, Yokkaichi-shi Mie 510-8503 (JP); SATO, Osamu, Yokkaichi-shi Mie 510-8503 (JP)
(74) Representative: Müller-Boré & Partner Patentanwälte
(86) International application number: PCT/JP2011/060118
(87) International publication number: WO 2011/136199

(57) **Abstract**

A method for manufacturing a wire harness and a wire harness capable of preventing unexpected deformation of a thermoplastic material forming a shape maintenance member covering electric wires or a covering member or separation of the thermoplastic material.

A predetermined part of electric wires 91, in a state where it is held with a first molded body 931 and a second molded body 932, is placed on a first lower holding tool 11a. The first molded body 931 and the second molded body 932, in the state where they are placed on the first lower holding tool 11a, are pressurized with a first lower mold 21a and a first upper mold 22a having heating means, to heat the first molded body 931 and the second molded body 932 while pressurize them, to cover the periphery of the predetermined part of the electric wires 91 with the first molded body 931 and the second molded body 932, and contact surfaces of the first molded body 931 and the second molded body 932 are welded. Thereafter, the predetermined part of the electric wires 91 covered with the first molded body 931 and the second molded body 932, in the state where it is placed on the upper side of the first lower holding tool 11a, is removed from the first upper mold 22a and the first lower mold 21a.

## Description

### Technical Field

The present invention relates to a wire harness, and more particularly, to a method for manufacturing a wire harness and a wire harness provided with a shape maintenance member to maintain a predetermined part of electric wires forming the wire harness in a predetermined shape (this shape maintenance member also has a function as a protector to protect the electric wires forming the wire harness).

### Background Art

In a vehicle such as an automobile, a wire harness to mutually connect electric devices, electronic devices and the like is provided. Since the wire harness is arranged along a predetermined route inside the vehicle or the like, in some cases, the wire harness is formed to have a predetermined shape at a manufacturing stage to facilitate the arrangement of the wire harness. For example, the wire harness is formed to have a shape corresponding to the shape of the route in which the wire harness (i.e., the electric wires forming the wire harness) is arranged.

For this purpose, in some cases, a shape maintenance member is attached to a predetermined spot of the electric wires forming the wire harness (e.g., a spot where the electric wires branch or a spot where the electric wires are bended or distorted). Further, in some cases, to protect the electric wires forming the wire harness, a protector is attached to the predetermined spot. Generally, as such shape maintenance member or protector, a hollow shell-type member (e.g., a cylindrical member in which its axial line is formed to have a predetermined shape) is applied. Generally, as such shape maintenance member or protector, an injection molded product formed of a resin material is applied.

According to the arrangement where the shape maintenance member as an injection molded product is applied, by attaching the shape maintenance member to a predetermined spot of the electric wires forming the wire harness, it is possible to form the spot where the shape maintenance member is attached into a predetermined shape. Further, according to the arrangement where the protector which is an injection molded product is applied, it is possible to protect the spot where the protector is attached. However, the arrangements where the shape maintenance member or the protector which is an injection molded product is attached have the following problems.

First, to manufacture the shape maintenance member or the protector, injection molding dies are required. Since the injection molding dies are generally expensive, the manufacturing cost of the shape maintenance member or the protector and the price are increased. Accordingly, the price of the wire harness to which the shape maintenance member or the protector is attached is also increased. Further, since an operation to attach the shape maintenance member or the protector to the electric wires forming the wire harness is required, the number of steps is increased, and accordingly, there is a possibility of increase in the manufacturing cost.

Further, in the arrangement where the shell-type shape maintenance member or protector is attached to the electric wires forming the wire harness, a gap may exist between the electric wires and the inner peripheral surface of the shape maintenance member or the protector. Accordingly, when vibration or impact is applied to the wire harness, the electric wires collide with the inner peripheral surface of the shape maintenance member or the protector, and a slapping sound or an impulsive sound occurs. The occurrence of such slapping sound or impulsive sound may degrade the quality of the vehicle or the like to which the wire harness is applied. Further, there is a possibility of damage by the collision of the electric wires with the inner peripheral surface of the shape maintenance member or the protector.

As a structure to prevent the collision of the electric wires with the inner peripheral surface of the shape maintenance member or the protector, e.g., it may be arranged such that a shock-absorbing material (e.g., a sponge-type member) is provided inside the shape maintenance member or the protector. However, in this arrangement, since a work operation to provide the shock-absorbing material inside the shape maintenance member or the protector is required, the number of steps is increased, and the manufacturing cost may be increased. Further, since the number of parts is increased, the cost of the parts may be increased.

As a structure using a protector which is not an injection molded product, e.g. a structure where a protector formed of a thermoplastic material is formed around a flat circuit body is proposed (see Patent Literature 1). That is, in the structure disclosed in Japanese Published Unexamined Patent Application No. 2003-197038 as the Patent Literature 1, the flat circuit body is held between two covering members formed of a thermoplastic resin material, then they are subjected to press-molding with metal dies while they are heated, such that the two covering members are in tight contact with the flat circuit body, and further, the parts of the two covering members in contact are weld- attached. According to this structure, since the two covering members become a protector, a protector which is an injection molded product is unnecessary. Accordingly, the cost of the parts can be reduced.

However, it is conceivable that the structure disclosed in the Patent Literature 1 has the following problems. Since the temperature of the covering member immediately after the press molding is high, the covering member is in a plastic-deformable state. Accordingly, when the press-molded wire harness is removed from the metal dies and conveyed, it may be distorted due to the self weight of the flat circuit body and/or the covering member. Further, upon removal from the molding dies or conveyance, when an operator touches the covering member, the touched part and/or its neighbor part may be deformed. In this manner, there is a probability of undesired deformation of the wire harness after the press molding.

Further, in some cases, upon removal from the metal dies after the press molding, since a compression force applied to the covering member disappears, the covering member may be deformed so as to restore the initial shape (a phenomenon corresponding to spring back in plastic processing for metal or the like occurs in some cases) . Further, when the covering member is removed from the metal dies in a state where the covering member is not hardened, since pressing forces applied to the contact surface between the covering members are eliminated, the weld strength between the covering members is lowered, and there is a possibility of peeling off of the extension parts.

Note that the Patent Literature 1 discloses an arrangement where the metal dies are cooled and then the wire harness is removed. However, in this arrangement, it is necessary to perform heating and cooling on the metal dies upon each press molding of the wire harness. Accordingly, the time required for manufacturing the wire harness is prolonged.

Further, the Patent Literature 1 discloses an arrangement where the metal dies have a concave member, and upon press molding of the covering member with the metal dies, the flat circuit body is placed in the concave member. According to this arrangement, since a compression force is not applied to the flat circuit body, damage to the flat circuit body can be prevented. However, since the press molding is performed in a state where the flat circuit body is held between the two covering members, it is difficult to accurately perform positioning of the flat circuit body, and it is difficult to accurately lead the flat circuit body to the concave member of the metal dies. Even when the positioning of the flat circuit body can be accurately performed before press molding, in some cases, the flat circuit body is moved thereafter and it is removed from the concave member of the metal dies upon press molding.

Further, when the conventional protector is directed to shape change such as bending after the molding or cooling, there is a possibility of breakage of the protector. Otherwise, since the rigidity is high, it cannot be shape-changed.

Generally, since the wire harness is provided along a predetermined route inside a vehicle or the like, it is preferable that the cross-sectional shape and size of the covering member and the axial shape of the covering member are set in correspondence with shape and size of the route in which it is provided. For example, it is preferable that the shape is set to a have approximately the same as the shape and size of the route in which it is provided or to have a shape convenient upon arrangement. Further, since it is generally provided in limited space, it is preferable that it has as small a cross-sectional area as possible.

However, since the electric wire forming the wire harness generally has an approximately circular cross-sectional shape, a gap occurs among the electric wires even when the electric wires are closely bundled. Further, in the arrangement using an injection molded product as the protector or the shape maintenance member, for the sake of convenience of an operation to accommodate the electric wires and for the purpose of avoiding application of an excessive force to the accommodated electric wires, the space inside the protector or the shape maintenance member has a cross-sectional area larger than the total cross-sectional area of the accommodated electric wires. Accordingly, the cross-sectional size of the wire harness is increased. On the other hand, in the arrangement described in the Patent Literature 1, since it is difficult to closely pack the electric wires (as the electric wires are flatly arrayed), it is difficult to reduce the cross-sectional area of the wire harness.

Note that a method for reducing the cross-sectional area of the wire harness by bundling the electric wires by wrapping a tape around the electric wires is known. However, in this method, it is difficult to eliminate the gap among the electric wires. Further, in this method, it takes labor and time in the operation to wrap the tape around the electric wires. Further, the appearance of the tape-wrapped structure is bad. Further, when the tape wrapping operation is manually performed, there is a probability of occurrence of variation in quality.

### Citation List

### Patent Literature

PTL1: JP 2003-197038

### Summary of Invention

The object the present invention is to attain is to provide a method of manufacturing a wire harness having a shape maintenance member to maintain an electric wire or a bundle of electric wires in a predetermined shape or a protector to protect the electric wire or the bundle of electric wires without use of a shape maintenance member or a protector which is an injection molded product, or to provide a method of manufacturing a wire harness capable of reducing a manufacturing cost of the shape maintenance member or the protector and/or the number of steps, or to provide a method of manufacturing a wire harness capable of, upon manufacturing of a wire harness having a shape maintenance member or protector formed of a thermoplastic material, preventing unexpected deformation of the thermoplastic material or separation of the thermoplastic materials, or to provide a method of manufacturing a wire harness capable of, upon manufacturing of a wire harness having a shape maintenance member or protector formed of a thermoplastic material, reducing required manufacturing time, or to provide a method of manufacturing a wire harness capable of, upon manufacturing of a wire harness having a shape maintenance member or protector formed of a thermoplastic material, accommodating an electric wire or a bundle of electric wires in a predetermined position, or to provide a method of manufacturing a wire harness capable of, upon manufacturing of a wire harness having a shape maintenance member or protector formed of a thermoplastic material, changing the shape after molding of the shape maintenance member or the protector, or to provide a wire harness provided with a covering member which covers an electric wire and which is not an injection molded product, or to provide a wire harness having a small cross-sectional area (no gap exists among electric wires or the gap is small), or to provide a method of manufacturing a wire harness provided with a covering member which covers an electric wire and which is not an injection molded product, or to provide a method of manufacturing a wire harness capable of eliminating or reducing a gap among electric wires.

### Solution to Problem

To solve the above-described problem, the present invention is a method for manufacturing a wire harness in which a periphery of a predetermined part of electric wires is covered with a thermoplastic material, comprising: placing the predetermined part of the electric wires and the thermoplastic material, in a state where the predetermined part of the electric wires is held or wrapped in the thermoplastic material, on an upper side of a lower holding tool; heating the thermoplastic material holding the predetermined part of the electric wires to a predetermined temperature, while pressurizing the thermoplastic material holding the predetermined part of the electric wires, in a state where it is placed on the upper side of the lower holding tool, by pressing a lower side of the lower holding tool with one of a pair of molds having heating means and pressing the thermoplastic material holding the predetermined part of the electric wires, placed on the lower holding tool, with the other one of the pair of molds, to cover the periphery of the predetermined part of the electric wires with the thermoplastic material and welding contact surfaces of the thermoplastic material; and thereafter, removing the predetermined part of the electric wires covered with the thermoplastic material, in the state where it is placed on the upper side of the lower holding tool, from the pair of molds.

Preferably, it is arranged such that, when the predetermined part of the electric wires covered with the thermoplastic material, in the state where the predetermined part of the electric wires is placed on the upper side of the lower holding tool, is removed from the pair of molds, the thermoplastic material, in the state where the predetermined part of the electric wires covered with the thermoplastic material is placed on the upper side of the lower holding tool, is cooled.

Preferably, it is arranged such that, a concave member capable of accommodating the predetermined part of the electric wires is formed in the other one of the pair of molds and at least upper one of the lower holding tool, and a pressure member to apply a compression force to the contact surfaces of the thermoplastic material is formed on the outer side of the concave member, and parts of the contact surfaces of the thermoplastic material to which the compression force is applied with the pressure member are welded.

The present invention is a method for manufacturing a wire harness in which a periphery of a predetermined part of electric wires is covered with a thermoplastic material, comprising: providing the predetermined part of the electric wires and the thermoplastic material, in a state where the predetermined part of the electric wires is held or wrapped in the thermoplastic material, between an upper side of a lower holding tool and a lower side of an upper holding tool; pressurizing the thermoplastic material holding the predetermined part of the electric wires in the state where it is held with the lower holding tool and the upper holding tool, by pressing the lower side of the lower holding tool with one of a pair of molds having heating means and pressing the upper side of the upper holding tool with the other one of the pair of molds and heating the thermoplastic material to a predetermined temperature, to cover a periphery of the predetermined part of the electric wires with the thermoplastic material and weld contact surfaces of the thermoplastic material; and thereafter, removing the predetermined part of the electric wires covered with the thermoplastic material, in the state where it is held with the lower holding tool and the upper holding tool, from the pair of molds.

Preferably, it is arranged such that, when the predetermined part of the electric wires covered with the thermoplastic material, in the state where it is held between the lower holding tool and the upper holding tool, is removed from the pair of molds, then the thermoplastic material, in the state where the predetermined part of the electric wires covered with the thermoplastic material is held between the lower holding tool and the upper holding tool, is cooled.

Preferably, it is arranged such that a concave member capable of accommodating the predetermined part of the electric wires is formed in at least one of the upper side of the lower holding tool and the lower side of the upper holding tool, and a pressure member to apply a compression force to the contact surfaces of the thermoplastic material is formed on the outer side of the concave member, and wherein parts of the contact surfaces of the thermoplastic material to which the compression force is applied with the pressure member are welded.

Preferably, it is arranged such that, in the thermoplastic material, a surface layer of a part fitted in the concave member is heated to the predetermined temperature, plastic-deformed and hardened, to have hardness improved in comparison with a central part of the part of the thermoplastic material fitted in the concave member.

Preferably, it is arranged such that, side walls to hold the thermoplastic material are formed on the both sides of the lower holding tool, and the electric wires and the thermoplastic material, placed on the upper side of the lower holding tool, by being held with the side walls on the both sides, are maintained in a state where they hold or wrap the predetermined part of the electric wires.

In this case, two separate thermoplastic materials are applied as the thermoplastic material, and an arrangement is applicable in which, as the two thermoplastic materials are held with the side walls on the both sides formed in the lower holding tool, the predetermined part of the electric wires is held between the two thermoplastic materials.

Further, an arrangement is applicable in which, as the thermoplastic material is held between the side walls on the both sides formed in the lower holding tool, the thermoplastic material is maintained in a state where it is bended, and the predetermined part of the electric wires is maintained in the state where it is held inside the bended thermoplastic material.

An arrangement is applicable in which, a pressure projection to pressurize the thermoplastic material is provided on at least one of the pair of molds, and upon pressurization of the thermoplastic material holding the predetermined part of the electric wires, one of the contact surfaces of the thermoplastic material holding the predetermined part of the electric wires is engaged with the other surface by engaging the pressure projection with the thermoplastic material.

An arrangement is applicable in which, prior to pressurization of the thermoplastic material holding the predetermined part of the electric wires, a connection strength improving member to improve connection strength between the electric wires and the thermoplastic material is previously fixed to the predetermined part of the electric wires.

An arrangement is applicable in which, prior to pressurization of the thermoplastic material holding the predetermined part of the electric wires, a shield material having an extension part is previously attached to the outer periphery of the predetermined part of the electric wires, the thermoplastic material is pressurized in a state where the extension part of the shield material is held between the thermoplastic material, and a tieback member electrically conductive to the extensionpart of the shield material is attached to the thermoplastic material.

An arrangement is applicable in which, when the predetermined part of the electric wires covered with the thermoplastic material is removed from the pair of molds, by further pressurizing and bending the predetermined part of the electric wires covered with the thermoplastic material while heating it, the predetermined part of the electric wires covered with the thermoplastic material is bended to a predetermined shape.

An arrangement is applicable in which, when the predetermined part of the electric wires covered with the thermoplastic material is removed from the pair of molds, before its temperature is lowered to a temperature at which a softened state of the thermoplastic material cannot be maintained, by further pressurizing and bending the predetermined part of the electric wires covered with the thermoplastic material, the predetermined part of the electric wires covered with the thermoplastic material is bended to a predetermined shape.

Further, the method for manufacturing the wire harness according to the present invention is a method for manufacturing a wire harness in which a predetermined part has a plurality of electric wires each including a core covered with a covering material and a covering member to cover the plurality of electric wires, comprising: wrapping the plurality of electric wires in a member having thermoplasticity; and, by pressurizing the plurality of electric wires and the thermoplastic member wrapping the plurality of electric wires with a mold having heating means while heating them to a predetermined temperature, deforming the covering material of the plurality of electric wires to closely attach the plurality of electric wires to each other, and plastic-deforming the thermoplastic member to mold it to have a predetermined cross-sectional shape.

An arrangement is applicable in which the covering material of the plurality of electric wires is softened by heat emitted from the heating means of the mold to closely attach them to each other.

Further, it may be arranged such that the thermoplastic member and the plurality of electric wires are accommodated in one holding tool in which a groove-shaped concave member is formed in a state where the thermoplastic member wraps the plurality of electric wires, and the thermoplastic member and the plurality of electric wires are pressurized while they are heated with the mold via the holding tool.

In this case, an arrangement is applicable in which, after the thermoplastic member and the plurality of electric wires are pressurized while they are heated with the mold via the holding tool, the thermoplastic member and the plurality of electric wires, in the state where they are accommodated in the one holding tool, are cooled.

Further, it may be arranged such that the thermoplastic member and the plurality of electric wires are accommodated in the one holding tool in which the groove-shaped concave member is formed, in the state where the thermoplastic member wraps the plurality of electric wires, and the thermoplastic member accommodated in the one holding tool is covered with another one holding tool, and the thermoplastic member and the plurality of electric wires are pressurized while they are heated with the mold via the one holding tool and the other one holding tool.

In this case, an arrangement is applicable in which, after the thermoplastic member and the plurality of electric wires are pressurized while they are heated with the mold via the holding tool, the thermoplastic member and the plurality of electric wires, in the state where they are accommodated in the one holding tool and covered with the other one holding tool, are cooled.

Further, the wire harness according to the present invention is a wire harness in which a predetermined part has a plurality of electric wires each including a core covered with a covering material and a covering member to cover the plurality of electric wires, wherein the covering materials of the plurality of electric wires are in surface contact without gap except unavoidable space, and an inner peripheral surface of the covering member is closely attached to outer peripheral surfaces of the plurality of electric wires except unavoidable space.

Preferably, it is arranged such that, in the covering member, a central part is softer in comparison with a surface layer.

The covering member is non-woven fabric or a foam formed of a thermoplastic material.

### Advantageous Effects of Invention

According to the present invention, it is possible to form a shape maintenance member to maintain a wire harness in a predetermined shape by pressurizing a thermoplastic material. The shape maintenance member also has a function as a protector to protect electric wires forming the wire harness. Accordingly, it is possible to provide the wire harness with a shape maintenance member or protector without use of shape maintenance member or protector which is an injection molded product.

The shape maintenance member formed of a thermoplastic material is formed by pressurizing and heating the thermoplastic material. As the thermoplastic material, since a cheap material in comparison with a shape maintenance member or protector which is an injection molded product is applicable, it is possible to reduce the manufacturing cost of the shape maintenance member and the costs of parts. Further, since molding dies for pressurizing the thermoplastic material have more simple structures and they are cheaper in comparison with molding dies for manufacturing injection molded products, it is possible to suppress increase in the equipment cost or reduce the equipment cost.

Further, the formation of the shape maintenance member is made merely by holding a predetermined spot of the electric wires forming the wire harness and pressurizing the electric wires in that state. Accordingly, the content of the operation is simple in comparison with the arrangement where the shape maintenance member or protector which is an injection molded product is attached. Accordingly, it is possible to reduce the manufacturing time of the wire harness and the manufacturing cost.

According to the present invention, by compressing a predetermined part of a thermoplastic material (other than a part in which electric wires are embedded), it is possible to firmly weld the thermoplastic materials in the predetermined part. Therefore, it is possible to form a shape maintenance member in which the thermoplastic materials are firmly integrated.

Further, according to the present invention, it is possible to complete pressurization of a thermoplastic material before the temperature of a part in contact with electric wires and its peripheral part becomes a high temperature. Accordingly, in the formed shape maintenance member, it is possible to maintain the property before the pressurization in the part in contact with the electric wire and its peripheral part. Therefore, it is possible to manufacture a wire harness having a structure where electric wires are elastically wrapped in an unhardened thermoplastic material. According to the wire harness having this structure, the unhardened thermoplastic material functions as a shock-absorbing material to protect the electric wires from vibration or impact. Further, since the electric wires are wrapped in the unhardened thermoplastic material, even vibration or impact is applied to the wire harness, a slapping sound or an impulsive sound does not occur between the electric wires and the shape maintenance member. In this manner, it is possible to attain the same advantages as those of the structure where the shock-absorbing material is filled inside the shape maintenance member or the protector which is an injection molded product. On the other hand, in comparison with the structure where the shock-absorbing material is filled inside the shape maintenance member or the protector which is an injection molded product, it is possible to reduce the number of parts and the number of steps.

According to the present invention, upon removal of the manufactured wire harness from the molding dies or while the removed wire harness is cooled, it is possible to prevent occurrence of unexpected deformation. That is, according to the present invention, it is possible to remove the manufactured wire harness in a state where it is placed on the first holding tool, from the molding dies. Further, it is possible to cool the wire harness removed from the molding dies in the state where it is placed on the first holding tool. Accordingly, it is not necessary to directly touch the wire harness when it is removed from the molding dies or when it is cooled. Further, when the wire harness is placed on the first holding tool, the shape molded with the molding dies is maintained. Accordingly, it is possible to prevent unexpected (or undesired) deformation of the wire harness.

Further, according to the present invention, it is possible to prevent peeling off between the thermoplastic materials and to improve the weld strength between the thermoplastic materials by holding the wire harness molded using the molding dies between the first holding tool and the second holding tool. Further, it is possible to improve the accuracy of the cross-sectional size of the wire harness.

That is, after the pressurization with the molding dies, by holding the wire harness between the first holding tool and the second holding tool until the temperature of the thermoplastic material is lowered to a temperature at which it is not plastic-deformable and holding it with a clamp or the like in that state, it is possible to apply a compression force to the thermoplastic material. Accordingly, it is possible to add pressing forces to the junction surface between the thermoplastic materials, and to prevent separation between the thermoplastic materials and improve the weld strength. Further, the thermoplastic material immediately after the molding with the molding dies has a high temperature and is plastic-deformable. In this state, when the compression force applied to the thermoplastic material is removed, the thermoplastic material is deformed so as to restore the initial shape. Accordingly, by holding it between the first holding tool and the second holding tool until the temperature of the thermoplastic material is lowered to a temperature not to cause deformation of the thermoplastic material, it is possible to prevent change of cross-sectional shape of the thermoplastic material of the wire harness and to improve the size accuracy.

According to the present invention, it is possible to maintain the state where the predetermined part of the electric wires is held with the thermoplastic material with the side walls formed in the lower holding tool. Accordingly, it is possible to improve the working efficiency.

According to the present invention, even after the pressurization of the thermoplastic material, it is possible to form the predetermined part of the wire harness in the predetermined shape (bend it in the predetermined shape). Accordingly, the formation of the wire harness and the shape change are facilitated. Further, it is not necessary to heat the wire harness again by performing the bending before the temperature of the thermoplastic material is lowered and it is not softened.

Further, according to the method for manufacturing the wire harness according to the present invention, in the process of providing the covering member around the electric wires, it is possible to closely attach the electric wires. Accordingly, it is possible to prevent increment in the number of steps. Then it is possible to manufacture a wire harness with a reduced cross-sectional size in a predetermined part by a simple method.

According to the method for manufacturing the wire harness according to the present invention, since the covering material for the electric wires is deformed, the electric wires are closely attached to each other without a gap (or almost no gap) except unavoidable space. More specifically, the covering materials for the electric wires are brought in, not line contact but area contact, with each other. Accordingly, it is possible to reduce the cross-sectional size of the predetermined part of the wire harness according to the embodiments of the present invention in comparison with the structure where the electric wires are in line contact with each other.

Further, according to the method for manufacturing the wire harness according to the embodiments of the present invention, it is possible to bring the electric wires elastically in contact with the covering member. Accordingly, no gap is formed between the electric wires and the covering member, and it is possible to reduce the cross-sectional size of the covering member.

According to the method for manufacturing the wire harness according to the embodiments of the present invention, it is possible to easily harden the surface layer of the covering member and maintain the central part in a soft state (state having the physical property of the thermoplastic member before the molding).

With the arrangement using one holding tool, the thermoplastic member and the electric wires are not heated during the operation to accommodate the thermoplastic member and the electric wires in the one holding tool. Accordingly, it is possible to heat the thermoplastic member only upon pressurization with the molding dies. In this manner, the thermoplastic member and the electric wires are not heated before the pressurization. Accordingly, there is no possibility of unexpected deformation of the molded body before pressurization molding. Further, it is possible to accurately mold the thermoplastic member into the shape of the covering member. Further, it is possible to prevent damage to the electric wires by heat.

In the arrangement using one holding tool, the molded covering member, in the state where it is accommodated in a groove-shaped concave member of the one holding tool, is removed from the molding dies. Accordingly, it is possible to prevent deformation of the covering member by its self weight. Further, when the molded covering member is removed from the molding dies, it is not necessary to directly touch the covering member and it is possible to prevent contact between a foreign material and the covering member. Accordingly, it is possible to prevent unexpected deformation and undesired deformation of the covering member.

In the arrangement using the other one holding tool, while the predetermined part of the wire harness is cooled, it is possible to continuously add a compression force to the covering member with the one holding tool and the other holding tool. Accordingly, it is possible to prevent the molded covering member from restoring the size and the shape before the molding. Further, it is possible to prevent attachment of the covering member to the molding dies.

Further, the operation to mold the covering member is simple in comparison with the method of embedding the electric wires in the protector or the shape maintenance member which is an injection molded product. Especially, in the arrangement using the protector or the shape maintenance member which is an injection molded product, the process of manufacturing the protector or the shape maintenance member and the process of attaching the manufactured protector or shape maintenance member to the wire harness are separate processes. On the other hand, according to the method for manufacturing the wire harness according to the present invention, it is possible to cover the electric wires at the same time of molding of the covering member. Accordingly, it is possible to reduce the number of steps in the method for manufacturing the wire harness.

Further, in comparison with the arrangement where the tape is wrapped around so as to maintain the axial shape of the electric wires in a predetermined shape, the content of the operation is greatly simplified, therefore it is possible to greatly omit the labor and time required in the manufacturing. Further, in comparison with the arrangement where the tape is manually wrapped around, it is possible to stability the quality. The appearance of the wire harness, manufactured by the method for manufacturing the wire harness according to the present invention, is good in comparison with the wire harness in which the tape is wrapped around the electric wires.

According to the wire harness according to the present invention, the electric wires are closely gathered and closely attached to each other, and no gap is formed (or the gap is small) among the electric wires except unavoidable space. Further, the wire harness has a structure where the electric wires and the covering member are in close contact with each other. It is possible to reduce the cross-sectional size of the predetermined part of the wire harness according to the present invention.

According to the wire harness according to the present invention, since the central part of the covering member is soft in comparison with the surface layer, the electric wires in the predetermined part, wrapped in the covering member, is elastically in contact. Accordingly, it is possible to prevent occurrence of an impulsive sound or the like between the electric wires and the covering member. Further, in this structure, the covering member also functions as a protector or shock-absorbing material to protect the electric wires from impact or vibration.

On the other hand, since the surface layer of the covering member is harder in comparison with the central part, the hard surface layer has a function as a shape maintenance member to maintain the axial shape of the electric wires in the predetermined shape and/or a function as a protector to protect the electric wires.

### Brief Description of Drawings

Fig. 1 is an external perspective diagram schematically showing a structure of a predetermined part of a first wire harness (= wire harness manufactured by a method for manufacturing a wire harness according to a first embodiment of the present invention or the method for manufacturing the wire harness according to a second embodiment of the present invention), showing (a) a structure where a main body is formed to have an approximately hexagonal cross-sectional shape; and (b) a structure where the main body is formed to have an approximately circular cross-sectional shape;
Fig. 2 is an external perspective diagram schematically showing structures of tools used in the method for manufacturing the wire harness according to the first embodiment, schematically showing structures of a first lower holding tool and a first lower mold;
Fig. 3 is an external perspective diagram schematically showing a structure of a tool used in the method for manufacturing the wire harness according to the first embodiment, schematically showing a structure of a first upper mold;
Fig. 4 is a cross-sectional diagram schematically showing a predetermined process of the method for manufacturing the wire harness according to the first embodiment, schematically showing a state where a first molded body, a predetermined part of the electric wires and a second molded body are accommodated in the first lower holding tool;
Fig. 5 is a cross-sectional diagram schematically showing, in a process of manufacturing the wire harness according to the first embodiment, a state where the first lower holding tool, in which the first molded body, the predetermined part of the electric wires and the second molded body are accommodated, is placed on the first lower mold;
Fig. 6 is a cross-sectional diagram schematically showing, in the process of manufacturing the wire harness according to the first embodiment, a state where the first molded body and the second molded body are pressurized with the first upper mold and the first lower mold;
Fig. 7 is a cross-sectional diagram schematically showing, in the process of manufacturing the wire harness according to the first embodiment, a state where the predetermined part of a manufactured first wire harness, in a state where it is placed on the first lower holding tool, is removed from the first upper mold and a second lower mold;
Fig. 8 is an external perspective diagram schematically showing structures of tools used in the method for manufacturing the wire harness according to a second embodiment of the present invention, schematically showing structures of an upper holding tool and a second upper mold;
Fig. 9 is a cross-sectional diagram schematically showing a predetermined process of the method for manufacturing the wire harness according to the second embodiment, schematically showing a state where the first molded body, the predetermined part of the electric wires and the second molded body are accommodated between the first lower holding tool and the first upper holding tool;
Fig. 10 is a cross-sectional diagram schematically showing, in the process of manufacturing the wire harness according to the second embodiment, a state where the first lower holding tool and the first upper holding tool, in which the first molded body, the predetermined part of the electric wires and the second molded body are accommodated, are placed on the first lower mold;
Fig. 11 is a cross-sectional diagram schematically showing, in the process of manufacturing the wire harness according to the second embodiment, a state where the first molded body and the second molded body are pressurized with the second upper mold and the first lower mold;
Fig. 12 is a cross-sectional diagram schematically showing, in the process of manufacturing the wire harness according to the second embodiment, a state where the predetermined part of the manufactured first wire harness, in the state where it is held between the first lower holding tool and the first upper holding tool, is removed from the second upper mold and the first lower mold;
Fig. 13 is an external perspective diagram schematically showing structures of a second lower holding tool and a second lower mold as tools used in the method for manufacturing the wire harness according to a third embodiment of the present invention;
Fig. 14 is an external perspective diagram schematically showing structures of a second upper holding tool and a third upper mold as tools used in the method for manufacturing the wire harness according to the third embodiment;
Fig. 15 is a cross-sectional diagram schematically showing, in the process of manufacturing the wire harness according to the third embodiment, the second lower holding tool, in which the first molded body, the predetermined part of the electric wires and the second molded body are accommodated, is placed on the second lower mold;
Fig. 16 is a cross-sectional diagram schematically showing, in the process of manufacturing the wire harness according to the third embodiment, a state where the first molded body and the second molded body are pressurized with the third upper mold and the second lower mold;
Fig. 17 is a cross-sectional diagram schematically showing, in the process of manufacturing the wire harness according to the third embodiment, a state where the predetermined part of the manufactured second wire harness in the present invention, in a state where it is held with the second lower holding tool and the second upper holding tool, is removed from the third upper mold and the second lower mold;
Fig. 18 is an external perspective diagram schematically showing a structure of the predetermined part of the second wire harness (= wire harness manufactured by the method for manufacturing the wire harness according to the third embodiment of the present invention);
Fig. 19 is a cross-sectional diagram schematically showing the structure of the predetermined part of a third wire harness;
Fig. 20 is an external perspective diagram schematically showing a structure of the predetermined part of a fourth wire harness (= wire harness manufactured by the method for manufacturing the wire harness according to a fifth embodiment of the present invention or the method for manufacturing the wire harness according to a sixth embodiment of the present invention), showing (a) a structure where the main body is formed to have an approximately hexagonal cross-sectional shape; and (b) a structure where the main body is formed to have an approximately circular cross-sectional shape;
Fig. 21 is an external perspective diagram schematically showing structures of a third lower holding tool and a third lower mold as tools used in the method for manufacturing the wire harness according to the fifth embodiment of the present invention;
Fig. 22 is an external perspective diagram schematically showing a structure of a fourth upper mold as a tool used in the method for manufacturing the wire harness according to the fifth embodiment;

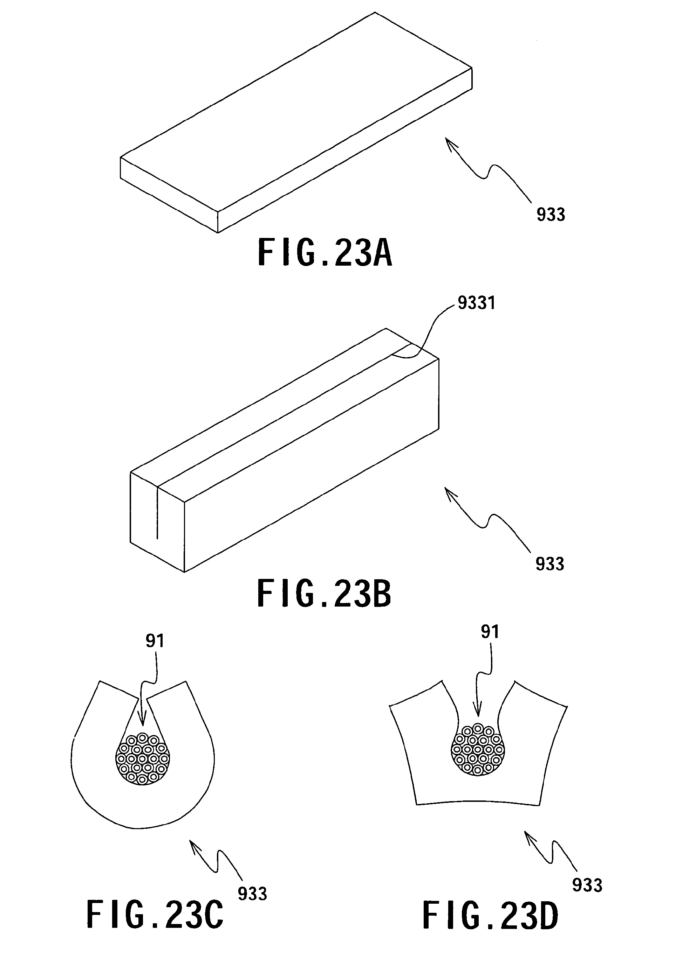

Fig. 23 is external perspective diagram and cross-sectional diagram schematically showing a structure of a third molded body, applied in the method for manufacturing the wire harness according to the fifth embodiment, and a structure to hold the electric wires with the third molded body, showing (a) an external perspective diagram showing the third molded body having an approximately flat-plate shape; (b) an external perspective diagram showing a the third molded body, having a bar-type shape, with a predetermined cross-sectional shape and size, and having a slit; (c) a cross-sectional diagram showing the structure of the third molded body shown in (a) to hold the electric wires; and (d) a cross-sectional diagram showing the structure of the third molded body shown in (b) to hold the electric wires;
Fig. 24 is a cross-sectional diagram schematically showing, in the process of manufacturing the wire harness according to the fifth embodiment, a state where the third molded body and the predetermined part of the electric wires are accommodated in the third lower holding tool ;
Fig. 25 is a cross-sectional diagram schematically showing, in the process of manufacturing the wire harness according to the fifth embodiment, a state where the third lower holding tool, in which the third molded body and the predetermined part of the electric wires are accommodated, is placed on the third lower mold;
Fig. 26 is a cross-sectional diagram schematically showing, in the process of manufacturing the wire harness according to the fifth embodiment, a state where the third molded body is pressurized with the fourth upper mold and the third lower mold;
Fig. 27 is a cross-sectional diagram schematically showing, in the process of manufacturing the wire harness according to the fifth embodiment, a state where the predetermined part of the manufactured fourthwire harness of the present invention, in the state where it is placed on the third lower holding tool, is removed from the fourth upper mold and the third lower mold;
Fig. 28 is an external perspective diagram schematically showing structures of a third upper holding tool and a fifth upper mold as tools used in the method for manufacturing the wire harness according to the sixth embodiment of the present invention;
Fig. 29 is a cross-sectional diagram schematically showing, in the process of manufacturing the wire harness according to the sixth embodiment, a state where the third molded body and the predetermined part of the electric wires are accommodated between the third lower holding tool and the third upper holding tool;
Fig. 30 is a cross-sectional diagram schematically showing, in the process of manufacturing the wire harness according to the sixth embodiment, a state where the third lower holding tool and the third upper holding tool, in which the third molded body and the predetermined part of the electric wires are accommodated, are placed on the third lower mold;
Fig. 31 is a cross-sectional diagram schematically showing, in the process of manufacturing the wire harness according to the sixth embodiment, a state where the third molded body is pressurized with the fifth upper mold and the third lower mold;
Fig. 32 is a cross-sectional diagram schematically showing, in the process of manufacturing the wire harness according to the sixth embodiment, a state where the predetermined part of the manufactured fourth wire harness, in the state where it is held between the third lower holding tool and the third upper holding tool, is removed from the fifth upper mold and the third lower mold;
Fig. 33 is a cross-sectional diagram schematically showing a cross-sectional structure of the predetermined part of a fifth wire harness;
Fig. 34 is a diagram schematically showing parts forming the predetermined part of the fifth wire harness, showing (a) an exploded perspective diagram schematically showing structures of the predetermined part of the electric wires, a connection strength improving member and a fixing member; and (b) an external perspective diagram schematically showing a state where the connection strength improving member is fixed to the electric wires with the fixing member;
Fig. 35 is a cross-sectional diagram schematically showing a process of bending the predetermined part of the wire harness, schematically showing a state before the bending;
Fig. 36 is a cross-sectional diagram schematically showing a state where the bending is performed on the predetermined part of the wire harness with a bending upper mold and a bending lower mold;
Fig. 37 is a cross-sectional diagram schematically showing the process of bending the predetermined part of the wire harness as another embodiment and a cross-sectional diagram schematically showing a state where the wire harness is held between a fourth upper holding tool and a fourth lower holding tool, before the bending;
Fig. 38 is a cross-sectional diagram schematically showing a state where the predetermined part of the wire harness is held between the fourth upper holding tool and the fourth lower holding tool, and the bending is performed on the predetermined part of the wire harness with the bending upper mold and the bending lower mold;
Fig. 39 (a) is an external perspective diagram showing the predetermined part of the wire harness (= part where the shape maintenance member is provided) manufactured by the method for manufacturing the wire harness according to an eighth embodiment of the present invention; and (b) is a cross-sectional diagram along a line A-A in (a) schematically showing the cross-sectional structure of the predetermined part of the wire harness according to this embodiment;
Fig. 40 is an external perspective diagram schematically showing structures of principal elements of the lower holding tool and the lower mold;
Fig. 41 is an external perspective diagram schematically showing structures of principal elements of the upper holding tool and the upper lower mold;
Fig. 42 is a cross-sectional diagram schematically showing a predetermined process included in the method for manufacturing the wire harness according to this embodiment, showing a process of wrapping the electric wires in a molded body;
Fig. 43 is a diagram showing, in the process of manufacturing the wire harness according to this embodiment, a process of accommodating the electric wires and the molded body in the lower holding tool, showing (a) a diagram showing a structure where electric wires are wrapped in one molded body; and (b) a diagram showing a structure where electric wires are wrapped in two molded bodies;
Fig. 44 is a diagram showing, in the process of manufacturing the wire harness according to this embodiment, a process of engaging the lower holding tool with an engagement part of the lower mold and providing the upper holding tool;
Fig. 45 is a diagram showing, in the process of manufacturing the wire harness according to this embodiment, a process of heating and pressurizing the molded body with the upper mold and the lower mold; and
Fig. 46 is a diagram showing, in the process of manufacturing the wire harness according to this embodiment, a process of removing the electric wires and the covering member molded to have a predetermined cross-sectional shape from the upper mold and the lower mold.

### Description of Embodiments

Hereinbelow, various embodiments of the present invention will be described in detail with reference to the drawings.

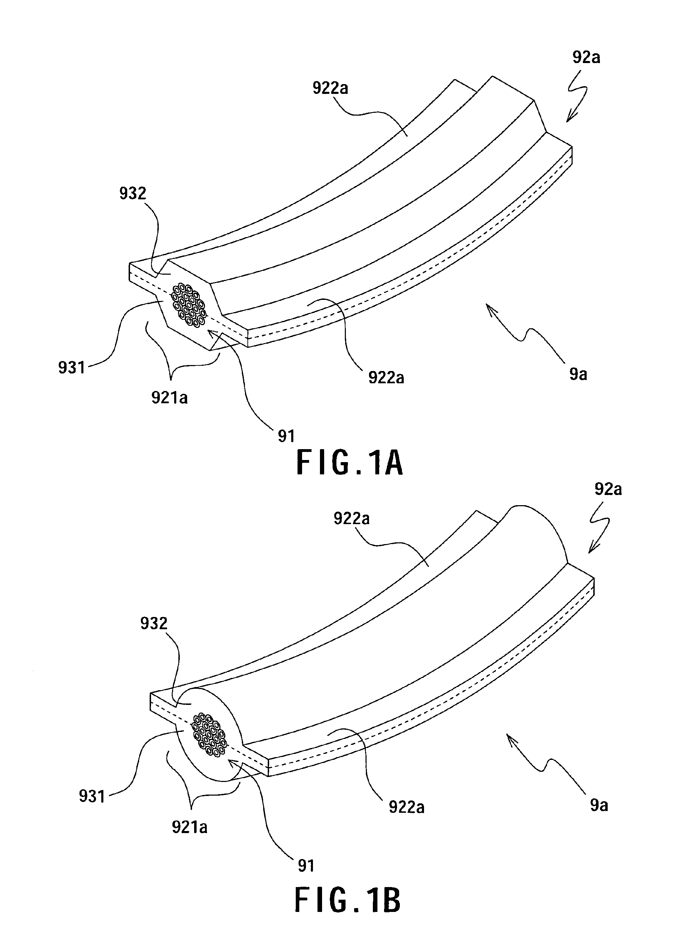

Fig. 1 is an external perspective diagram showing a predetermined part (= a part where a covering member 92a is provided) of a wire harness 9a manufactured by a method for manufacturing the wire harness according to a first embodiment and the method for manufacturing the wire harness according to a second embodiment of the present invention. Respectively, Fig. 1(a) shows a structure in which a main body 921a of the covering member 92a is formed to have an approximately hexagonal cross-sectional shape, and Fig. 1(b), a structure in which the main body 921a of the covering member 92a is formed to have an approximately circular cross-sectional shape. Note that for the sake of convenience of explanation, the wire harness 9a manufactured by the method for manufacturing the wire harness according to the first embodiment of the present invention and the method for manufacturing the wire harness according to the second embodiment of the present invention will be referred to as a "first wire harness" 9a.

The first wire harness 9a has a predetermined number and a predetermined type of electric wires. These electric wires are bundled in a predetermined form, and the bundled electric wires form a trunk line and a branch line of the first wire harness 9a. A predetermined connector or the like is attached to the end of each electric wire (= trunk line or branch line). Note that the entire size and shape of the first wire harness 9a, the structures of the trunk line and the branch line, the number, type and length of the electric wires included in the first wire harness 9a, the structure of the connector or the like attached to each electric wire and the like, are not particularly limited. They are arbitrarily set in correspondence with purpose or the like of the first wire harness 9a.

As shown in Figs. 1(a) and 1(b), the first wire harness 9a is provided with the covering member 92a to cover the predetermined part of the electric wires 91. The covering member 92a has a function of maintaining the electric wires 91 in a predetermined shape, and also has a function as a protector to protect the electric wires 91.

That is, the covering member 92a, provided in a part to be protected of the first wire harness 9a, becomes a protector. Further, the covering member 92a, provided in a part to maintain the first wire harness 9a in a predetermined shape, maintains the predetermined part in a predetermined shape. Further, the covering member, provided in a part to be protected and to be maintained in a predetermined shape of the first wire harness 92a, functions as a protector, and maintains the predetermined part in a predetermined shape.

The particular position and range (i.e., the particular position and range of the "predetermined part") of a part in which the covering member 92a is provided, and the size and the shape of the covering member 92a are not particularly limited. They are arbitrarily set in correspondence with the position and range to protect, the position and range to form (maintain) in a predetermined axial shape, and the like, in the first wire harness 9a. For example, they are arbitrarily set in correspondence with the functions and performance required of the first wire harness 9a, the shape of the first wire harness 9a, the size and the shape of space in which it is provided (e.g., space inside a vehicle), and environment upon use (e.g., occurrence/nonoccurrence or degree of vibration or impact upon use).

Note that in the present invention, the "electric wire" includes a single electric wire and an electric wire bunch formed of plural electric wires.

The covering member 92a has a main body 921a covering the periphery of the predetermined part of the electric wires 91 and a joint member 922a protruded outward from the main body 921a. The covering member 92a includes two molded bodies 931 and 932. For the sake of convenience of explanation, one of the two molded bodies 931 and 932 will be referred to as a "first molded body" 931, and the other one, a "second molded body" 932. The main body 921a of the covering member 92a is a part where the first molded body 931 and the second molded body 932 cover the predetermined part of the electric wires 91 so as to wrap the predetermined part. The joint member 922a is a part where the first molded body 931 and the second molded body 932 are joined (= welded).

The main body 921a is a part to cover the predetermined part of the electric wires 91 (= the part in which the predetermined part of the electric wires 91 is embedded), which has predetermined cross-sectional shape and size, and which is formed in an approximately bar shape having a predetermined-shaped axial line. The cross-sectional shape and size of the main body 921a are arbitrarily set in correspondence with number and type of the electric wires 91 included in the predetermined part of the first wire harness 9a, size, shape and the like of space of a region in which the predetermined part of the first wire harness 9a is provided (e.g., inner space of a vehicle). For example, as the main body 921a, various shapes such as a structure having an approximately hexagonal cross-sectional shape as shown in Fig. 1(a) and a structure having an approximately circular cross-sectional shape as shown in Fig. 1(b), are applicable. The axial shape of the main body 921a is also arbitrarily set in correspondence with size, shape and the like of the space of the region in which the predetermined part of the first wire harness 9a is provided. In this manner, the cross-sectional shape and size and the axial shape of the main body 921a of the covering member 92a are not particularly limited.

The joint member 922a is a flat-plate shaped or fold-shaped part protruded outward from the outer periphery of the main body 921a and extends along the axial direction of the main body 921a. The first molded body 931 and the second molded body 932 are joined (= welded) and integrated in the joint member 922a. More particularly, in the middle of a thickness direction of the joint member 922a (the direction of overlay of the first molded body 931 and the second molded body 932), the first molded body 931 and the second molded body 932 are joined. The thickness of the joint member 922a is smaller than the thickness of the main body 921a. Especially, the respective thicknesses of the firstmolded body 931 and the second molded body 932 in the joint member 922a (from the surfaces to the joint surface) are smaller than a distance from the outer peripheral surface of the main body 921a to the electric wires 91 (especially, the distance to the closest electric wire 91 from the outer peripheral surface).

As the first molded body 931 and the second molded body 932, a material which has thermoplasticity and which is elastic-deformable (especially compression-deformable) is applied. More particularly, non-woven fabric or foam formed of a thermoplastic resin material or the like is applicable.

As the non-woven fabric, fabric having an intertwined structure of basic fiber and binder fiber is applicable. The base fiber is formed of a thermoplastic resin material having a predetermined fusing point. The binder fiber has a structure in which a binder material layer is formed on the outer periphery of core fiber. The core fiber is formed of the same thermoplastic resin material as that of the base fiber. The binder material layer is formed of a thermoplastic resin material having a fusing point lower than that of the base fiber and the core fiber. Note that for the sake of convenience of explanation, the non-woven fabric having this structure will be referred to as "first non-woven fabric".

When the first non-woven fabric is heated to a temperature equal to or higher than a certain temperature, it becomes plastic-deformable by thermoplasticity of the base fiber and the binder fiber. Especially, when it is heated to a temperature in a temperature band equal to or higher than the fusing point of the binder material of the binder fiber and lower than the fusing point of the base fiber and the core fiber of the binder fiber, the base fiber and the core fiber of the binder fiber become plastic-deformable by thermoplasticity while their solid state (fiber state) is maintained. Then the binder material of the binder fiber is melted, and permeates among the base fiber and the core fiber of the binder fiber. Accordingly, the first non-woven fabric is heated to a temperature band equal to or higher than the fusing point of the binder material of the binder fiber and lower than the fusing point of the base fiber and the core fiber of the binder fiber, and molded into a predetermined shape in this temperature band. Thereafter, when it is cooled down to a temperature at which the base fiber and the binder fiber are not plastic-deformed by thermoplasticity, the molded predetermined shape is maintained. Further, after the cooling, since themoltenbindermaterial is solidified to connect the base fiber and the core fiber of the binder fiber, it is harder in comparison with its state before the heating.

Note that for the sake of convenience of explanation, the temperature band in which the base fiber and the binder fiber can be easily plastic-deformed by thermoplasticity will be referred to as a "first temperature band" of the first non-woven fabric, and in the "first temperature band", a temperature band equal to or higher than the fusing point of the binder material of the binder fiber and lower than the fusing point of the base fiber and the core fiber of the binder fiber will be described to as a "second temperature band" of the first non-woven fabric.

As the base fiber of the first non-woven fabric, fiber formed of PET (polyethylene terephthalate) is applicable. As the binder fiber of the first non-woven fabric, fiber having core fiber formed of PET and a binder material layer formed of PET-PEI (polyethylene isophthalate) copolymer resin, in which the binder material layer is formed on the outer periphery of the core fiber, is applicable. The fusing point of the base fiber and the core fiber (i.e., PET) of the non-woven fabric having this structure is about 250 °C. The fusing point of the binder material is 110 to 150 °C. Accordingly, the second temperature band of this first non-woven fabric is 110 to 250 °C.

Further, non-woven fabric which is formed of a thermoplastic resin material and which does not have binder fiber is applicable. For the sake of convenience of explanation, such non-woven fabric will be referred to as "second non-woven fabric" and distinguished. Further, a foam formed of a thermoplastic material is also applicable. For example, non-woven fabric or a foam formed of PET is applicable. The second non-woven fabric and the foam, when heated to a temperature lower than the fusing point of the thermoplastic resin material as their material and around the fusing point, can be easily plastic-deformed by thermoplasticity.

The surface layer of the main body 921a of the covering member 92a (= the outer surface and its peripheral part) is harder in comparison with a central part (= a part in contact with the predetermined part of the electric wires 91 and its peripheral part). More particularly, the hardness of the surface layer of the covering member 92a is higher than that of the first molded body 931 and the second molded body 932 before the molding to the covering member 92a. Then the hard surface layer can maintain the predetermined part of the electric wires 91 in a predetermined shape, and can protect the predetermined part of the electric wires 91.

On the other hand, the central part of the main body 921a of the covering member 92a is softer in comparison with the surface layer. More particularly, the central part of the covering member 92a has the physical property (especially, elastic-deformability or the like) of the first molded body 931 and the second molded body 932 before the molding to the covering member 92a. Then the central part of the main body 921a has a function of protecting the predetermined part of the electric wires 91 from impact or vibration. Further, the central part of the main body 921a has a function as a sound proof material. That is, since the first molded body 931 and the second molded body 932, in a state where they have elasticity, are in contact with and wrap the predetermined part of the electric wires 91, even when vibration or an external force is applied to the first wire harness 9a, it is possible to prevent or suppress transmissionof the vibrationor external force to the electric wires 91. Further, since the electric wires 91 are elastically in contact with the first molded body 931 and the second molded body 932, the occurrence of an impulsive sound or the like therebetween is prevented.

Next, tools used in the method for manufacturing the wire harness according to the first embodiment of the present invention will be described.

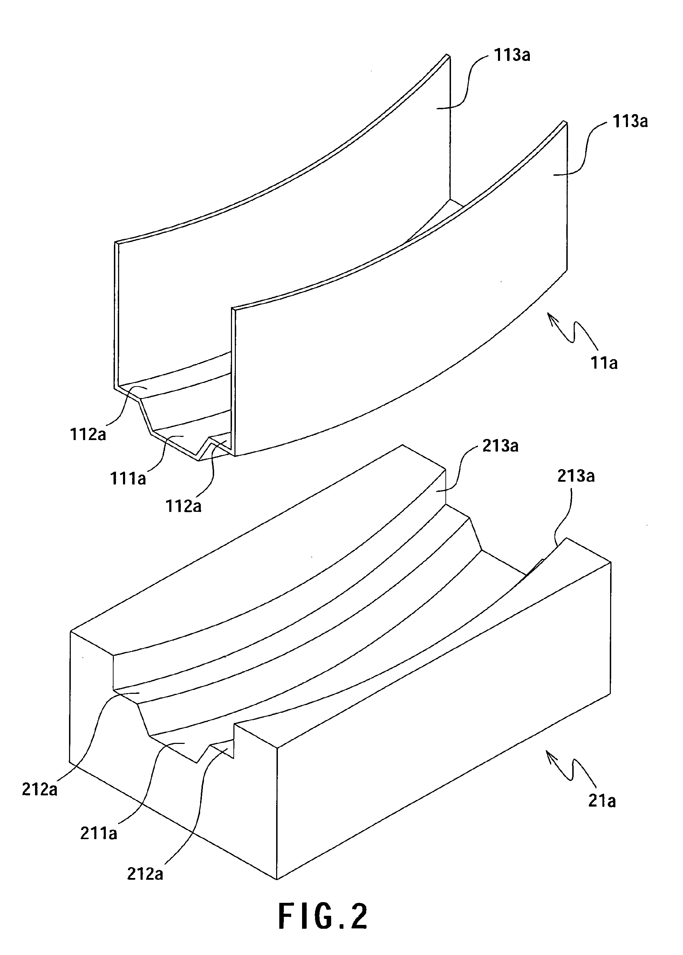

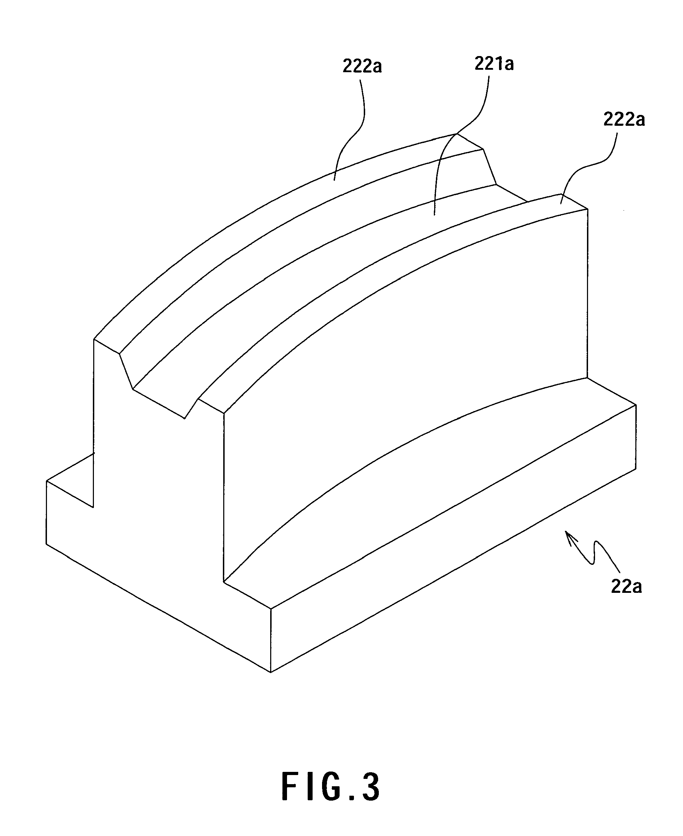

In the method for manufacturing the wire harness according to the first embodiment of the present invention, a first lower holding tool 11a and a pair of molds including a first upper mold 22a and a first lower mold 21a (e.g. metal dies) are used. Fig. 2 is an external perspective diagram schematically showing structures of the first lower holding tool 11a and the first lower mold 21a, and Fig. 3 is an external perspective diagram schematically showing a structure of the first upper mold 22a. Note that in the first lower holding tool 11a and the first lower mold 21a, the upper side in Fig. 2 is the side facing the first upper mold 22a. In the first upper mold 22a, the upper side in Fig. 3 is the side facing the first lower mold 21a. Hereinbelow, for the sake of convenience of explanation, regarding the first lower holding tool 11a and the first lower mold 21a, the side facing the first upper mold 22a will be referred to as an "upper side", and regarding the first upper mold 22a, the side facing the first lower mold 21 will be referred to as a "lower side". In Fig. 2, the upper side in the figure is the upper side of the first lower holding tool 11a and the first lower mold 21a, and in Fig. 3, the upper side in the figure is the lower side of the first upper mold 22a.

The first lower holding tool 11a is a tool having a function of pressurizing and molding the first molded body 931 or the second molded body 932 and a function of maintaining a predetermined shape of the manufactured first wire harness 9a (especially, molded covering member 92a) (in other words, to prevent unexpected or undesired deformation) and the like in the process of manufacturing the wire harness 9a.

The first lower holding tool 11a has a first pressure member 111a, a second pressure member 112a and side walls 113a.

The first pressure member 111a of the first lower holding tool 11a is a part to mold the main body 921a of the covering member 92a. The first pressure member 111a is a groove-shaped concave member formed in the upper surface of the first lower holding tool 11a, which is capable of accommodating the predetermined part of the electric wires 91 and which has shape and size corresponding to the shape and the size of the main body 921a of the covering member 92a. That is, the axial shape of the first pressure member 111a is approximately the same as the axial shape of the molded covering member 92a, and the cross-sectional shape and size of the first pressure member 111a (here, the cross-sectional shape and size cut in a direction approximately orthogonal to the axial line) are approximately the same as one of shapes obtained by dividing the main body 921a of the covering member 92a by two.

For example, as shown in Fig. 1(a), when the axial line of the main body 921a of the covering member 92a is bended in an approximately arc shape and its cross-sectional shape is formed in an approximately hexagonal shape, the axial shape of the first pressure member 111a is bended in approximately arc shape, and the cross-sectional shape of the first pressure member 111a is a trapezoidal shape obtained by dividing a hexagon by two. That is, it is a structure where an approximately flat-surface bottom surface and a slope rising from the both sides of the bottom surface toward the upper side at a predetermined angle to the bottom surface are formed. Further, as shown in Fig. 1(b), when the main body 921a of the covering member 92a is formed to have an approximately circular cross-sectional shape, the first pressure member 111a has a groove-shaped structure with an approximately semicircular cross-sectional shape.

The second pressure member 112a of the first lower holding tool 11a is a part to pressurize, along with the first upper mold 22a, the first molded body 931 and the second molded body 932, so as to mold the joint member 922a of the covering member 92a (= to join the first molded body 931 and the second molded body 932). The second pressure member 112a is an approximately flat-surface type part facing upward which is formed along the first pressure member 111a on the both outer sides of the first pressure member 111a.

The side walls 113a are parts having a function of holding the first molded body 913 and the first molded body 932 before pressurization of and in the process of pressurization and molding of the first molded body 931 and the second molded body 932. The side walls 113a are flat-plate shaped or fold-shaped parts protruded upward along the outer side of the second pressure member 112a. Accordingly, the two side walls 113a are opposed, with the first pressure member 111a and the second pressure member 112a therebetween, a predetermined distance away from each other. The height of the side walls 113a is set such that, in a state where the electric wires 91, the first molded body 931 and the second molded body 932 are accommodated between the both side walls 113a, the first molded body 931 and the second molded body 932 are not protruded from the upper side of the both side walls 113a.

In this manner, the first lower holding tool 11a as a whole has a bar-shaped structure having an approximately "U" shaped cross-sectional shape.

The first lower holding tool 11a is formed of a material having a high thermal conductivity, and has a structure in which the thermal storage amount is small (i.e., it easily follows the ambient temperature change). Especially, it has a structure to easily transmit heat in the vertical direction.

More particularly, for example, it is formed of a thin metal plate or the like and manufactured by sheet metal working or the like. When it is formed of a thin metal plate or the like, it easily transmits heat in the vertical direction (the thickness direction of the metal plate), and since the mass of the first lower holding tool 11a can be reduced, the thermal storage amount can be reduced. Further, the first pressure member 111a, the second pressure member 112a and the side walls 113a are integrally manufactured from one metal plate by sheet metal working or the like. In the arrangement where the first pressure member 111a, the second pressure member 112a and the side walls 113a are integrally manufactured from one metal plate or the like, it is not necessary to build parts as separate bodies. Accordingly, in comparison with the arrangement where parts as separate bodies are built, it is possible to prevent rise of the cost of the parts and the manufacturing cost of the first lower holding tool 11a. Further, it is possible to reduce the labor of working of the first lower holding tool 11a.

The shape of the lower side of the first lower holding tool 11a is not particularly limited. When the first lower holding tool 11a is manufactured by sheet metal working or the like, a convex member corresponding to the first pressure member 111a formed on the upper side is formed on the lower side of the first lower holding tool 11a, and an approximate flat surface part corresponding to the second pressure member 112a is formed along the convex member on the both outer sides of the convex member.

The first lower mold 21a is a member to heat and pressurize, along with the first upper mold 22a, the first molded body 931 and the second molded body 932 via the first lower holding tool 11a, to mold the covering member 92. That is, it performs pressurization and molding to plastic-deform the first molded body 931 and the second molded body 932 into predetermined shape and size, and heats and welds the first molded body 931 and the second molded body 932.

A first pressure member 211a, a second pressure member 212a and a support members 213a are provided on the upper side of the first lower mold 21a. It has a structure where the first lower holding tool 11a can be placed.

In a state where the first lower holding tool 11a is placed on the upper side of the first lower mold 21a, the first pressure member 211a of the first lower mold 21a accommodates the lower side of the first pressure member 111a of the first lower holding tool 11a. Then, when the first lower holding tool 11a is placed on the first lower mold 21a, it comes into contact with the lower surface of the first pressure member 111a of the first lower holding tool 11a (= the surface of the convex member corresponding to the first pressure member 111a). Accordingly, the first pressure member 211a of the first lower mold 21a has size and shape approximately the same as the shape and the size of the lower side of the first pressure member 111a of the first lower holding tool 11a. For example, as shown in Fig. 2, when the lower side of the first pressure member 111a of the first lower holding tool 11a is a convexity which has an approximately trapezoidal cross-sectional shape and which extends in a predetermined direction, the first pressure member 211a is formed in a groove shape having an approximately trapezoidal cross-sectional shape. Further, when the lower side of the first pressure member 111a of the first lower holding tool 11a is a convexity which has an approximately semicircular cross-sectional shape and which extends in a predetermined direction, the first pressure member 211a of the first lower mold 21a is formed in a groove shape having an approximately semicircular cross-sectional shape.

The second pressure member 212a of the first lower mold 21a is a part in contact with the lower surface of the second pressure member 112a of the first lower holding tool 11a in a state where the first lower holding tool 11a is placed on the upper side of the first lower mold 21a. The second pressure member 212a of the first lower mold 21a is formed along the first pressure member 211a on the both outer sides of the first pressure member 211a. Then the second pressure member 212a of the first lower mold 21a is formed in a shape following the shape of the lower surface of the second pressure member 112a of the first lower holding tool 11a. For example, as shown in Fig. 2, when the lower surface of the second pressure member 112a of the first lower holding tool 11a is an approximately flat surface, the second pressure member 212a of the first lower mold 21a is also formed to be an approximately flat surface.

In this manner, the upper side of the first lower mold 21a has a part formed in size and shape following the size and the shape of the lower side of the first lower holding tool 11a, and the first lower holding tool 11a can be placed on this part. Then, when the first lower holding tool 11a is placed, almost the entire lower surface of the first lower holding tool 11a (= the lower surfaces of the respective first pressure member 111a and the second pressure member 112a) comes into contact with the first lower mold 21a.

The support members 213a are parts having a function of supporting the first lower holding tool 11a, placed on the upper side of the first lower mold 21a, from moving, easily falling, and easily being removed from the upper side of the first lower mold 21a. More particularly, as shown in Fig. 2, the support members 213a are mutually-opposed plane parts formed on the both outer sides of the second pressure member 212a.

The interval between the support members 213a is set to a size in which the entirety or a part of the lower side of the first lower holding tool 11a can be removably fitted. For example, it is approximately the same as or slightly greater than the interval between the outer surfaces of the side walls 113a of the first lower holding tool 11a.

The height of the support members 213a (= the size in the vertical direction) is not particularly limited. As described above, any size may be set as long as it is possible to prevent the first lower holding tool 11a, placed on the upper side of the first lower mold 21a, from moving, easily falling and easily being removed from the upper side of the first lowermold 21a. The support members 213a of the first lower mold 21a shown in Fig. 2 have a size smaller than the height of the side walls 113a of the first lower holding tool 11a. With this size, it is possible to support a part of the lower side of the first lower holding tool 11a. Note that the height of the support members 213a may be approximately the same as or slightly larger than the height of the side walls 113a of the first lower holding tool 11a. With this size, the entire first lower holding tool 11a can be fitted in the first lower mold 21a.

In this manner, the upper side of the first lower mold 21a as a whole has a structure where a "grove" having predetermined axial shape and cross-sectional shape and size is formed. That is, the support members 213a correspond to the side surfaces of the "groove", and the first pressure member 211a and the second pressure member 212a correspond to the bottom surface of the "groove". Then, the entirety or a part of the lower side of the first lower holding tool 11a can be removably fitted in this "groove" . When the first lower holding tool 11a is fitted in this "groove", the lower surface of the first lower holding tool 11a comes into contact with the bottom surface of the "groove" (= the first pressure member 211a and the second pressure member 212a), and a part of the outer surfaces of the side walls 113a of the first lower holding tool 11a (= a part of the lower mold) comes in the vicinity of or in contact with the side surfaces of the "groove" (= the support members 213a).

The first lower mold 21a has unshown heating means. Then it is possible to maintain the first pressure member 211a and the second pressure member 212a at a "predetermined temperature" with this heating means (precisely, it is possible to maintain a temperature to heat the first molded body 931 and the second molded body 932 to the "predetermined temperature"). Note that the "predetermined temperature" will be described later. As the heating means, well-known various heating means are applicable. For example, a structure where a heating wire is applied as the heating means and the heating wire is embedded inside the first lower mold 21a, or a structure where the heating wire is attached to the outer periphery of the first lower mold 21a is applicable. Further, a structure where a passage (e.g. a hole) to pass fluid is formed inside the first lower mold 21a, and temperature-controlled fluid (temperature-controlled air, liquid (oil or the like), steam (superheated steam or the like)) is passed through this passage is applicable. In this manner, any heating means is applicable as long as it has a structure to maintain the first pressure member 211a and the second pressure member 212a at the "predetermined temperature", and the type and structure are not limited.

The first upper mold 22a is a tool to pressurize and heat, along with the first lower mold 21a and the first lower holding tool 11a, the first molded body 931 and the second molded body 932, into a predetermined shape, and weld the first molded body 931 and the second molded body 932.

The entirety or a part of the lower side of the first upper mold 22a has a structure to be removably inserted between the both side walls 113a of the first lower holding tool 11a. That is, the first upper mold 22a has a part having a predetermined axial shape (= the same shape as the axial shape of the first lower holding tool 11a) and a size in its widthwise direction (size in a direction orthogonal to the axial line) removably inserted between the both side walls 113a of the first lower holding tool 11a. For example, the first upper mold 22a has a part formed in a size approximately the same as or slightly smaller than the size in the interval between the both side walls 113a of the first lower holding tool 11a. Otherwise, the entire upper mold 22a has a size removably inserted between the side walls 113a of the first lower holding tool 11a. Note that in the upper mold 22a shown in Fig. 3, a part of the lower side of the upper mold 22a has a size to be removably inserted between the both side walls 113a of the first lower holding tool 11a.

A first pressure member 221a and a secondpressure member 222a are formed on the lower side of the first upper mold 22a.

The first pressure member 221a of the first upper mold 22a is a part to mold the main body 921a of the covering member 92a, and is a groove-shaped concave member capable of accommodating the predetermined part of the electric wires 91. The axial line of the first pressure member 221a of the first upper mold 22a has a shape corresponding to the axial shape of the predetermined part of the first wire harness 9a (= approximately the same shape). The first pressure member 221a of the first upper mold 22a has shape and size corresponding to the cross-sectional shape and size of the main body 921a of the covering member 92. That is, it has shape and size approximately the same as the other one of the shapes obtained by dividing the main body 921a of the covering member 92 by two (note that the first pressure member 111a of the first lower holding tool 11a has shape and size approximately the same as the one of the shapes obtained by dividing the main body 921a by two).

For example, when the cross-sectional shape of the main body 921a of the covering member 92 is an approximately hexagonal shape as shown in Fig. 1(a), the first pressure member 221a of the first upper mold 22a has a groove-shaped structure having an approximately trapezoidal cross-sectional shape (= has a groove-shaped structure where an approximately flat bottom surface and slope surfaces inclined downward at a predetermined angle along the both sides of the both sides of the bottom surface). As shown in Fig. 1(b), when it is an approximately circular shape, the first pressure member 221a has a groove-shaped structure having an approximately semicircular cross-sectional shape.

The second pressure member 222a of the first upper mold 22a is a part to mold the joint member 922a of the covering member 92. The second pressure member 222a of the first upper mold 22a is a part provided along the axial line direction of the first pressure member 221a on the both outer sides of the first pressure member 221a of the first upper mold 22a, and formed in an approximately flat surface facing downward.

The first pressure member 221a of the first upper mold 22a has unshown heating means. Then, it is possible to maintain the first pressure member 221a of the first upper mold 22a and the second pressure member 222a at a predetermined temperature with this heating means. The predetermined temperature is the same as that of the first lower mold 21a. Further, as the heating means, the same heating means as that of the first lower mold 21a is applicable. Accordingly, the explanation thereof will be omitted.

Then, when the first lower holding tool 11a is placed on the upper side of the first lower mold 21a, and in that state, the first upper mold 22a and the first lower mold 21a are brought closer to each other, the entirety or a part of the lower side of the first upper mold 22a is fitted between the both side walls 113a of the first lower holding tool 11a placed on the first lower mold 21a. Then the first pressure member 111a of the first lower holding tool 11a and the first pressure member 221a of the first upper mold 22a face each other with a predetermined interval therebetween. Similarly, the second pressure member 112a of the first lower holding tool 11a and the second pressure member 222a of the first upper mold 22a face each other with a predetermined interval therebetween. Then the shape and the size of space surrounded by the first pressure member 111a and the second pressure member 112a of the first lower holding tool 11a, the both side walls 113a, the first pressure member 221a and the second pressure member 222a of the first upper mold 22a are approximately the same as the shape and the size of the covering member 92a formed in the predetermined part of the first wire harness 9a.

That is, the first pressure member 111a of the first lower holding tool 11a has size and shape approximately the same as those of one of the shapes obtained by dividing the main body 921a of the covering member 92a by two. On the other hand, the first pressure member 221a of the first upper mold 22a has size and shape approximately the same as those of the other one of the shapes obtained by dividing the main body 921a of the covering member 92a by two. Accordingly, the size and the shape of a region held between the first pressure member 111a of the first lower holding tool 11a and the first pressure member 221a of the first upper mold 22a are approximately the same as the size and the shape of the main body 921a of the covering member 92a.

Further, the second pressure member 112a of the first lower holding tool 11a is an approximately flat surface facing upward, and the second pressure member 222a of the first upper mold 22a is an approximately flat surface facing downward. Accordingly, the second pressure member 112a of the first lower holding tool 11a and the second pressure member 222a of the first upper mold 22a face approximately in parallel with a predetermined distance (= the thickness of the joint member 922a of the covering member 92a) therebetween.

The first pressure member 111a of the first lower holding tool 11a is a concave member fallen downward from the second pressure member 112a, and the first pressure member 221a of the first upper mold 22a is a concave member fallen upward from the second pressure member 222a. Accordingly, the distance between the second pressure member 112a of the first lower holding tool 11a and the second pressure member 222a of the first upper mold 22a is smaller than the distance between the first pressure member 111a of the first lower holding tool 11a and the first pressure member 221a of the first upper mold 22a.

Next, a process of the method for manufacturing the wire harness according to the first embodiment of the present invention will be described.

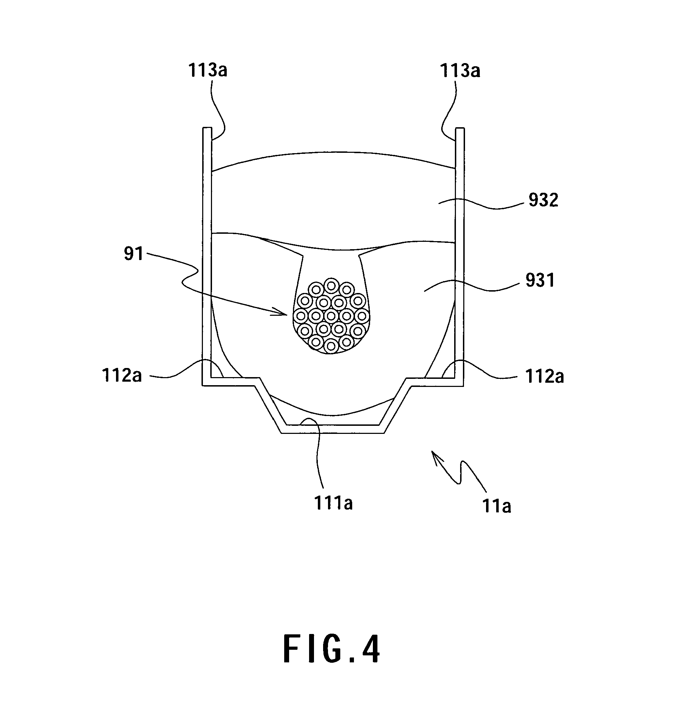

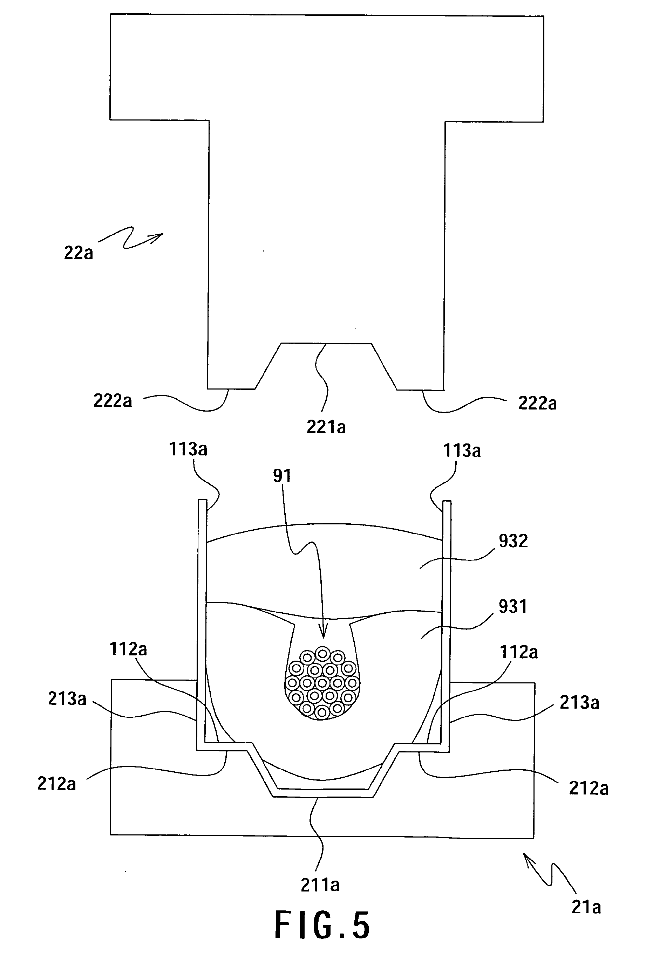

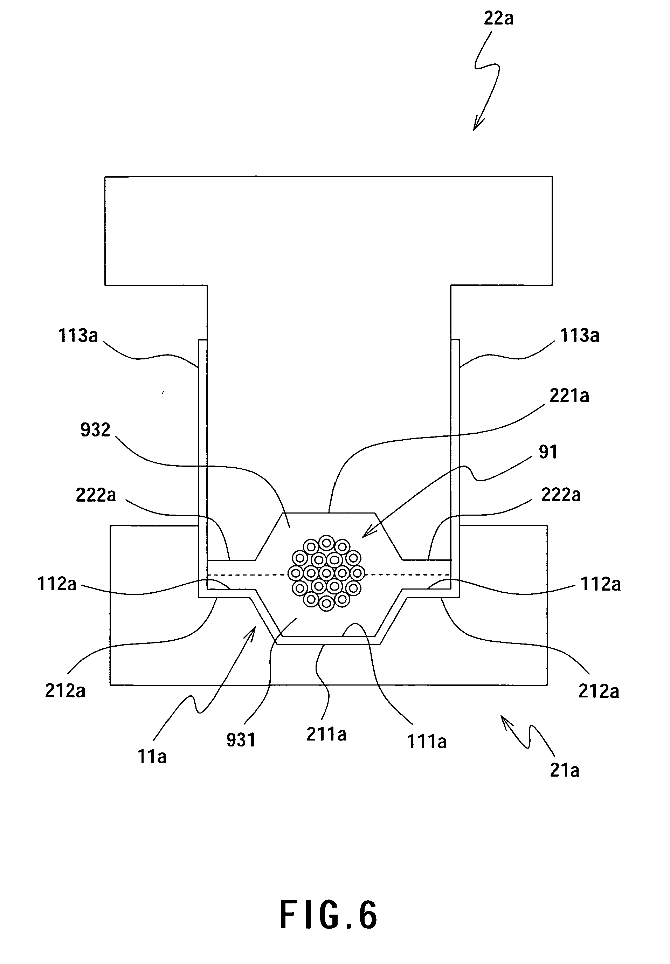

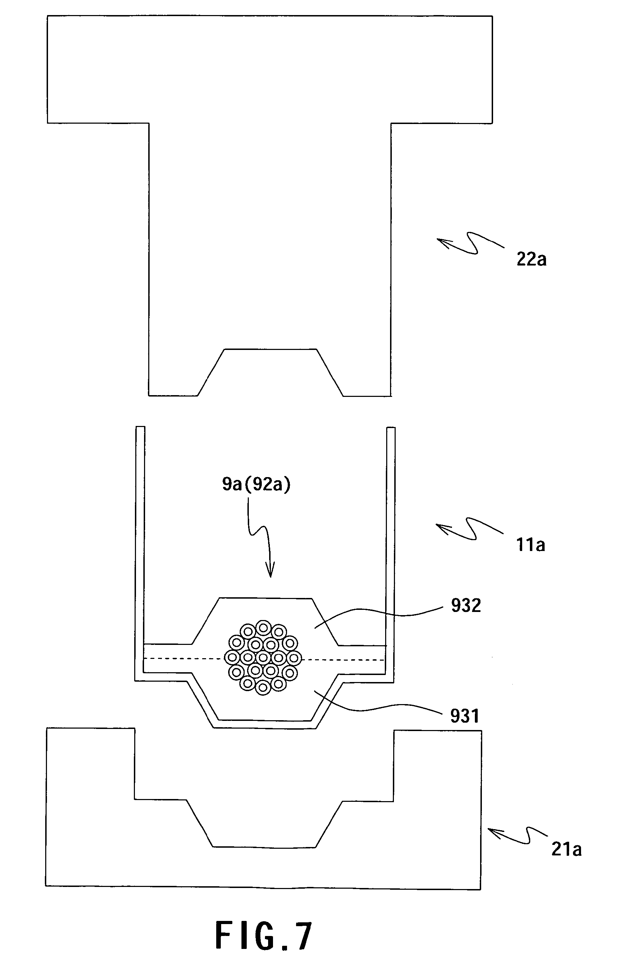

Figs. 4 to 7 are cross-sectional diagrams respectively schematically showing a predetermined process of the method for manufacturing the wire harness according to the first embodiment of the present invention. More specifically, Fig. 4 is a diagram showing a state where the first molded body 931, the predetermined part of the electric wires 91 and the second molded body 932 are accommodated in the first lower holding tool 11a. Fig. 5 is a diagram showing a state where the first lower holding tool 11a, in which the first molded body 931, the predetermined part of the electric wires 91 and the second molded body 932 are accommodated, is placed on the first lower mold 21a. Fig. 6 is a diagram showing a state where the first molded body 931 and the second molded body 932 are pressurized with the first upper mold 22a and the first lower mold 21a. Fig. 7 is a diagram showing a state where the predetermined part of the manufactured first wire harness 9a, in a state where it is placed on the first lower holding tool 11a, is removed from the first upper mold 22a and the first lower mold 21a.

First, as shown in Fig. 4, the first molded body 931 is bended so as to hold (or wrap) the predetermined part of the electric wires 91 (e.g., bended in an approximately "U" shape), and in that state, is accommodated between the both side walls 113 of the first lower holding tool 11a. At this time, as shown in Fig. 4, the bended side of the first molded body 931 (= the side corresponding to the bottom of the "U" shape) is positioned on the lower side of the first lower holding tool 11a (= the side where the first pressure member 111a and the second pressure member 112a are formed). Then in that state, the second molded body 932 is accommodated on the upper side of the predetermined part of the electric wires 91 and the first molded body 931 so as to cover the electric wires 91 and the first molded body 931.

As the thickness of the first molded body 931 and the second molded body 932 before molding to the covering member 92a (= the size in the vertical direction), a size equal to or greater than a size 1/2 of the thickness of the main body 921a of the covering member 92a after the molding, and larger than the thickness of the joint member 922a, is applied. Further, as the width of the first molded body 931 before forming to the covering member 92a, at least a size equal to or greater than the distance between the both side walls 113a of the first lower holding tool 11a is applied. Then, it is preferable that it is set to a size to, in a state where it is bended to hold the electric wires 91, prevent the predetermined part of the electric wires 91 from protruding from the first molded body 931. On the other hand, as the size in the widthwise direction of the second molded body 932 before molding to the covering member 92a, a size equal to or greater than the distance between the both side walls 113 of the first lower holding tool 11a is applied.

Accordingly, the first molded body 931 and the second molded body 932, in a state where they are provided inside the both side walls 113 of the first lower holding tool 11a, are elastic-deformed, and maintained in the elastic-deformed state with the first pressure member 111a and the second pressure member 112a of the first lower holding tool 11a, and the side walls 113a. Especially, the first molded body 931 is maintained with the side walls 113a of the first lower holding tool 11a in the state where it holds the predetermined part of the electric wires 91 in the approximately "U" shape.

Next, as shown in Fig. 5, the first lower holding tool 11a, in which the first molded body 931, the predetermined part of the electric wires 91 and the second molded body 932 are accommodated, is placed on the upper side of the first lower mold 21a. In this state, the lower surface of the first pressure member 111a of the first lower holding tool 11a and the lower surface of the second pressure member 112a respectively are in contact with the first pressure member 211a and the second pressure member 212a of the first lower mold 21a. Then the entirety or a part of the lower side of the side walls 113a of the first lower holding tool 11a is in the vicinity of or in contact with the support members 213a of the first lower mold 21a.

As the entirety or a part of the lower side of the side walls 113a of the first lower holding tool 11a is in the vicinity of or in contact with the support members 213a of the first lower mold 21a, a part of the lower side of the first lowerholding tool 11a is fitted in the "groove" formed on the upper side of the first lower mold 21a (= the support members 213a corresponds to the side surfaces of the "groove", and the first pressure member 211a and the second pressure member 212a correspond to the bottom surface of the "groove"). Accordingly, it is possible to prevent the first lower holding tool 11a, placed on the upper side of the first lower mold 21a, from being shifted, easily falling or easily being removed from the upper side of the first lower mold 21a.

Note that the first pressure member 221a and the second pressure member 222a of the first upper mold 22a, and the first pressure member 211a and the second pressure member 212a of the first lower mold 21a are maintained at the "predetermined temperature" with the heating means.

As the "predetermined temperature", when the first non-woven fabric is applied to the first molded body 931 and the second molded body 932, a temperature within the second temperature band is applied. Further, when the second non-woven fabric or the foam formed of a thermoplastic material is applied to the first molded body 931 and the second molded body 932, a temperature around the fusing point of the thermoplastic material as a material of the second non-woven fabric or the foam (note that a temperature equal to or higher than the fusing point) is applied.

Next, as shown in Fig. 6, the first upper mold 22a and the first lower mold 21a are brought closer to each other. Then the distance between the pressure member 111a of the first lower holding tool 11a and the first pressure member 221a of the first upper mold 22a, and the distance between the second pressure member 112a of the first lower holding tool 11a and the second pressure member 222a of the first upper mold 22a are set to a predetermined distance. That is, the first upper mold 22a and the first lower mold 21a are brought closer to each other such that the shape and the size of space surrounded by the first pressure member 111a and second pressure member 112a of the first lower holding tool 11a, and the first pressure member 221a and the second pressure member 222a of the first upper mold 22a become the shape and the size of the molded covering member 92a. Then the first molded body 931 and the second molded body 932 are heated and pressurized by maintaining this state for the "predetermined period" (i.e., the heating and the pressurization are continued for the "predetermined period").

According to this arrangement, in the first molded body 931 and the second molded body 932, a part held with the first pressure member 111a of the first lower holding tool 11a and the first pressure member 221a of the first upper mold 22a becomes the main body 921a of the covering member 92a. Further, a part held and pressurized with the second pressure member 112a of the first lower holding tool 11a and the second pressure member 222a of the first upper mold 22a becomes the joint member 922a.

The "predetermined period" is as follows. When the first non-woven fabric is applied to the first molded body 931 and the second molded body 932, it is a period longer than a period in which, in the first molded body 931 and the second molded body 932, the temperature of the entirety which becomes the joint member 922a (= the part held between the first pressure member 111a of the first lower holding tool 11a and the first pressure member 221a of the first upper mold 22a) rises to the second temperature band, and a period in which the temperature of the central part of the part which becomes the main body 921a (= the electric wires 91 and its peripheral part) does not rise to the second temperature band. When the second non-woven fabric or the form is applied to the first molded body 931 and the second molded body 932, it is a period longer than a period in which, in the first molded body 931 and the second molded body 932, the temperature of the part which becomes the joint member 922a rises to the temperature of the fusing point of the thermoplastic material, and a period shorter than a period in which the temperature of the part which becomes the central part of the main body 921a rises to the temperature around the fusing point of the thermoplastic material. As described above, since the joint member 922a is thinner than the main body 921a, it is possible to heat the entire joint member 922a to the "predetermined temperature" before the temperature of the central part of the main body 921a rises to the predetermined temperature.

By performing the pressurizing and the heating at the "predetermined temperature" for the "predetermined period", the joint member 922a of the covering member 92a is formed through the following processes.

While the first molded body 931 and the second molded body 932 are pressurized, the distance between the second pressure member 112a of the first lower holding tool 11a and the second pressure member 222a of the first upper mold 22a is maintained in the thickness of the joint member 922a of the covering member 92a. The thickness of the first molded body 931 and the second molded body 932 before the pressurization is larger than the thickness of the molded joint member 922a of the covering member 92a. Accordingly, in the first molded body 931 and the second molded body 932, the part held between the second pressure member 112a of the first lower holding tool 11a and the second pressure member 222a of the first upper mold 22a is pressurized and compression-deformed. Then this part is heated to the predetermined temperature by heat emitted from the heating means of the first upper mold 22a and the first lower mold 21a. Accordingly, this compression deformation is plastic deformation.

When the first non-woven fabric is applied to the first molded body 931 and the second molded body 932, the base fiber and the core fiber of the binder fiber of the first non-woven fabric are plastic-deformed by thermoplasticity. Note that since the "predetermined temperature" is a temperature within the second temperature band and lower than the fusing point of the base fiber and the core fiber of the binder fiber, they are plasticized by thermoplasticity but not melted, and the fiber state (= solid state) is maintained. On the other hand, since the "predetermined temperature" is higher than the fusing point of the binder material of the binder fiber, the binder material of the binder fiber is melted, permeates among the base fiber and the core fiber of the binder fiber and spreads through contact surfaces between the first molded body 931 and the second molded body 932. Accordingly, the base fiber and the core fiber of the binder fiber are connected with the binder material as an adhesive, and the molten binder material which spread through the contact surfaces between the first molded body 931 and the second molded body 932 joins (= welds) the first molded body 931 and the second molded body 932.

Further, when the first non-woven fabric or the foam is applied to the first molded body 931 and the second molded body 932, since the "predetermined temperature" is a temperature around the fusing point of the thermoplastic material, the first molded body 931 and the second molded body 932 are plastic-deformed by thermoplasticity. Then, since a part is melted, the first molded body 931 and the second molded body 932 are joined (= welded).

In this manner, when the first molded body 931 and the second molded body 932 are formed of any of the first non-woven fabric, the second non-woven fabric and the foam, the part held between the second pressure member 112a of the first lower holding tool 11a and the second pressure member 222a of the first upper mold 22a is plastic-deformed (= compression-deformed), and the size in the vertical direction is reduced and welded.

Further, the main body 921a of the covering member 92a is formed through the following processes.

In the first molded body 931 and the second molded body 932, the part held between the first pressure member 111a of the first lower holding tool 11a and the first pressure member 221a of the first upper mold 22a becomes the main body 921a of the covering member 92a. That is, in the first molded body 931 and the second molded body 932, the part held between the first pressure member 111a of the first lower holding tool 11a and the first pressure member 221a of the first upper mold 22a is pressurized with the first pressure member 111a of the first lower holding tool 11a and the first pressure member 221a of the first upper mold 22a. Then it is plastic-deformed to a shape approximately the same as the shape of a gap formed between the first pressure member 111a of the first lower holding tool 11a and the first pressure member 221a of the upper mold 22a, and molded to the shape of the main body 921a.

When the first non-woven fabric is applied to the first molded body 931 and the second molded body 932, in the first molded body 931 and the second molded body 932, the temperature of the surface layer of a part in contact with the first pressure member 111a of the first lower holding tool 11a and the surface layer of a part in contact with the first pressure member 211a first upper mold 22a rises to the "predetermined temperature". Accordingly, the binder material of the binder fiber is melted by heat, and permeates among the base fiber and the core fiber of the binder fiber. Further, since the temperature of the surface layer of the part in contact with the first pressure member 111a of the first lower holding tool 11a and the surface layer of the part in contact with the first pressure member 221a of the first upper mold 22a is higher in comparison with the central part (= the part in contact with the electric wires 91 and its peripheral part), the degree of plastic deformation is higher in comparison with that of the central part. Accordingly, the density of the base fiber and the core fiber of the binder fiber is higher in comparison with that of the central part.

When the second non-woven fabric or the foam is applied to the first molded body 931 and the second molded body 932, in the first molded body 931 and the second molded body 932, since the temperature of the surface layer of the part in contact with the first pressure member 111a of the first lower holding tool 11a and the surface layer of the part in contact with the first pressure member 221a of the first upper mold 22a is higher in comparison with their central parts, the degree of plastic deformation is higher in comparison with the central parts. As a result, the density of the fiber of the second non-woven fabric or the foam is higher in comparison with that of the central parts. Further, since the temperature of a part of the surface layer of the part in contact with the first pressure member 111a of the first lower holding tool 11a and a part of the surface layer of the part in contact with the first pressure member 221a of the first upper mold 22a rises to the "predetermined temperature", a part of the second non-woven fabric or the foam is melted. When the second non-woven fabric or the foam is melted, the bubbles are released and the density is increased.

In this manner, in the joint member 922a of the covering member 92a, it is possible to weld the first molded body 931 and the second molded body 932. Further, in the main body 921a of the covering member 92a, it is possible to increase the density of the surface layer in comparison with that of the central part.

Note that the heat emitted from the first lower mold 21a is transmitted through the first lower holding tool 11a to the first molded body 931 and the second molded body 932. As described above, since the first lower holding tool 11a is formed of a material having a high thermal conductivity and has a structure to easily transmit heat in the vertical direction, the heat emitted from the first lower mold 21a is easily transmitted to the first molded body 931 and the second molded body 932. Accordingly, it is not necessary to prolong the above-described "predetermined period".

Next, as shown in Fig. 7, after the elapse of the "predetermined period", the first upper mold 22a and the first lower mold 21a are separated, and the predetermined part of the first wire harness 9a (i.e., the molded covering member 92a and the predetermined part of the electric wires 91), in the state where it is placed on the first lower holding tool 11a, is removed from the first lower mold 21a. Then, the predetermined part of the first wire harness 9a in the state where it is placed on the first lower holding tool 11a is cooled.

Then, in a case where the first non-woven fabric is applied to the first molded body 931 and the second molded body 932, when the temperature of the molded covering member 92a becomes lower than the first temperature band, it is removed from the first lower holding tool 11a. Further, in a case where the second non-woven fabric or the foam is applied to the first molded body 931 and the second molded body 932, when the temperature of the molded covering member 92a becomes a temperature at which it is not plastic-deformed by thermoplasticity, it is removed from the first lower holding tool 11a. Note that the cooling method is not particularly limited. For example, a method of placing in a refrigerator, a method of blowing gas at a normal or low temperature, and further, a method of leaving at a normal temperature, or the like, is applicable.

The first lower holding tool 11a is formed of a material having high thermal conductivity and has a structure to easily transmit heat in the vertical direction. Accordingly, the heat of the molded covering member 92a (= the first molded body 931 and the second molded body 932) is quickly released to the outside through the first lower holding tool 11a. Further, when the first lower holding tool 11a is formed of a metal plate or the like and manufactured by sheet metal working or the like, (i.e., when the mass is small), since the thermal storage amount is small, temperature drop starts immediately after the removal from the first lower mold 21a. Accordingly, the predetermined part of the first wire harness 9a is not heated by the heat of the first lower holding tool 11a after the removal from the first lower mold 21a. Accordingly, it is possible to prevent overheating of the wire harness 9a. Accordingly, the control of the properties of the covering member 92a is facilitated.

Through the above-described processes, the first wire harness 9a is manufactured. Note that the method for manufacturing the first wire harness includes a process of bundling the electric wires 91 and a process of attaching connectors or the like to the electric wires 91. However, as these processes, conventionally known methods are applicable. Accordingly, the explanations thereof will be omitted.

In a case where the first non-woven fabric is applied to the first molded body 931 and the second molded body 932, in the first molded body 931 and the second molded body 932 forming the covering member 92a, when the temperature is lower than the second temperature band, the base fiber and the core fiber of the binder fiber of the first molded body 931 and the second molded body 932 are not plastic-deformed by thermoplasticity, and the shape molded by pressurization is maintained. Further, the binder material melted and permeated among the base fiber and the core fiber of the binder fiber is solidified, and the binder material joins the base fiber and the core fiber of the binder fiber. Accordingly, the part where the binder material is melted and then solidified is harder in comparison with the other parts.

In the molded the joint member 922a of the covering member 92a (= in the first molded body 931 and the second molded body 932, the part held between the second pressure member 112a of the first lower holding tool 11a and the second pressure member 222a of the first upper mold 22a), the binder material is melted almost all over then solidified. Further, the joint member 922a is compression-deformed, and the density of the base fiber and the core fiber of the binder fiber is higher. In this manner, since the joint member 922a of the covering member 92a, in the state where the density of the base fiber and the core fiber of the binder fiber is higher, are mutually attached with the binder material, the hardness is higher in comparison with that of the other parts. Further, the first molded body 931 and the second molded body 932 are welded and integrated in the joint member 922a by solidification of the binder material.

Since the temperature of the surface layer of the main body 921a of the molded covering member 92a (= in the first molded body 931 and the second molded body 932, the part held between the first pressure member 111a of the first lower holding tool 11a and the first pressure member 221a of the first upper mold 22a) has risen to the second temperature band upon pressurization, the binder material has been melted and then solidified. Accordingly, in the surface layer of the main body 921a, the base fiber and the core fiber are joined with the binder material. Further, as it is pressurized and compression-deformed, the density is high. Especially, since the temperature upon pressurization of the surface layer of the main body 921a is higher in comparison with that of the central part of the main body 921a, the degree of plastic deformation by thermoplasticity is higher (= the amount of compression deformation has been increased) . Accordingly, in the surface layer of the main body 921a after the pressurization, the density of the base fiber and the core fiber of the binder fiber is higher in comparison with the central part. Then in the high-density state, they are joined with the binder material. Accordingly, it is harder in comparison with its state before the pressurization.

On the other hand, the temperature of the central part of the main body 921a of the covering member 92a (i.e., the part in contact with the predetermined part of the electric wires 91 and its peripheral part) has not risen to the temperature in the second temperature band. Accordingly, in comparison with the surface layer of the main body 921a, the degree of deformation by thermoplasticity is small or plastic deformation by thermoplasticity has not occurred. Then, since the temperature has not risen to the second temperature band, the binder material of the binder fiber is not melted. Accordingly, the central part of the covering member 92 is in approximately the same state as that before the molding (note that in some cases, the density of fiber has been increased by the pressurization).

When the second non-woven fabric or the foam is applied to the first molded body 931 and the second molded body 932, in the joint member 922a of the covering member 92a, the first molded body 931 and the second molded body 932 are compressed and the density is higher. Accordingly, the hardness of the joint member 922a is higher in comparison with that of the other parts. Further, since at least a part has been melted then solidified again, the first molded body 931 and the second molded body 932 are joined (= welded) and integrated in the joint member 922a.

Further, in the surface layer of the main body 921a, since the temperature upon pressurization is higher in comparison with that of the central part, the degree of plastic deformation is higher in comparison with the central part. On the other hand, in the central part of the main body 921a, the state before the heating and the pressurization is maintained. Accordingly, in the surface layer of the main body 921a, the density is higher in comparison with that of the central part. Further, since the temperature of a part of the surface layer of the main body 921a rises to a temperature equal to or higher than the fusing temperature, a part is melted then the bubbles are released, the state of fiber or foam is changed to solid-core state (inside is filled). Accordingly, the surface layer of the main body 921a is harder in comparison with the central part, and further, it is harder in comparison with its state before the pressurization.

In this manner, when any one of the first non-woven fabric, simple type non-woven fabric and the foam is applied as the first molded body 931 and the second moldedbody932, in the molded main body 921a of the covering member 92a, the surface layer is harder in comparison with the central part, and harder than the first molded body 931 and the second molded body 932 before the molding. On the other hand, the central part has approximately the same state as that before the pressurization. In this manner, it is possible to add a function of maintaining the shape of the predetermined part of the first wire harness 9a and a function of protecting the part by hardening surface of the main body 921a of the covering member 92a. On the other hand, as it is possible to maintain the central part of the main body 921a of the covering member 92a in the soft state before pressurization, it is possible to add functions as a shock-absorbing material, a sound proof material and the like for the predetermined part of the electric wires 91.

According to the method for manufacturing the wire harness according to the first embodiment of the present invention, in comparison with the arrangement using a protector or shape maintenance member which is an injection molded product, the following effects can be attained.

First, since the first upper mold 22a and the first lower mold 21a used in the method for manufacturing the wire harness according to the first embodiment of the present invention have a simple structure in comparison with metal dies for manufacturing injection molded products (so-called injection molding dies), it is possible to manufacture them at a lower price and reduce the equipment cost. Further, according to the method for manufacturing the wire harness according to the first embodiment of the present invention, since a cheap material (thermoplastic material) is applicable to the covering member 92a in comparison with the arrangement using the protector or shape maintenance member which is an injection molded product, it is possible to manufacture the wire harness at a low cost. Accordingly, it is possible to realize a low price of the product.

Further, according to the method for manufacturing the wire harness according to the first embodiment of the present invention, in the process of molding the covering member 92a, the operation is simple in comparison with the method of fitting the electric wires in the protector or shape maintenance member which is an injection molded product.

Further, in the arrangement using the protector or shape maintenance member which is an injection molded product, when a gap exists between the inner surface of the protector or shape maintenance member and the electric wires, the electric wires collide with the inner surface of the protector or shape maintenance member due to vibration or the like, and an impulsive sound or the like occurs. Note that there is an arrangement where a shock-absorbing material such as sponge is inserted inside the protector or shape maintenance member which is an injection molded product. However, in this arrangement, the number of parts and the number of steps are increased, and there is a possibility of rise of manufacturing cost and product price.

On the other hand, according to the first wire harness 9a, the predetermined part of the electric wires 91 is wrapped in the covering member 92a (= embedded between the first molded body 931 and the second molded body 932), and the predetermined part of the electric wires 91 is elastically in contact with the covering member 92a. Accordingly, an impulsive sound or the like does not occur between the predetermined part of the electric wires 91 and covering member 92a. Further, the covering member 92a functions as a protector or shock-absorbing material to protect the predetermined part of the electric wires 91 from impact, vibration and the like.

In this manner, since it is possible to avoid increment in the number of parts or the number of steps, it is possible to reduce the cost of the parts and the manufacturing cost.

Further, according to the method for manufacturing the wire harness according to the first embodiment of the present invention, (i.e., according to the arrangement using the first lower holding tool 11a) , in comparison with the arrangement without the first lower holding tool 11a, the following effects can be attained.

In the arrangement where the first molded body 931 and the second molded body 932 are directly heated and pressurized with the first upper mold 22a and the first lower mold 21a without using the first lower holding tool 11a, an operation to directly provide the first molded body 931 on the upper surface of the first lower mold 21a, an operation to provide the predetermined part of the electric wires 91 further on the upper side, and an operation to provide the second molded body 932 further on the upper side, are required. Accordingly, when much time is required for these operations (especially when a long time elapses in the state where the first molded body 931 is provided on the upper side of the first lower mold 21a), there is a possibility that the first molded body 931, placed on the first lower mold 21a, is heated with the heating means of the first lower mold 21a before pressurization, and plastic-deformed by thermoplasticity, into an unexpected shape. Accordingly, there is a possibility that it is impossible to mold the first molded body 931 and the second molded body 932 into the predetermined shape.

Further, when a long time elapses in the state where the first molded body 931 is placed on the upper side of the first lower mold 21a, there is a possibility that the temperature of the entire first molded body 931 rises to the predetermined temperature. When the first molded moody 931 is the above-described non-woven fabric and when the temperature of the entire first molded body 931 rises to the predetermined temperature, the binder material is melted all over the first molded body 931. Further, when a foam formed of a thermoplastic material is applied to the first molded body 931, there is a possibility that the entire first molded body is melted. As a result, after the molding, there is a possibility that the part in contact with the electric wires 91 and its peripheral part are also hardened. In this case, the part in contact with the electric wires 91 and its peripheral part lose elasticity (or become hardly elastic-deformable), they cannot perform the function as a shock-absorbing material or the function as the shock-absorbing material is lowered.

Further, when a long time elapses in the state where the first molded body 931 is placed on the first lower mold 21a, the heat of the first lower mold 21a is transmitted to the predetermined part of the electric wires 91 through the first molded body 931, and there is a possibility that the covering member in the predetermined part of the electric wires 91 is damaged by heat.

Further, the first upper mold 22a and the first lower mold 21a are maintained at a temperature where the first molded body 931 and the second molded body 932 are plastic-deformable by thermoplasticity. In this state, when an operation to place the first molded body 931, the electric wires 91 and the second molded body 932 on the lower mold is performed, there is a possibility that an operator touches the first upper mold 22a and/or the first lower mold 21a and gets burned.

Note that it may be arranged such that the first upper mold 22a and the first lower mold 21a are heated only upon pressurization of the first molded body 931 and the second molded body 932. According to this arrangement, it is possible to perform the operation to provide the first molded body 931, the predetermined part of the electric wires 91 and the second molded body 932 on the first lower mold 21a when the temperature of the first lower mold 21a is low (= a temperature at which the first molded body 931 is not plastic-deformed and a temperature at which the operator does not get burned). Accordingly, it is possible to prevent the occurrence of unexpected deformation of the first molded body 931 and the operator's burn injury. However, in this arrangement, it is necessary to heat and cool the first upper mold 22a and the first lower mold 21a every time the first wire harness 9a is manufactured (i.e., every time one covering member 92a is molded). Accordingly, time required for the manufacturing is much increased. Further, in this method, it is difficult to control the heat amount applied to the first molded body 931 and the second molded body 932.

Further, in the arrangement where the first upper mold 22a and the first lower mold 21a are heated only upon pressurization (e.g., the heating of the first upper mold 22a and the first lower mold 21a is started immediately after the start of the pressurization), before the temperature of the first upper mold 22a and the first lower mold 21a rises to the above-described predetermined temperature, the first molded body 931, the predetermined part of the electric wires 91 and the second molded body 932 are heated. Then, by the time the temperature of the lower mold 21a and the upper mold 22a rises to the predetermined temperature, the heat is transmitted from the surface of the first molded body 931 and the second molded body 932 to the inside, and the temperature of the predetermined part of the electric wires 91 and its peripheral part may also be high. When the temperature of the predetermined part of the electric wires 91 and its peripheral part is high, there is a possibility that the covering member in the predetermined part of the electric wires 91 (generally formed of a synthetic resin material) is damaged by heat. When the covering member in the predetermined part of the electric wires 91 is damaged by heat, there is a possibility that it is impossible to maintain the predetermined performance of the wire harness e.g. it is impossible to maintain insulation between the electric wires 91.

On the other hand, according to the method for manufacturing the wire harness according to the first embodiment of the present invention, during the operation to accommodate the first molded body 931, the electric wires 91 and the second molded body 932 in the first lower holding tool 11a, it is not necessary to heat the first lower holding tool 11a. Accordingly, it is possible to heat the first molded body 931 and the second molded body 932 only upon pressurization with the first upper mold 22a and the first lower mold 21a. In this manner, as the first molded body 931 and the second molded body 932 are not heated before pressurization, there is no possibility of the occurrence of unexpected deformation of the first molded body 931 and/or the second molded body 932 before the pressurization. Accordingly, it is possible to accurately mold the first molded body 931 and the second molded body 932 in the shape of the covering member 92a.

Further, it is possible to perform heating and pressurization immediately after the first lower holding tool 11a in which the first molded body 931, the electric wires 91 and the second molded body 932 are accommodated is placed on the first lower mold 21a. That is, the first molded body 931 and the second molded body 932 are not heated for a long time before the pressurization. Accordingly, it is possible to perform pressurization before the heat is transmitted to the central part of the first molded body 931 and the second molded body 932. Accordingly, it is possible to perform pressurization before the temperature of the inside of the first molded body 931 and the second molded body 932 (especially the part in contact with the predetermined part of the electric wires 91 and its peripheral part) rises to the predetermined temperature. Accordingly, since the inside of the first molded body 931 and the second molded body 932 is not hardened, the first molded body 931 does not lose its function as a sound proof material, a shock-absorbing material and the like.

Further, it is possible to perform the operation to accommodate the first molded body 931, the predetermined part of the electric wires 91 and the second molded body 932 in the first lower holding tool 11a in a position away from the first upper mold 22a and the first lower mold 21a. Accordingly, it is possible to perform the operation in wide space and it is possible to easily perform the operation. That is, generally the first upper mold 22a and the first lower mold 21a are built in a pressing machine. Therefore, it is necessary to perform the operation to directly provide the first molded body 931 and the like in the first lower mold 21a in limited space between the first upper mold 22a and the first lower mold 21a, and the first upper mold 22a may be an disincentive. On the other hand, in the arrangement using the first lower holding tool 11a, since the operation can be performed regardless of operation space, it is possible to perform the operation in a position without any disincentive. Further, in the operation to accommodate the first molded body 931, the electric wires 91 and the second molded body 932 in the first lower holding tool 11a, as it is not necessary for the operator to touch the first upper mold 22a and the first lower mold 21a, there is no possibility of burn injury.

Further, in comparison with the arrangement where the first upper mold 22a and the first lower mold 21a are heated only upon pressurization, it is possible to maintain the first upper mold 22a and the first lower mold 21a at the predetermined temperature in addition to the time of pressurization and other time (e.g. in stand-by time). Accordingly, it is possible to start heating and pressurization immediately after the completion of the operation to accommodate the first molded body 931, the predetermined part of the electric wires 91 and the second molded body 932 in the first lower holding tool 11a. Accordingly, it is possible to reduce time required for manufacturing the first wire harness 9a. Further, since it is possible to maintain the first upper mold 22a and the fist lower mold 21a always at the predetermined temperature, it is possible to easily control the temperature of the first molded body 931 and the second molded body 932 upon pressurization.

Further, in the arrangement using the first lower holding tool 11a, since it is possible to maintain the first upper mold 22a and the first lower mold 21a always at the predetermined temperature, it is possible to heat the first molded body 931 and the second molded body 932 to the predetermined temperature at the same time of the start of pressurization. Accordingly, the first molded body 931 and the second molded body 932 can be joined in the joint member 922a before the heat is transmitted to the predetermined part of the electric wires 91 and a part of the first molded body 931 and the second molded body 932 in the vicinity of the predetermined part of the electric wires 91 and the temperature becomes high.

Further, it is possible to heat only the surface layer of the main body 921a to the predetermined temperature and plastic-deform it to melt the binder material in only the surface layer. Accordingly, it is possible to, in the main body 921a, plastic-deform the first molded body 931 and the second molded body 932 in only the surface layer, and to permeate the binder material among the base fiber and the core fiber of the binder fiber. Accordingly, after the cooling, only the surface layer is hardened, and the central part is still in the state before the pressurization. Accordingly, the hardened part has a function of maintaining the shape of the first wire harness 9a in the predetermined shape and also has a function of protecting it. Further, the unhardened part of the central part of the main body 921a functions as a sound proof material or a shock-absorbing material for the electric wires 91.

Further, in the arrangement using the first lower holding tool 11a, when the manufactured first wire harness 9a is removed from the first lower mold 21a, or after the removal, before the temperature is lowered to a temperature equal to or lower than the predetermined temperature, it is possible to prevent the occurrence of unexpected deformation (or undesired deformation).

That is, at least the surface layer of the covering member 92a of the first wire harness 9a (= the first molded body 931 and the second molded body 932) immediately after the molding by the heating and the pressurization with the first upper mold 22a and the first lower mold 21a has a high temperature (= a temperature at which it is plastic deformable by thermoplasticity) . Accordingly, in the arrangement without the first lower holding tool 11a, it is necessary to directly hold the first wire harness 9a upon removal from the first lower mold 21a after the heating and the pressurization. Accordingly, in the first molded body 931 and/or the second molded body 932, there is a possibility that the held part and its peripheral part are deformed at that time. Further, upon removal, the first wire harness 9a may be distortion-deformed by its self weight or the like. Further, there is a possibility that deformation occurs after the removal from the lower mold 21a and before the temperature is lowered to a temperature equal to or lower than the first temperature band.

On the other hand, according to the method for manufacturing the wire harness according to the first embodiment of the present invention, it is possible to remove the pressurized predetermined part of the first wire harness 9a, in the state where it is placed on the first lower holding tool 11a, from first lower mold 21a. Further, it is possible to cool the predetermined part of the first wire harness 9a removed from the first lower mold 21a, in the state where it is placed on the first lower holding tool 11a.

That is, when the predetermined part of the first wire harness 9a is removed from the first lower mold 21a, since it is possible to hold the first lower holding tool 11a and remove it, it is not necessary to directly touch the covering member 92a of the predetermined part of the first wire harness 9a. Further, since the covering member 92a of the predetermined part of the first wire harness 9a is supported with the first lower holding tool 11a, it is possible to remove the predetermined part of the first wire harness 9a, in the state where the pressurized and molded shape is maintained, from the first lower mold 21a. Further, it is possible to cool the first wire harness 9a in the state where it is placed on the first lower holding tool 11a. Accordingly, it is possible to prevent the occurrence of unexpected deformation (or undesired deformation) in the covering member 92a (= the first molded body 931 and the second molded body 932) after the pressurization.

Note that to prevent the occurrence of unexpected deformation in the molded covering member 92a, an arrangement where the first upper mold 22a and the first lower mold 21a are cooled and then removed is applicable. However, in this arrangement, since much time is required for cooling the first upper mold 22a and the first lower mold 21a, the time required for manufacturing the first wire harness 9a is prolonged. Further, since it is necessary to perform heating and cooling on the first upper mold 22a and the first lower mold 21a upon each pressurization, the above-described problem occurs.

Further, in the method for manufacturing the wire harness according to the first embodiment of the present invention, all the first molded body 931 and the second molded body 932 accommodated in the first lower holding tool 11a become the covering member 92a. Accordingly, after the molding of the covering member 92a, an operation to eliminate unnecessary part (so-called trimming) is unnecessary. Accordingly, it is possible to reduce the number of steps (or prevent increment in the number of steps). Further, it is possible to eliminate waste of the first molded body 931 and the second molded body 932.

Further, in the method for manufacturing the wire harness according to the first embodiment of the present invention, upon mass production of the first wire harness 9a by using plural first lower holding tools 11a, it is possible to reduce the operation cycle. For example, when three first lower holding tools 11a are used, the following operation can be performed.

While the first molded body 931, the predetermined part of the electric wires 91 and the second molded body 932, accommodated in the first first lower holding tool 11a, are heated and pressurized with the first upper mold 22a and the first lower mold 21a, an operation to accommodate the first molded body 931, the electric wires 91 and the second molded body 932 in the second first lower holding tool 11a is performed. After the completion of the pressurization of first molded body 931, the predetermined part of the electric wires 91 and the second molded body 932 placed on the first first lower holding tool 11a, and during cooling, the first molded body 931, the predetermined part of the electric wires 91 and the second molded body 932 placed on the second first lower holding tool 11a, are pressurized with the first upper mold 22a and the first lower mold 21a. Concurrently, an operation to accommodate the first molded body 931, the predetermined part of the electric wires 91 and the second molded body 932 in the third first lower holding tool 11a is performed.

Then after the completion of the pressurization of the first molded body 931, the predetermined part of the electric wires 91 and the second molded body 932 accommodated in the second first lower holding tool 11a and during the cooling, the first molded body 931, the predetermined part of the electric wires 91 and the second molded body 932 accommodated in the third first lower holding tool 11a are pressurized with the first upper mold 22a and the first lower mold 21a. Concurrently, an operation to accommodate the first molded body 931, electric wires 91 and the second molded body 932 in the first first lower holding tool 11a (in an empty state as the manufactured predetermined part of the first wire harness 9a has been removed after the cooling) is performed. Such process is repeated hereinbelow.

In this manner, by using the plural first lower holding tools 11a, and maintaining the first upper mold 22a and the first lower mold 21a always at the "predetermined temperature", it is possible to perform the "operation to accommodate the first molded body 931, the electric wires 91 and the second molded body 932 in the first lower holding tool 11a", the "heating and pressurization" and the "cooling" concurrently. Accordingly, it is possible to reduce the operation cycle, and it is possible to reduce time required for manufacturing upon mass production.

Next, the method for manufacturing the wire harness according to a second embodiment of the present invention will be described. Note that the difference from the method for manufacturing the wire harness according to the first embodiment of the present invention will be mainly described, and the corresponding parts will be omitted in some cases.

In the method for manufacturing the wire harness according to the second embodiment of the present invention, a second upper mold 22b, the first lower mold 21a, the first lower holding tool 11a and a first upper holding tool 12a are used. The first lower mold 21a and the first lower holding tool 11a are the same as those used in the method for manufacturing the wire harness according to the first embodiment of the present invention. Accordingly, the explanations thereof will be omitted.

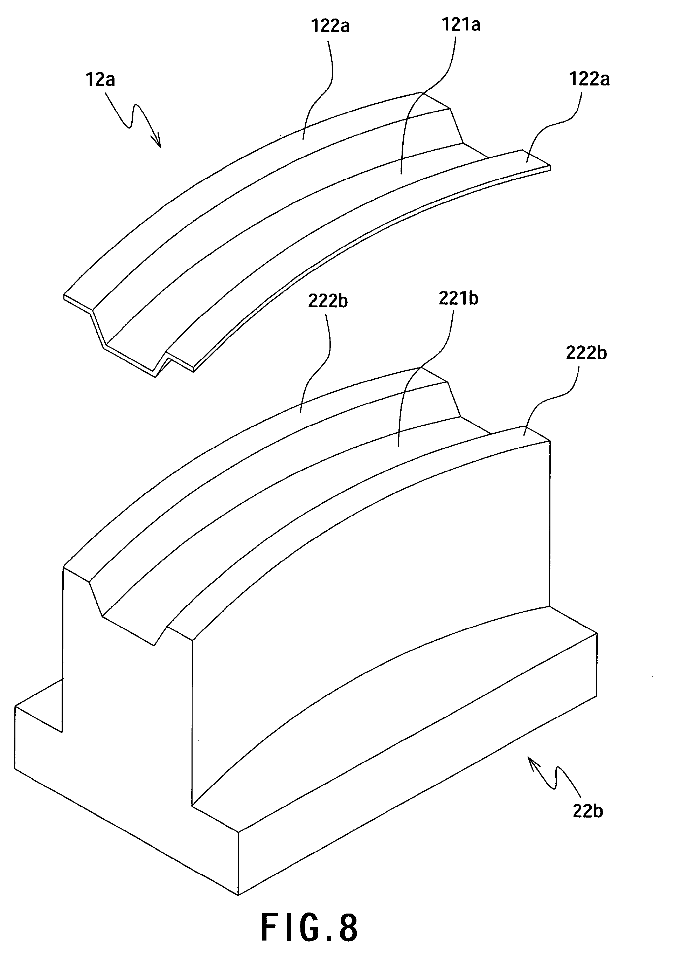

Fig. 8 is an external perspective diagram schematically showing structures of the second upper mold 22b and the first upper holding tool 12a used in the method for manufacturing the wire harness according to the second embodiment of the present invention. In Fig. 8, the upper side in the figure is the side facing the first lower mold 21a. Hereinbelow, for the sake of convenience of explanation, the upper side in the figure will be referred to as the lower side of the second upper mold 22b and the first upper holding tool 12a, and the lower side in the figure will be referred to as the upper side.

The first upper holding tool 12a is a tool having a function of pressurizing the first molded body 931 and the second molded body 932 and a function of maintaining the predetermined part of the manufactured first wire harness 9a (especially, the molded covering member 92a) in a predetermined shape (in other words, preventing unexpected deformation or undesired deformation), in the process of manufacturing the first wire harness 9a.

A first pressure member 121a and a second pressure member 122a are formed on the lower side of the first upper holding tool 12a.

The first pressure member 121a of the first upper holding tool 12a is a part to mold the main body 921a of the covering member 92a. The first pressure member 121a of the first upper holding tool 12a is a groove-shaped part fallen upward, which is capable of accommodating the predetermined part of the electric wires 91, and which has shape and size corresponding to the shape and the size of the main body 921a of the covering member 92a. That is, the axial shape of the first pressure member 121a is approximately the same as the axial shape of the molded covering member 92a, and the shape and the size of the cross-section of the first pressure member 121a (the cross-section cut in a direction approximately orthogonal to the axial line here) are approximately the same as the other one of the shapes obtained by dividing the cross-sectional shape of the main body 921a of the covering member 92a by two.

For example, when the axial line of the main body 921a of the covering member 92a is bended in an arc shape, and its cross-sectional shape is formed in an approximately hexagonal shape (see Fig. 1(a)), the axial shape of the first pressure member 121a of the first upper holding tool 12a is bended in an approximately arc shape and its cross-sectional shape is formed in an approximately trapezoidal shape obtained by dividing a hexagon by two. That is, it is a structure where an approximately flat-surface bottom surface and a slope rising from the both sides of the bottom surface toward the upper side at a predetermined angle to the bottom surface are formed. Further, when the main body 921a of the covering member 92a is formed to have an approximately circular cross-sectional shape (see Fig. 1(b)), the first pressure member 121a of the first upper holding tool 12a has a structure where a groove having an approximately semicircular groove extends.

The second pressure member 122a of the first upper holding tool 12a is a part to pressurize, along with the first lower holding tool 11a, the first molded body 931 and the second molded body 932 via the second upper mold 22b, to mold the joint member 922a of the covering member 92a (= to join the first molded body 931 and the second molded body 932). The second pressure member 122a is an approximately flat surface part facing downward which is provided along the first pressure member 121a on the both outer sides of the first pressure member 121a.

The first upper holding tool 12a is formed of a material having high thermal conductivity, and has a structure in which the thermal storage amount is small (i.e., it easily follows the ambient temperature change). Especially, it has a structure to easily transmit heat in the vertical direction. More specifically, for example, it is formed of a thin metal plate or the like and formed by sheet metal working or the like. When it is formed of a thin metal plate or the like, it easily transmits heat in the vertical direction (thickness direction of the metal plate). Further, since the mass of the first upper holding tool 12a can be reduced, the thermal storage amount can be reduced. Further, the first pressure member 121a and the second pressure member 122a of the first upper holding tool 12a are integrally manufactured by performing sheet metal working or the like on one metal plate. When the first upper holding tool 12a is integrally formed from one metal plate or the like, it is not necessary to build parts as separate bodies. Accordingly, in comparison with the arrangement where parts as separate bodies are built, it is possible to prevent rise of the cost of the parts of the first upper holding tool 12a and the manufacturing cost. Further, it is possible to reduce the labor of working.

The first upper holding tool 12a as a whole can be easily removably inserted in a region held between the both side walls 113a of the first lower holding tool 11a. Then, it has size and shape such that, in the held state, the first pressure member 121a of the first upper holding tool 12a faces the first pressure member 111a of the first lower holding tool 11a, and second pressure member 122a of the first upper holding tool 12a faces the second pressure member 112a of the first lower holding tool 11a. For example, the first pressure member 111a of the first lower holding tool 11a and the first pressure member 121a of the first upper holding tool 12a are set to have approximately the same axial shape and approximately the same size. Similarly, the widths of the second pressure member 112a of the first lower holding tool 11a and the second pressure member 122a first upper holding tool 12a are set to be approximately the same size. Further, the width of the first upper holding tool 12a is set to have approximately the same as or slightly smaller than the interval between the both side walls 113a of the first lower holding tool 11a.

The shape of the upper side of the first upper holding tool 12a is not particularly limited. When the first upper holding tool 12a is formed by sheet metal working or the like, a convex member corresponding to the first pressure member 121a formed on the lower side is formed on the upper side of the first upper holding tool 12a, and an approximately flat surface part corresponding to the second pressure member 122a is formed on the both outer sides of the convex member.

The second upper mold 22b is a tool to heat and pressurize, along with the first lower mold 21a and the first lower holding tool 11a, the first molded body 931 and the second molded body 932 via the first upper holding tool 12a. That is, it heats and pressurizes, along with the first lower mold 21a, the first molded body 931 and the second molded body 932 into a predetermined shape via the first upper holding tool 12a, and joins (= welds) the first molded body 931 and the second molded body 932.

The entirety or a part of the lower side of the second upper mold 22b has a structure to be removably inserted between the both side walls 113a of the first lower holding tool 11a. That is, the second upper mold 22b has a part having an axial shape approximately the same as the axial shape of the first lower holding tool 11a and a widthwise size (= size in the direction orthogonal to the axial line) is a size to be loosely inserted between the both side walls 113a of the first lower holding tool 11a. For example, the second upper mold 22b has a part formed in a size approximately the same as or slightly smaller than the size of the interval between the both side walls 113a of the first lower holding tool 11a. Otherwise, the entire second upper mold 22b has an axial shape approximately the same as the axial shape of the first lower holding tool 11a and a widthwise size to be loosely inserted between the both side walls 113a of the first lower holding tool 11a. In the second upper mold 22b shown in Fig. 8, a part on the lower side has a size approximately the same as the axial shape of the first lower holding tool 11a and a widthwise size to be loosely inserted between the both side walls 113a of the first lower holding tool 11a.

A first pressure member 221b and a second pressure member 222b are formed on the lower side of the second upper mold 22b. Then, the upper side of the first upper holding tool 12a can be removably fitted.

The first pressure member 221b of the second upper mold 22d is a part which, in the state where the first upper holding tool 12a is fitted in the lower side of the second upper mold 22b, is capable of accommodating the upper side of the first pressure member 121a of the first upper holding tool 12a. That is, the first pressure member 221b of the second upper mold 22b is a part in contact with the upper surface of the first pressure member 121a of the first upper holding tool 12a (= the surface of the convex member corresponding to the first pressure member 121a). Accordingly, the first pressure member 221b of the second upper mold 22b has size and shape approximately the same as the shape and the size of the upper side of the first pressure member 121a of the first upper holding tool 12a. For example, as shown in Fig. 8, when the upper side of the first pressure member 121a of the first upper holding tool 12a is a convexity which has an approximately trapezoidal cross-sectional shape and which extends in a predetermined axial direction, the first pressure member 221b has a groove-shaped structure having an approximately trapezoidal cross-sectional shape. Further, when the upper side of the first pressure member 121a of the first holding tool 12a is a convexity which has an approximately semicircular cross-sectional shape and which extends in a predetermined axial direction, the first pressure member 221b of the second upper mold 22b has a groove-shaped structure having an approximately semicircular cross-sectional shape.

The second pressure member 222b of the second upper mold 22b is a part in contact with the upper surface of the second pressure member 122a of the first holding tool 12a in the state where the first upper holding tool 12a is fitted in the lower side of the second upper mold 22b. Accordingly, the second pressure member 222b of the second upper mold 22b is formed into a shape following the shape of the upper surface of the second pressure member 122a of the first upper holding tool 12a. Then, the second pressure member 222b of the second upper mold 22b is provided along the first pressure member 221b on the both outer sides of the first pressure member 221b. For example, as shown in Fig. 8, when the upper surface of the second pressure member 122a of the first upper holding tool 12a is an approximately flat surface, the second pressure member 222b of the second upper mold 22b is formed to be an approximately flat surface.

In this manner, the lower side of the second upper mold 22b has size and shape following the size and the shape of the upper side of the first upper holding tool 12a. Accordingly, the upper side of the first upper holding tool 12a can be removably fitted in the lower side of the second upper mold 22b. Then, when the first upper holding tool 12a is fitted, approximately the entire upper surface of the first upper holding tool 12a (= the respective upper surfaces of the first pressure member 121a and the second pressure member 122a) is in contact with the lower surface of the second upper mold 22b.

The second upper mold 22b has unshown heating means. Then, it is possible to maintain the first pressure member 221b and the second pressure member 222b of the second upper mold 22b at a "predetermined temperature" with this heating means. This "predetermined temperature" is the same as that of the first lower mold 21a. Further, as the heating means, the same heating means as that of the first lower mold 21a is applicable. Accordingly, the explanation thereof will be omitted.

Then, when the first lower holding tool 11a is placed on the upper side of the lower mold 21a, the first upper holding tool 12a is fitted in the second upper mold 22b, and in that state, the second upper mold 22b and the first lower mold 21a are brought closer to each other (note that actually, the first upper holding tool 12a is moved away and falls from the lower side of the second upper mold 22b by its self weight, however, the state where the first upper holding tool 12a is fitted in the second upper mold 22b is maintained here), the entirety or a part of the lower side of the second upper mold of 22b and the first upper holding tool 12a can be fitted between the both side walls 113a of the first lower holding tool 11a placed on the first lower mold 21a. Then, the first pressure member 11a of the first lower holding tool 11a and the first pressure member 121a of the first upper holding tool 12a face each other with a predetermined interval therebetween. Similarly, the second pressure member 112a of the first lower holding tool 11a and the second pressure member 122a of the first upper holding tool 12a face each other with a predetermined interval therebetween.

Then, when the second upper mold 22b and the first lower mold 21a are brought closer with a predetermined distance therebetween, the shape and the size of space surrounded by the first pressure member 11a and the second pressure member 112a of the first lower holding tool 11a, and a part of the both side walls 113a, the first pressure member 121a and the second pressure member 122a of the first upper holding tool 12a become the shape and the size of the covering member 92a formed in the predetermined part of the first wire harness 9a. The first pressure member 11a of the first lower holding tool 11a is a concave member fallen downward from the second pressure member 112a, and the first pressure member 121a of the first upper holding tool 12a is a concave member fallen upward from the second pressure member 122a. Accordingly, the distance between the second pressure member 112a of the first lower holding tool 11a and the second pressure member 122a of the first upper holding tool 12a is smaller than the distance between the first pressure member 11a of the first lower holding tool 11a and the first pressure member 121a of the first upper holding tool 12a.

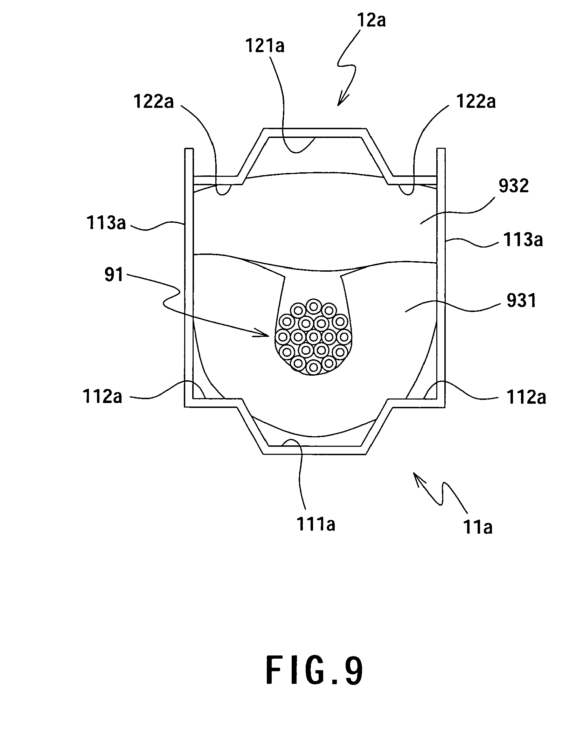

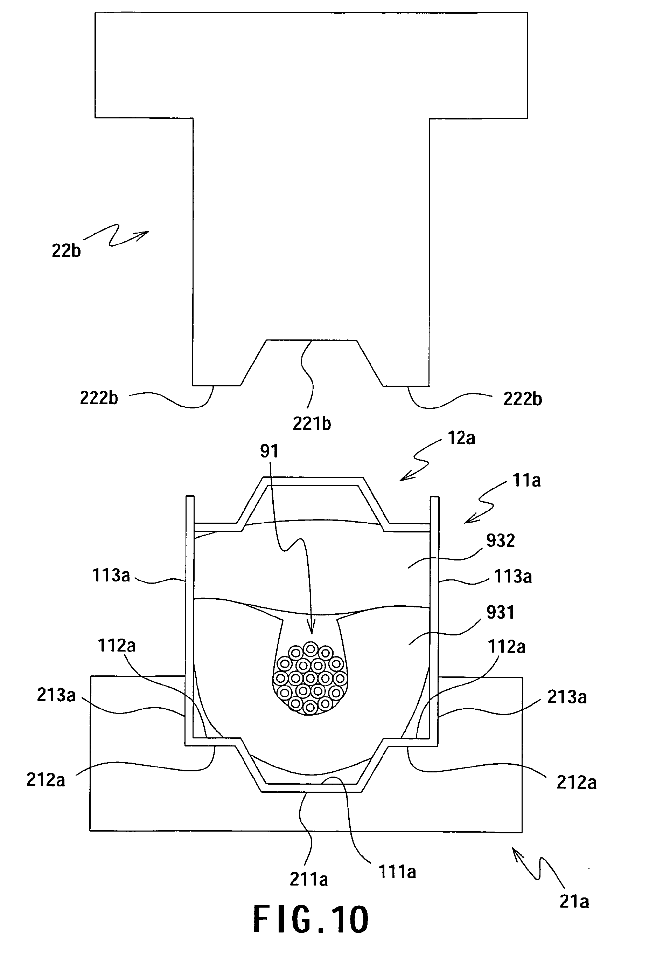

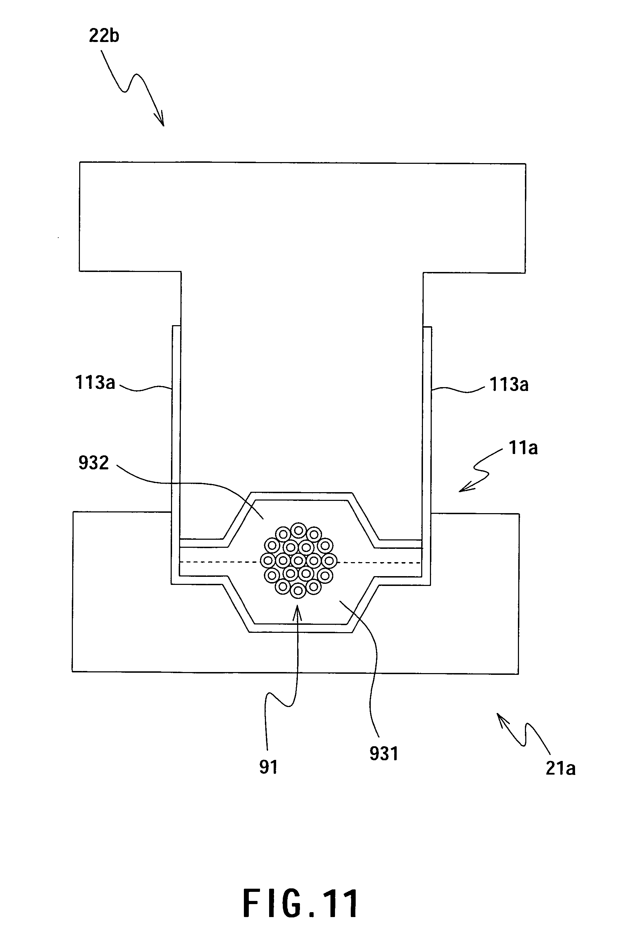

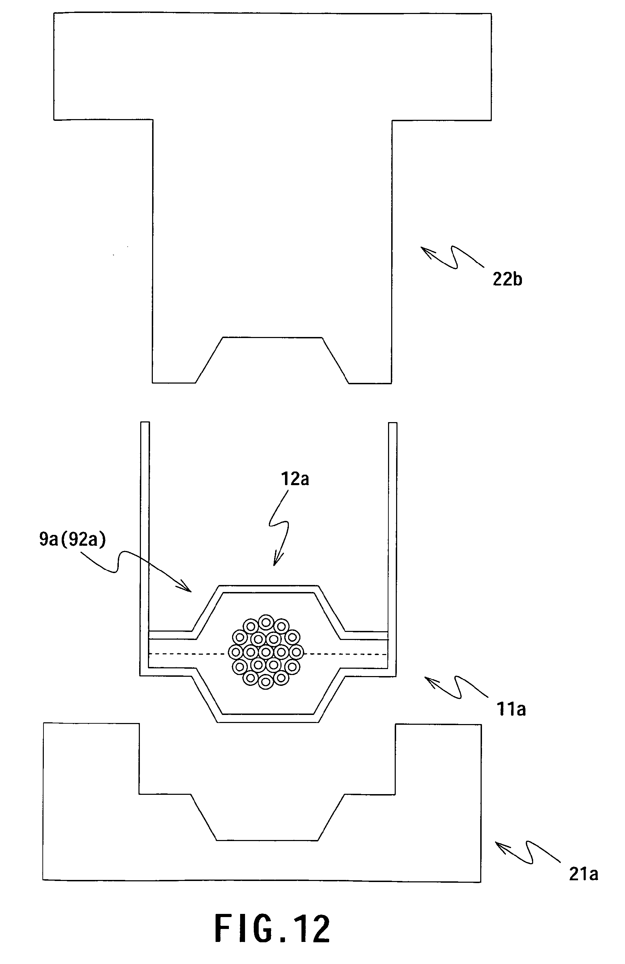

The contents of the processes of the method for manufacturing the wire harness according to the second embodiment of the present invention are as follows. Figs. 9 to 12 are cross-sectional diagrams schematically showing predetermined processes of the method for manufacturing the wire harness according to the second embodiment of the present invention. Respectively, Fig. 9 is a diagram showing a state where the first molded body 931, the predetermined part of the electric wires 91 and the second molded body 932 are accommodated between the first lower holding tool 11a and the first upper holding tool 12a. Fig. 10 is a diagram showing a state where the first lower holding tool 11a and the first upper holding tool 12a, in which the first molded body 931, the predetermined part of the electric wires 91 and the second molded body 932 are accommodated, are placed on the first lower mold 21a. Fig. 11 is a diagram showing a state where the first molded body 931 and the second molded body 932 are heated and pressurized with the second upper mold 22b and the first lower mold 21a. Fig. 12 is a diagram showing a state where the predetermined part of the manufactured first wire harness 9a, in the state where it is held between the first upper holding tool 12a and the first lower holding tool 11a, is removed from the second upper mold 22b and the first lower mold 21a.

First, as shown in Fig. 9, the first molded body 931, the predetermined part of the electric wires 91 and the second molded body 932 are accommodated between the both side walls 113a of the first lower holding tool 11a. The way of accommodation of these members is the same as that in the method for manufacturing the wire harness according to the first embodiment of the present invention. Further, the sizes of the first molded body 931 and the second molded body 932 are the same as those in the method for manufacturing the wire harness according to the first embodiment of the present invention. Accordingly, the explanations thereof will be omitted. Then the first upper holding tool 12a is provided between the both side walls 113a of the first lower holding tool 11a so as to cover the first molded body 931, the predetermined part of the electric wires 91 and the second molded body 932.

In this manner, the predetermined part of the electric wires 91, in the state where it is wrapped in (or the state where it is held between) the first molded body 931 and the second molded body 932, is provided between the upper side of the first lower holding tool 11a and the lower side of the first upper holding tool 12a.

Next, as shown in Fig. 10, the first lower holding tool 11a, in which the first molded body 931, the electric wires 91, the second molded body 932 and the first upper holding tool 12a are accommodated, is placed on the upper side of the first lower mold 21a.

Note that the first pressure member 221b and the second pressure member 222b of the second upper mold 22b, and the first pressure member 211a and the second pressure member 212a of the first lower mold 21a are maintained at a "predetermined temperature" with the heating means. The "predetermined temperature" is the same as the "predetermined temperature" in the method for manufacturing the wire harness according to the first embodiment of the present invention.

Then, as shown in Fig. 11, the second upper mold 22b and the first lower mold 21a are brought closer to each other, to set the distance between the first pressure member 111a of the first lower holding tool 11a and the first pressure member 121a of the first upper holding tool 12a and the distance between the second pressure member 112a of the first lower holding tool 11a and the second pressure member 122 of the first upper holding tool 12a to a predetermined distance. That is, the first upper mold 22a and the first lower mold 21a are brought closer to each other such that the shape and the size of the space surrounded by the first pressure member 111a of the first lower holding tool 11a, the second pressure member 112a and the both side walls 113a, the first pressure member 121a and the second pressure member 122a of the first upper holding tool 12a become the shape and the size of the molded covering member 92a. Then, in this state, the first molded body 931 and the second molded body 932 are heated and pressurized.

Then, this state is maintained (i. e. , the heating and the pressurization are continued) for a predetermined period. The "predetermined period" is the same as that in the method for manufacturing the wire harness according to the first embodiment of the present invention.

Note that in this process, whether the pressurization of the first molded body 931 and the second molded body 932 is performed directly with the first upper mold 22a or via the first upper holding tool 12a, is the only difference between the method for manufacturing the wire harness according to the second embodiment of the present invention and the method for manufacturing the wire harness according to the first embodiment of the present invention. That is, the ways of deformation, melting and the like of the first molded body 931 and the second molded body 932 are the same as those in the method for manufacturing the wire harness according to the first embodiment of the present invention.

Note that the heat emitted from the first lower mold 21a is transmitted to the first molded body 931 and the second molded body 932 through the first lower holding tool 11a. The heat emitted from the second upper mold 22b is transmitted to the first molded body 931 and the second molded body 932 through the first upper holding tool 12a. As described above, as the first lower holding tool 11a is formed of a material having a high thermal conductivity and has a structure to easily transmit heat in the vertical direction, the heat emitted from the first lower mold 21a is easily transmitted to the first molded body 931 and the second molded body 932. Similarly, as the first upper holding tool 12a is formed of a material having a high thermal conductivity and has a structure to easily transmit heat in the vertical direction, the heat emitted from the second upper mold 22b is easily transmitted to the first molded body 931 and the second molded body 932. Accordingly, it is not necessary to prolong the above-described "predetermined period".

Next, as shown in Fig. 12, after the elapse of the predetermined period, the second upper mold 22b and the first lower mold 21a are separated, and the predetermined part of the first wire harness 9a (i.e., the predetermined part of the electric wires 91 and the molded covering member 92a), in the state where it is held between the first lower holding tool 11a and the first upper holding tool 12a, is removed from the first lower mold 21a. Then it is cooled in that state. At this time, by holding the first upper holding tool 12a and the first lower holding tool 11a with a clamp or the like, a change of the distance between the first upper holding tool 12a and the first lower holding tool 11a (especially increment in the distance) may be prevented.

Then, in a case where the first non-woven fabric is applied to the first molded body 931 and the second molded body 932, when the temperature of the molded covering member 92a is lower than that of the first temperature band, the predetermined part of the first wire harness 9a is removed from the first upper holding tool 12a and the first lower holding tool 11a. Further, in a case where the second non-woven fabric or the foam is applied to the first molded body 931 and the second molded body 932, when it has a temperature at which plastic deformation by thermoplasticity does not occur, it is removed from the first upper holding tool 12a and the first lower holding tool 11a.

Note that the first lower holding tool 11a and the first upper holding tool 12a are manufactured of a material having a high thermal conductivity and have a structure to easily transmit heat in the vertical direction. Accordingly, the heat of the molded covering member 92a (= the pressurized first molded body 931 and second molded body 932) is quickly released to the outside through the first lower holding tool 11a and the first upper holding tool 12a. Further, when the first lower holding tool 11a and the first upper holding tool 12a are formed of a metal plate or the like and formed by sheet metal working or the like, the thermal storage amount is small, and when they are removed from the second upper mold 22b and the first lower mold 21a, the temperature is immediately lowered. Accordingly, the predetermined part of the first wire harness 9a held between the first lower holding tool 11a and the first upper holding tool 12a, when it is removed from the first lower mold 21a, is not continuously heated with the heat of the first lower holding tool 11a and the first upper holding tool 12a. Accordingly, as it is possible to prevent overheating of the molded covering member 92a, it is possible to easily control the property of the covering member 92a.

The first wire harness 9a is manufactured through the above-described processes. The predetermined part of the first wire harness 9a manufactured by the method for manufacturing the wire harness according to the second embodiment of the present invention has the same structure of that of the predetermined part of the first wire harness 9a manufactured by the method for manufacturing the wire harness according to the first embodiment of the present invention.

According to this structure, the same effects as those of the method for manufacturing the wire harness according to the first embodiment of the present invention can be attained. Further, the following effects can be attained.

When the first molded body 931 and the second molded body 932 are heated and pressurized with the second upper mold 22b and the first lower mold 21a and then the second upper mold 22b and the first lower mold 21a are separated, since the pressure applied to the molded covering member 92a (= the heated and pressurized first molded body 931 and second molded body 932) disappears, the molded covering member 92a is deformed so as to restore the shape and the size before the pressurization in some cases (e.g., a phenomenon corresponding to spring back in plastic processing for metal or the like occurs in some cases). Especially, since the temperature of the central part of the main body 921a of the molded covering member 92a upon heating and pressurization is lower in comparison with that of the surface layer of the main body 921a and the joint member 922a, it is elastic-deformed in some cases. Accordingly, the cross-sectional shape and size of the molded covering member 92a are changed after the molding (especially, the cross-sectional size is increased) in some cases.

According to the method for manufacturing the wire harness according to the second embodiment of the present invention, before the temperature of the predetermined part of the first wire harness 9a removed from the second upper mold 22b and the first lower mold 21a becomes a temperature at which plastic deformation by thermoplasticity does not occur, it is possible to continuously apply a compression force to the molded covering member 92a by the self weight of the first upper holding tool 12a. Accordingly, it is possible to prevent the molded covering member 92a from restoring the size and the shape before the molding. Then, when the temperature of the covering member 92a of the predetermined part of the first wire harness 9a becomes a temperature at which plastic deformation by thermoplasticity does not occur, it is maintained in the molded shape and not deformed. In this manner, it is possible to improve the accuracy of the shape and the size of the first wire harness 9a.

Further, after the pressurization, when the pressure is eliminated while the temperature of the molded covering member 92a is still high (in the state where it is plastic-deformable by thermoplasticity), with the force to restore the initial shape, a pull-off force or the like is applied to the joint member 922a in some cases. Then there is a possibility that the weld strength between the first molded body 931 and the second molded body 932 is lowered or the first molded body 931 and the second molded body 932 are separated in the joint member 922a. Accordingly, the self weight of the first upper holding tool 12a is continuously applied before the temperature of the molded covering member 92a is lowered to a temperature at which plastic deformation by thermoplasticity does not occur (when the first non-woven fabric is applied, at least a temperature lower than the first temperature band). With this arrangement, it is possible to improve the weld strength in the joint member 922a (or prevent degradation of the weld strength) or to prevent or suppress separation between the first molded body 931 and the second molded body 932.

Note that it is possible to more infallibly prevent deformation of the molded covering member 92a by holding the first upper holding tool 12a and the first lower holding tool 11a with a clamp or the like.

Further, after the pressurization, upon separation between the second upper mold 22b and the first lower mold 21a, it is possible to prevent attachment of the second molded body 932 to the second upper mold 22b.

That is, during or immediately after the heating and the pressurization of the first molded body 931 and the second molded body 932, when the first non-woven fabric is applied, the temperature of the surface layers of these members has risen to a temperature equal to or higher than the fusing point of the binder material of the binder fiber, and when the second non-woven fabric or the foam is applied, has risen to the fusing point of the thermoplastic material. Accordingly, the surfaces of these members have viscosity in some cases. Accordingly, in the arrangement without the first upper holding tool 12a, in some cases, upon separation between the second upper mold 22b and the first lower mold 21a, especially the second molded body 932 is adhered to the second upper mold 22b and the first molded body 931 is adhered to the first lower holding tool 11a, and a force to pull-off the second molded body 932 from the first molded body 931 is applied. As a result, there is a possibility of separation between the first molded body 931 and the second molded body 932 and a possibility of reduction of the joint strength.

On the other hand, in the arrangement using the first upper holding tool 12a, upon separation between the second upper mold 22b and the first lower mold 21a, the pull-off force or the like is not applied to the first molded body 931 and the second molded body 932. Accordingly, it is possible to prevent separation between the first molded body 931 and the second molded body 932 and to prevent reduction of joint strength.

Next, the method for manufacturing the wire harness according to a third embodiment of the present invention will be described. The method for manufacturing the wire harness according to the third embodiment of the present invention is a modification of the method for manufacturing the wire harness according to the first embodiment of the present invention and the method for manufacturing the wire harness according to the second embodiment of the present invention, and is a method of capable of improving the joint strength between the first molded body 931 and the second molded body 932. For the sake of convenience of explanation, the wire harness manufactured by the method for manufacturing the wire harness according to the third embodiment of the present invention will be referred to as a "second wire harness" 9b.

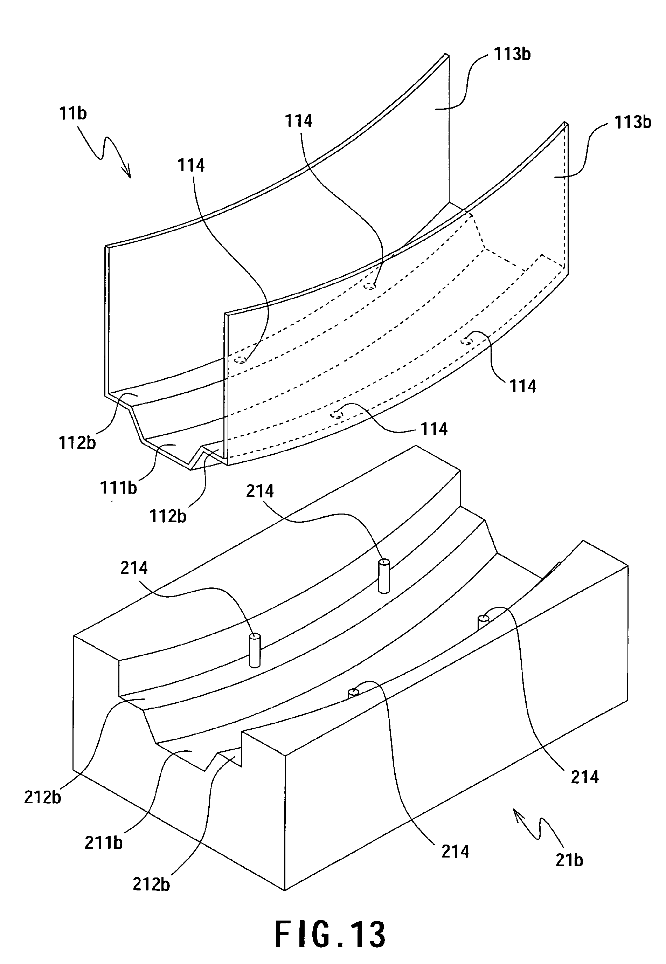

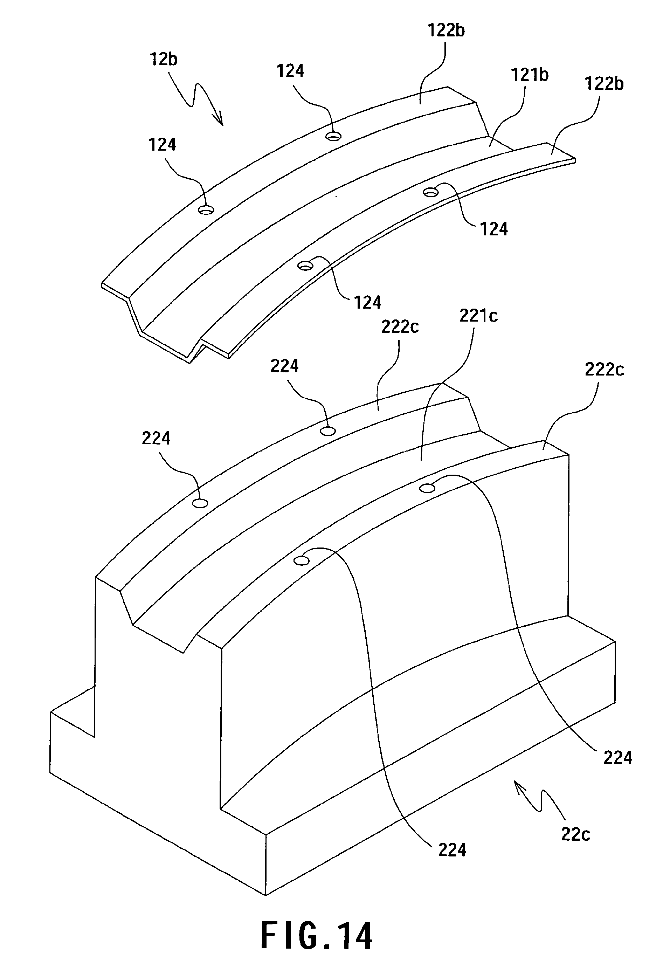

In the method for manufacturing the wire harness according to the third embodiment of the present invention, a third upper mold 22c, a second lower mold 21b, a second upper holding tool 12b and a second lower holding tool 11b are used. Figs. 13 and 14 are diagrams schematically showing structures of tools used in the method for manufacturing the wire harness according to the third embodiment of the present invention. More particularly, Fig. 13 is a perspective diagram schematically showing the structure of the second lower holding tool 11b and an external perspective diagram schematically showing the structure of the second lower mold 21b. Fig. 14 is an external perspective diagram schematically showing the structures of the second upper holding tool 12b and the third upper mold 22c.

As shown in Fig. 13, a first pressure member 211b and a second pressure member 212b are formed in the second lower mold 21b. As these elements, the same elements as those of the first lower mold 21a used in the method for manufacturing the wire harness according to the first embodiment of the present invention are applied. Further, their functions are the same as those in the first lower mold 21a.

The second pressure member 212b is provided with a pressure protrusion 214. The pressure protrusion 214 is a member protruded upward. The shape of this pressure protrusion 214 is not particularly limited. A structure where it is formed in a pin shape or a structure where it is formed in a columnar shape is applicable. Further, it is not necessarily has a vertically long shape but it may have a laterally long shape. Further, the pressure protrusion 214 may be any member as long as it is provided in the second pressure member 212b, and the number or position thereof is not particularly limited.

The second lower holding tool 11b as a whole has the same structure as that of the first lower holding tool 11a. That is, as shown in Fig. 13, it has a first pressure member 111b, a second pressure member 112b and side walls 113b. The first pressure member 111b and the second pressure member 112b of the second lower holding tool 11b respectively have the same functions of the first pressure member 111a and the second pressure member 112a of the first lower holding tool 11a.

A pressure protrusion clearance hole 114 is formed in the first pressure member 112b of the second lower holding tool 11b. The pressure protrusion clearance hole 114 is a through hole formed through in the vertical direction, through which the pressure protrusion 214 of the second lower mold 21b can be inserted. The pressure protrusion clearance hole 114 is formed in correspondence with position and the number of the pressure protrusion 214 of the second lower mold 21b. That is, the pressure protrusion clearance hole 114 is formed such that, in a state where the second lower holding tool 11b is placed on the second lower mold 21b, the lower surface of the second lower holding tool 11b is in contact with the upper surface of the second lower mold 21b without interference by the pressure protrusion 214 with the second lower holding tool 11b.

The third upper mold 22c as a whole has the same structure as that of the second upper mold 22b. As shown in Fig. 14, a first pressure member 221c and a second pressure member 222c are formed in the third upper mold 22c. The first pressure member 221c and the second pressure member 222c of the third upper mold 22c respectively have the same functions as those of the first pressure member 221b and the second pressure member 222b of the second upper mold 22b. Then, a pressure protrusion clearance hole 224 is formed in the second pressure member 222c. The pressure protrusion clearance hole 224 is a concave member (or may be a through hole) in which the end of the pressure protrusion 214 of the second lower mold 21b is loosely inserted.

The second upper holding tool 12b as a whole has the same structure as that of the first upper holding tool 12a. As shown in Fig. 14, a first pressure member 121b and a second pressure member 122b are formed in the second upper holding tool 12b. The first pressure member 121b and the second pressure member 122b of the second upper holding tool 12b respectively have the same functions of those of the first pressure member 121a and the second pressure member 122a of the first upper holding tool 12a. Then a pressure protrusion clearance hole 124 is formed in the second pressure member 122b. The pressure protrusion clearance hole 124 is a through hole formed through in the vertical direction, in which the end of the pressure protrusion 214 of the second lower mold 21b is loosely inserted.

The pressure protrusion clearance hole 224 of the third upper mold 22c and the pressure protrusion clearance hole 124 of the second upper holding tool 12b are formed in correspondence with position and the number of the pressure protrusion 214 of the second lower mold 21b. That is, when the third upper mold 22c and the second lower mold 21b are brought closer to each other in a state where the second lower holding tool 11b is placed on the third lower mold 21b, the end of the pressure protrusion 214 of the second lower mold 21b is inserted in the pressure protrusion clearance hole 224 of the third upper mold 22c and the pressure protrusion clearance hole 124 of the second upper holding tool 12b. Note that inner diameters of the pressure protrusion clearance hole 114 of the second lower holding tool 11b, the pressure protrusion clearance hole 224 of the third upper mold 22c and the pressure protrusion clearance hole 124 of the second upper holding tool 12b are formed to be diameters to enable the loose insertion of the pressure protrusion 214 of the second lower mold 21b.

The contents of the processes of the method for manufacturing the wire harness according to the third embodiment of the present invention are as follows. Note that parts corresponding to those in the method for manufacturing the wire harness according to the second embodiment of the present invention will be omitted in some cases.

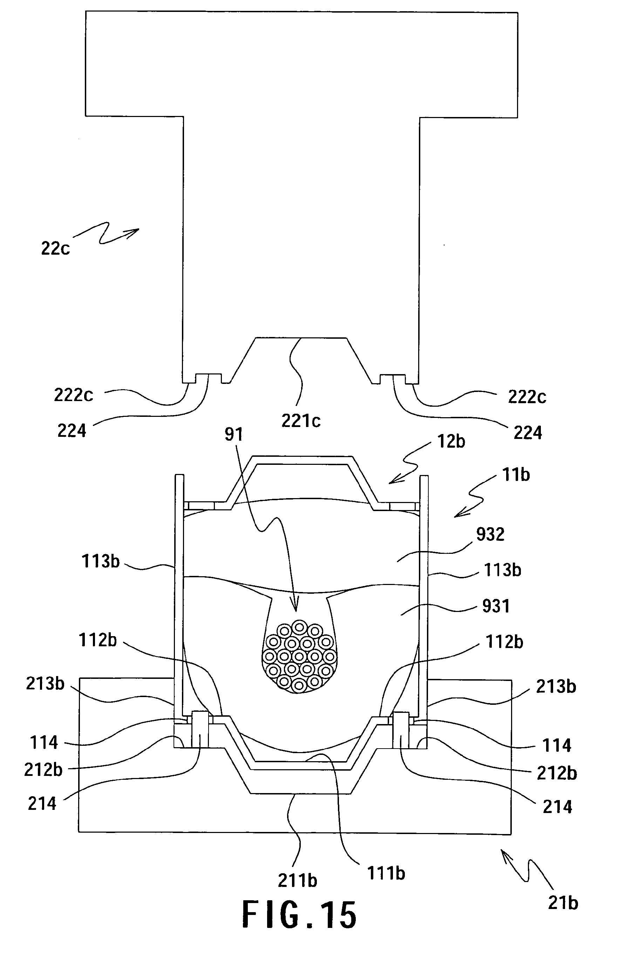

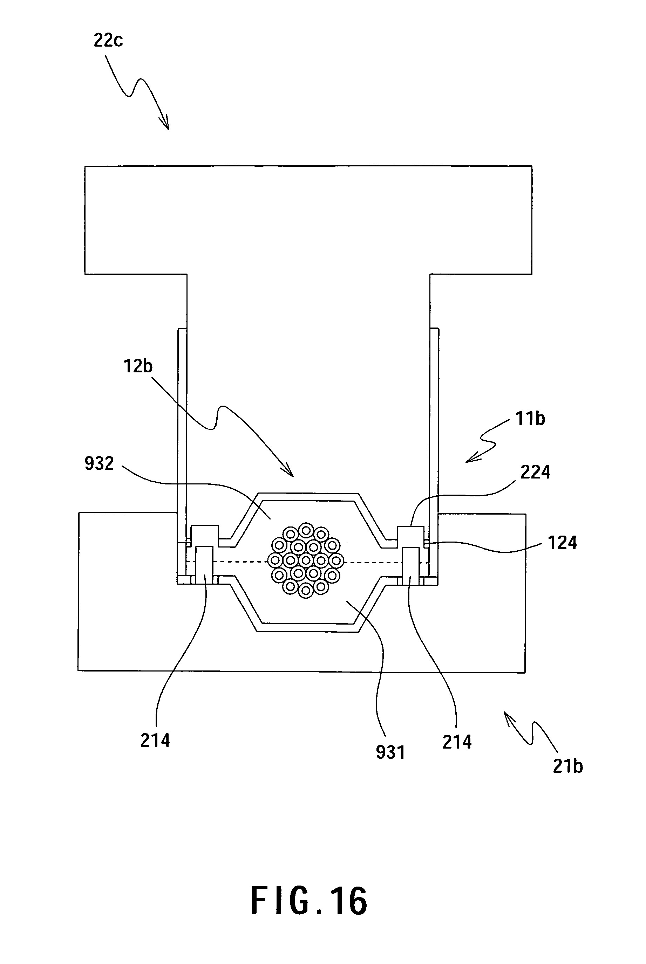

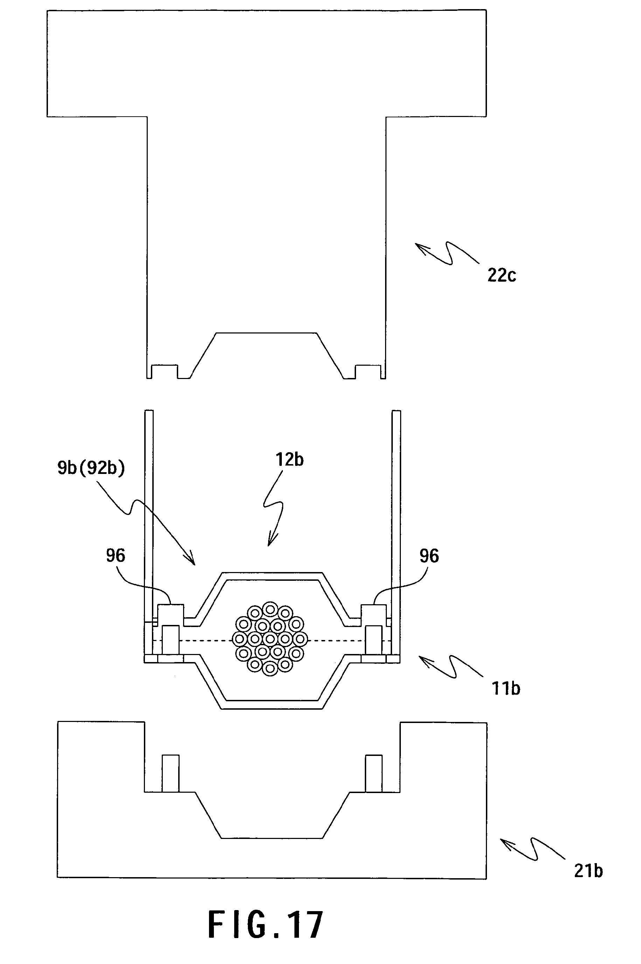

Figs. 15 to 17 are cross-sectional diagrams schematically showing predetermined processes of the method for manufacturing the wire harness according to the third embodiment of the present invention. Respectively, Fig. 15 is a diagram showing a state where the second upper holding tool 12b and the second lower holding tool 11b, in which the first molded body 931, the predetermined part of the electric wires 91 and the second molded body 932 are provided, is placed on the second lower mold 21b. Fig. 16 is a diagram showing a state where the first molded body 931, the predetermined part of the electric wires 91 and the second molded body 932 are pressurized with the third upper mold 22c and the second lower mold 21b. Fig. 17 is a diagram showing a state where the predetermined part of the manufactured the second wire harness 9b of the present invention, in a state where it is held between the second upper holding tool 12b and the second lower holding tool 11b, is removed from the third upper mold 22c and the second lower mold 21b.

First, as shown in Fig. 15, the first molded body 931, the electric wires 91 and the second molded body 932 are accommodated between the both side walls 113b of the second lower holding tool 11b. Then, the second upper holding tool 12b is provided between the both side walls 113b of the second lower holding tool 11b so as to cover the first molded body 931, the predetermined part of the electric wires 91 and the second molded body 932. The way of accommodation of these members is the same as that in the method for manufacturing the wire harness according to the second embodiment of the present invention. Further, the sizes of the first molded body 931 and the second molded body 932 are the same as those in the method for manufacturing the wire harness according to the second embodiment of the present invention. Accordingly, the explanations thereof will be omitted.

Next, the second lower holding tool 11b, in which the first molded body 931, the electric wires 91, the second molded body 932 and the second upper holding tool 12b are accommodated, is placed on the second lower mold 21b . Then, as shown in Fig. 16, the third upper mold 22c and the second lower mold 21b are brought closer to each other, and the first molded body 931 and the second molded body 932 are heated and pressurized. These processes are the same as those of the method for manufacturing the wire harness according to the second embodiment of the present invention.

In this process, the pressure protrusion 214 of the second lower mold 21b is engaged in the first molded body 931 through the pressure protrusion clearance hole 114 of the second lower holding tool 11b. Then, the first molded body 931 pressurized with the pressure protrusion 214 is engaged with the second molded body 932. Further, the first molded body 931 and the second molded body 932, pressurized with the pressure protrusion 214, enter the inside of the pressure protrusion clearance hole 124 of the second upper holding tool 12b and the pressure protrusion clearance hole 224 of the third upper mold 22c.

Then, this state is maintained (i.e. , the heating and the pressurization are continued) for a "predetermined period". The "predetermined period" is the same as that in the method for manufacturing the wire harness according to the first embodiment of the present invention.

Note that inthis process, the ways of deformation, melting and the like of the first molded body 931 and the second molded body 932 are the same as those in the method for manufacturing the wire harness according to the first embodiment of the present invention.

Next, as shown in Fig. 17, after the elapse of the predetermined period, the third upper mold 22c and the second lower mold 21b are separated, the predetermined part of the second wire harness 9b (= the molded covering member 92b and the predetermined part of the electric wires 91) , in the state where it is held between the second upper holding tool 12b and the second lower holding tool 11b, is removed from the second lower mold 21b. Then, it is cooled in that state. Then, when the temperature of the covering member 92b molded in the predetermined part of the second wire harness 9b becomes a temperature at which deformation by thermoplasticity does not occur, it is removed from the second upper holding tool 12b and the second lower holding tool 11b.

The second wire harness 9b is manufactured through the above-described processes.

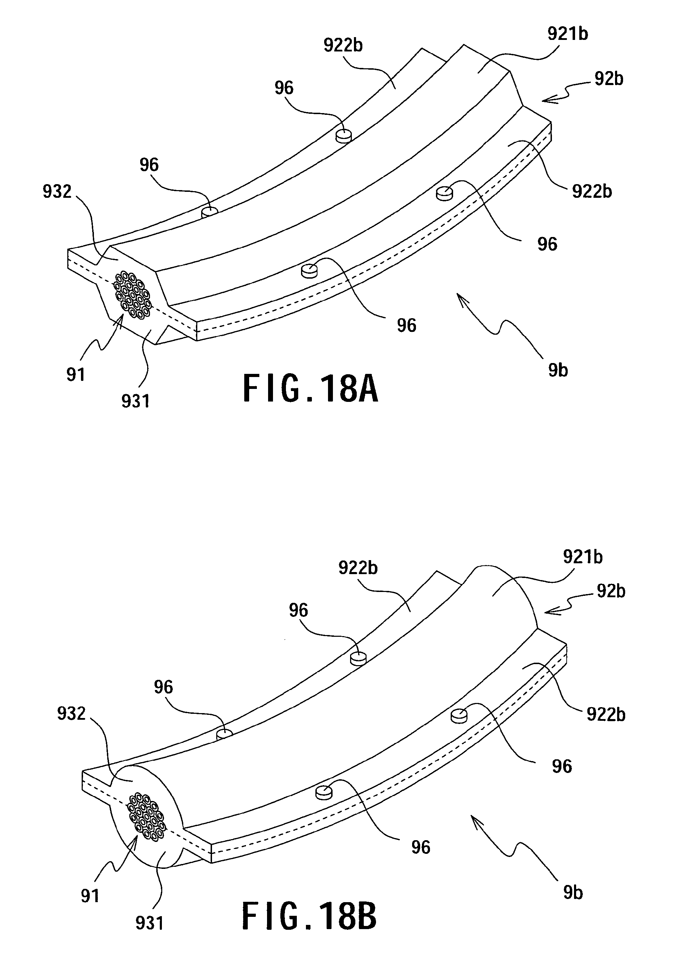

Fig. 18 is an external perspective diagram schematically showing the structure of the predetermined part of the second wire harness 9b. As shown in Fig. 18, the predetermined part of the second wire harness 9b has a structure where the predetermined part of the electric wires 91 is covered with the covering member 92b. Fig. 18 (a) shows a structure where a main body 921b is formed to have an approximately hexagonal cross-sectional shape, and Fig. 18 (b) shows a structure where the main body 921b is formed to have an approximately circular cross-sectional shape. The covering member 92b of the second wire harness 9b has the main body 921b and a joint member 922b. The main body 921b and the joint member 922b respectively have approximately the same structures of those of the main body 921a and the joint member 922a of the first wire harness 9a.

The first molded body 931 and the second molded body 932, pressurized with the pressure protrusion 214 of the second lower mold 21b and set into the pressure protrusion clearance hole 124 of the second upper holding tool 12b and the pressure protrusion clearance hole 224 of the third upper mold 22c, form a protrusion 96 in one surface of the joint member 922b of the covering member 92b of the second wire harness 9b. Note that a concave member as an obliterate of pressurization with the pressure protrusion 214 of the second lower mold 21b is formed in the other surface of the joint member 922b (hidden in Fig. 18).

According to the method for manufacturing the wire harness according to the third embodiment of the present invention, it is possible to attain the same effects as those in the method for manufacturing the wire harness according to the first embodiment of the present invention or the method for manufacturing the wire harness according to the second embodiment of the present invention. Further, since the first molded body 931 pressurized with the pressure protrusion 214 is engaged with the second molded body 932, in the engaged spot, the joint strength between the first molded body 931 and the second molded body 932 is improved. Note that in the method for manufacturing the wire harness according to the third embodiment of the present invention, the second upper holding tool 12b is used. However, it may be arranged such that the second upper holding tool 12b is not used. That is, it may be applied to the method for manufacturing the wire harness according to the first embodiment of the present invention.

Next, the method for manufacturing the wire harness according to a fourth embodiment of the present invention will be described. The method for manufacturing the wire harness according to the fourth embodiment of the present invention enables manufacturing of a wire harness in which the predetermined part of the electric wires 91 is covered with a shield material 970. Note that for the sake of convenience of explanation, the wire harness manufactured by the method for manufacturing the wire harness according to the fourth embodiment of the present invention will be referred to as a "third wire harness" 9c. As the process of heating and pressurizing the first molded body 931 and the second molded body 932 in the method for manufacturing the wire harness according to the fourth embodiment of the present invention, the same method as that in any of the methods for manufacturing the wire harness according to the first to third embodiments of the present invention is applied. Accordingly, the same tools are used.

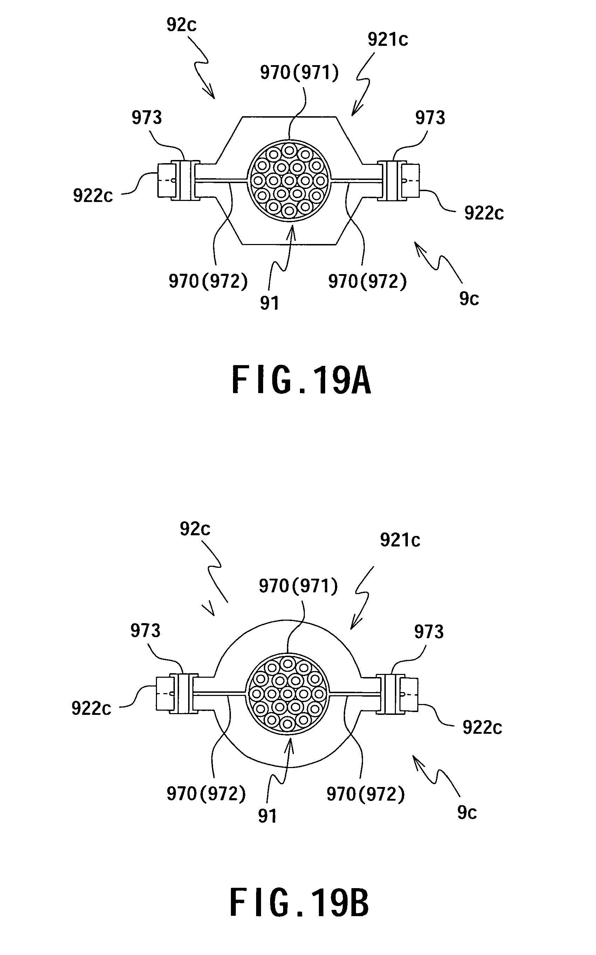

Fig. 19 is a cross-sectional diagram schematically showing a cross-sectional structure of the predetermined part of the third wire harness 9c. Fig. 19 (a) shows a structure where a main body 921c of a covering member 92c is formed to have an approximately hexagonal cross-sectional shape, and Fig. 19(b) shows a structure where the main body 921c of the covering member 92c is formed to have an approximately circular cross-sectional shape. As shown in Figs. 19(a) and 19(b), the predetermined part of the third wire harness 9c has the shield material 970 to shield the predetermined part of the electric wires 91, the covering member 92c covering the predetermined part of the electric wires 91 and the periphery of the shield material 970, and a tieback member 973.

As shown in Fig. 19, the predetermined part of the electric wires 91 and the covering member 92c have the main body 921c and a joint member 922c. These elements are the same as those of the electric wires 91 and the covering members 92a and 92b in the first wire harness 9a or the second wire harness 9b. The shield material 970 has a main body 971 and an extension part 972. The main body 971 of the shield material 970 is a part which covers the predetermined part of the electric wires 91. The extension part 972 of the shield material 970 is a part which is electrically continuous with the main body 971 and which extends outward from the main body 971. As the shield material 970, foil formed of a conductive material (e.g. , metal such as aluminum, copper or brass), a metal plate, a tape, a braid, a net or the like, is applicable. As the tieback member 973, an eyelet (ring metal tool) formed of a conductor is applicable.

The content of the processes of the method for manufacturing the wire harness according to the fourth embodiment of the present invention are as follows. First, the outer periphery of the predetermined part of the electric wires 91 is covered with the shield material 970. For example, an arrangement where an aluminum tape is wrapped around the outer periphery of the predetermined part of the electric wires 91 and the extension part 972 is formed with the aluminum tape, or the like, is applicable.

Then, the same method as any of the methods for manufacturing the wire harness according to the first to third embodiments of the present invention is applied to the predetermined part of the electric wires 91 covered with the shield material 970, to manufacture the predetermined part of the third wire harness 9c. Note that upon pressurization of the first molded body 931 and the second molded body 932, the extension part 972 of the shield material 970 is held between the first molded body 931 and the second molded body 932. According to this arrangement, a structure where the extension part 972 of the shield material 970 is embedded inside the joint member 922c is obtained.

Then, a through hole is formed through the extension part 972 of the shield material 970 embedded in the joint member 922c and the joint member 922c, and the tieback member 973 is attached to the through hole. Note that it may be arranged such that a protrusion is provided in the first to third upper molds 22a, 22b and 22c or the first to second lower molds 21a and 21b, and a through hole is formed with this protrusion upon pressurization of the first molded body 931 and the second molded body 932.

The third wire harness 9c is manufactured through these processes.

In the method for manufacturing the wire harness according to the fourth embodiment of the present invention, it is possible to attain the same effects as those in any of the methods for manufacturing the wire harness according to the first to third embodiments of the present invention. Further, when the tieback member 973 is attached to the through hole, the extension part 972 of the shield material 970 and the tieback member 973 are brought into contact and electrically continuous. Accordingly, by connecting the tieback member 973, it is possible to ground the shield material 970.

Next, the method for manufacturing the wire harness according to a fifth embodiment of the present invention and the method for manufacturing the wire harness according to a sixth embodiment of the present invention will be described. In the method for manufacturing the wire harness according to the first embodiment to fourth embodiment, the covering members 92a, 92b and 92c are formed with the two molded body, the first molded body 931 and the second molded body 932, whereas in the method for manufacturing the wire harness according to the fifth embodiment of the present invention and the method for manufacturing the wire harness according to the sixth embodiment of the present invention, a covering member 92d is formed with one molded body. For the sake of convenience of explanation, this one molded body will be referred to as a "third molded body" 933, and the wire harness manufactured by the method for manufacturing the wire harness according to the fifth embodiment of the present invention and the method for manufacturing the wire harness according to the sixth embodiment of the present invention will be referred to as a "fourth wire harness" 9d.

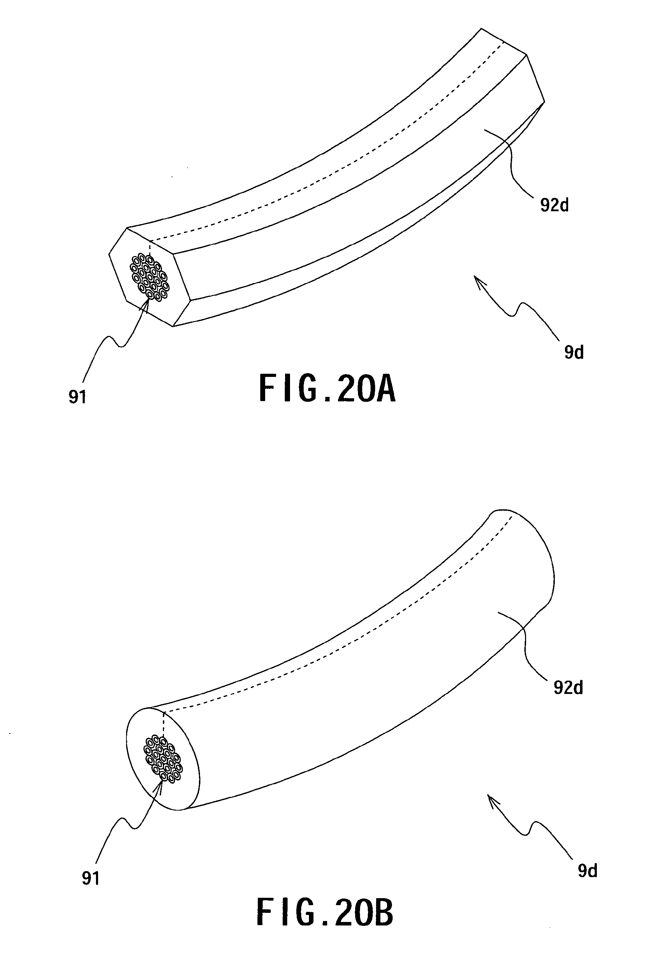

Fig. 20 is an external perspective diagram showing the predetermined part (= the part in which the covering member 92d is provided) of the fourth wire harness 9d. Respectively, Fig. 20 (a) shows a structure where the covering member 92d is formed to have an approximately hexagonal cross-sectional shape, and Fig. 20(b) shows a structure where the covering member 92d is formed to have an approximately circular cross-sectional shape. The entire structure of the fourth wire harness 9d is the same as that of the first wire harness 9a. That is, as shown in Fig. 20, the predetermined part of the fourth wire harness 9d has a structure where the covering member 92d is provided in the predetermined part of the electric wires 91.

The covering member 92d is a part which covers the predetermined part of the electric wires 91. The covering member 92d of the fourth wire harness 9d has the same function as that of the main body 921a of the covering member 92a of the first wire harness 9a.

The covering member 92d has predetermined cross-sectional shape and size and is formed in an approximately bar shape having a predetermined axial shape. The cross-sectional shape and size of the covering member 92d are approximately the same as the shape and the size of the main body 921a of the covering member 92a of the first wire harness 9a. The covering member 92d of the fourth wire harness 9dhas approximately the same structure and property of those of the main bodies 921a, 921b and 921c of the covering members 92a, 92b and 92c of the first to third wire harnesses 9a, 9b and 9c. Note that the covering member 92d of the fourth wire harness 9d does not have a part corresponding to the joint members 922a, 922b and 922c of the covering members 92a, 92b and 92c of the first to third wire harnesses 9a, 9b and 9c.

The covering member 92d is molded by heating and pressurizing a thermoplastic material. As the thermoplastic material, the same material as that of the first molded body 931 and the second molded body 932 is applied.

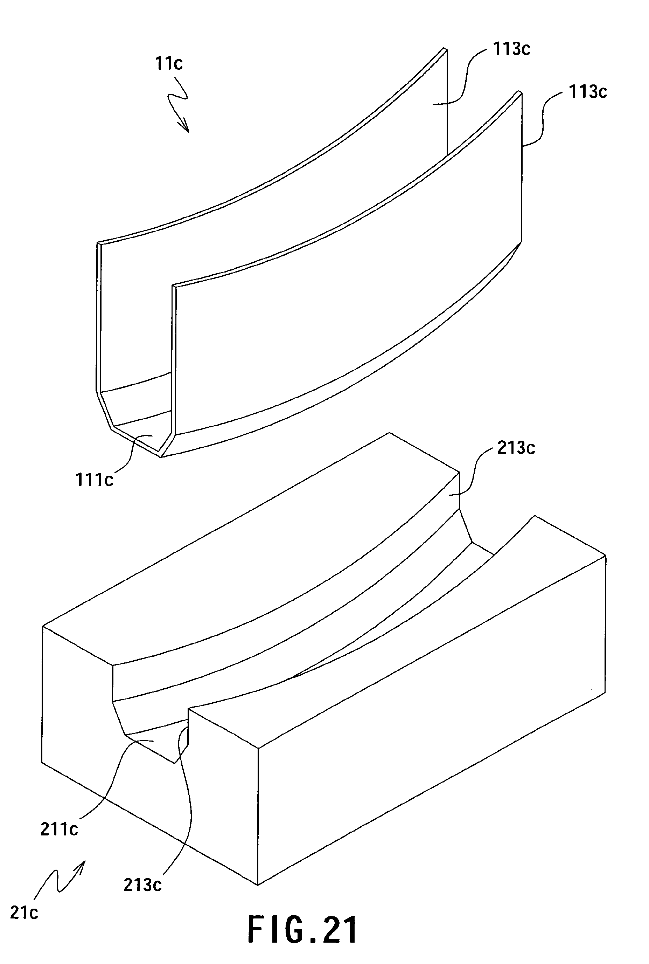

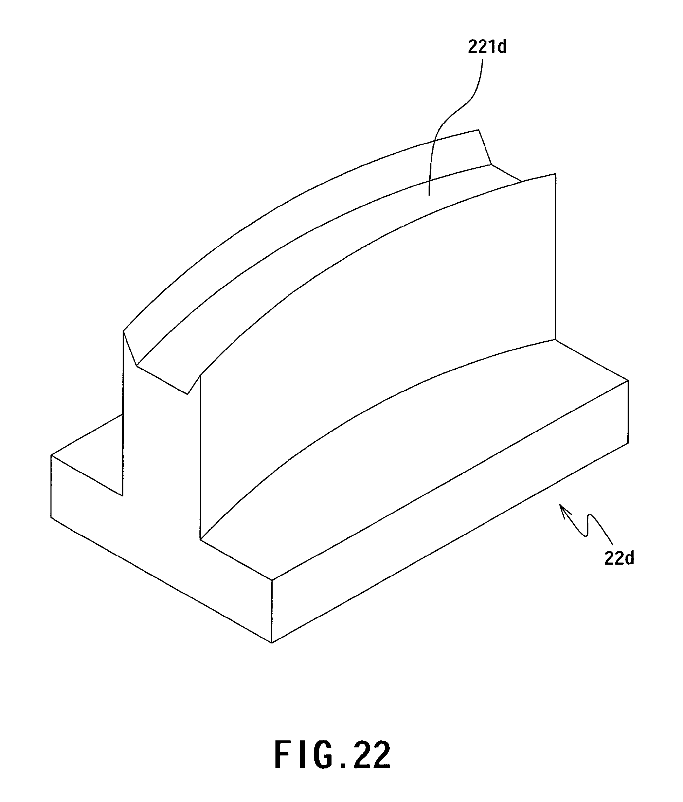

The contents of the processes of the method for manufacturing the wire harness according to the fifth embodiment of the present invention are as follows. In the method for manufacturing the wire harness according to the fifth embodiment of the present invention, a third lower holding tool 11c, and a pair of molds (e.g., metal dies) including a fourth upper mold 22d and a third lower mold 21c are used. Fig. 21 is an external perspective diagram schematically showing the structures of the third lower holding tool 11c and the third lower mold 21c. Fig. 22 is an external perspective diagram schematically showing the structure of the fourth upper mold 22d. Note that in the third lower holding tool 11c and the third lower mold 21c, the upper side in Fig. 21 is the side facing the fourth upper mold 22d. In the fourth upper mold 22d, the upper side in Fig. 22 is the side facing the third lower mold 21c. Hereinbelow, for the sake of convenience of explanation, regarding the third lower holding tool 11c and the third lower mold 21c, the side facing the fourth upper mold 22d will be referred to as the "upper side", and regarding the fourth upper mold 22d, the side facing the third lower mold 21c and the third lower holding tool 11c will be referred to as the "lower side". In Fig. 21, the upper side in the figure is the upper side of the third lower holding tool and the third lower mold 21c, and in Fig. 22, the upper side in the figure is the lower side of the fourth upper mold 22d.

The third lower holding tool 11c is a tool which has a function of molding the covering member 92d and a function of maintaining the predetermined part of the manufactured fourth wire harness 9d (especially, the molded covering member 92d) in a predetermined shape (in other words, preventing unexpected deformation or undesired deformation) and the like in the process of manufacturing the fourth wire harness 9d. The third lower holding tool 11c is a tool corresponding to the first lower mold holding tool 11a used in the method for manufacturing the wire harness according to the first embodiment of the present invention.

A pressure member 111c and side walls 113c are formed on the upper side of the third lower holding tool 11c.

The pressure member 111c of the third lower holding tool 11c is a part corresponding to the first pressure member 111a of the first lower holding tool 11a. The side walls 113c of the third lower holding tool 11c are parts corresponding to the side walls 113a of the first lower holding tool 11a. The third lower holding tool 11c does not have a part corresponding to the second pressure member 112a of the first lower holding tool 11a.

The pressure member 11c of the third lower holding tool 11c is a part to mold the covering member 92d. The pressure member 111c of the third lower holding tool 11c is a groove-shaped concave member which is capable of accommodating the predetermined part of the electric wires 91 and which has shape and size corresponding to the shape and the size of the covering member 92d. That is, the axial shape of the pressure member 111c of the third lower holding tool 11c is a shape approximately the same as the axial shape of the molded covering member 92d, and the cross-sectional shape and size (here, the cross section cut along a direction approximately orthogonal to the axial line) of the pressure member 111c are approximately the same as one of shapes obtained by dividing the cross-sectional shape of the covering member 92d by two.

For example, as shown in Fig. 20(a), when the axial line of the covering member 92d is bended in an arc shape, and its cross-sectional shape is formed in an approximately hexagonal shape, the axial shape of the pressure member 111c of the third lower holding tool 11c has an axial shape bended in an arc shape, and has a groove-shaped structure having an approximately trapezoidal cross-sectional shape obtained by dividing a hexagon by two. That is, it is a structure where an approximately flat-surface bottom surface and a slope rising from the both sides of the bottom surface toward the upper side at a predetermined angle to the bottom surface are formed. Further, as shown in Fig. 20 (b) , when the covering member 92d formed to have an approximately circular cross-sectional shape, the pressure member 111c of the third lower holding tool 11c has a groove-shaped structure having an approximately semicircular cross-sectional shape.

The side walls 113c of the third lower holding tool 11c is a part to hold the third molded body 933 before and in the process of pressurizing to mold the third molded body 933. The side walls 113c of the third lower holding tool 11c are plate-shaped or fold-shaped parts protruded upward and provided along the pressure member 11c on the both outer sides of the pressure member 111c of the third lower holding tool 11c. Accordingly, the two side walls 113c face each other holding the pressure member 111c therebetween and a predetermined distance therebetween.

In this manner, the third lower holding tool 11c as a whole has a groove-shaped structure having an approximately "U" cross-sectional shape.

The third lower holding tool 11c is formed of a material having a high thermal conductivity and has a structure where the thermal storage amount is small (i.e. , to easily follow the ambient temperature change). Especially, it has a structure to easily transmit heat in the vertical direction. More particularly, it is formed of e.g. a thin metal plate or the like, and is formed by sheet metal working or the like. When it is formed of a thin metal plate or the like, it is possible to easily transmit heat in the vertical direction (the thickness direction of the metal plate). Further, since the mass of the third lower holding tool can be reduced, the thermal storage amount can be reduced. Further, the pressure member 111c and the side walls 113c are integrally formed from one metal plate by sheet metal working or the like. When the pressure member 111c and the side walls 113c are integrally formed from one metal plate or the like, it is not necessary to build parts as separate bodies. Accordingly, in comparison with the arrangement where parts as separate bodies are built, it is possible to prevent rise of the costs of the parts of the third lower holding tool 11c and the manufacturing cost. Further, it is possible to reduce the labor of manufacturing of the third lower holding tool 11c.

The shape of the lower side of the third lower holding tool 11c is not particularly limited. When the third lower holding tool 11c is formed by sheet metal working or the like, a convex member having size and shape corresponding to the size and the shape of the pressure member 111c formed on the upper side is formed on the lower side of the third lower holding tool 11c.

The third lower mold 21c is a member to heat and pressurize, along with the fourth upper mold 22d, the third molded body 933 via the third lower holding tool 11c, to mold the covering member 92d. That is, it pressurizes the third molded body 933 to cause plastic deformation into the covering member 92d having a predetermined cross-sectional shape. A pressure member 221c and a support member 213c are provided on the upper side of the third lower mold 21c. The third lower mold 21c has a structure where the third lower holding tool 11c is placed on its upper side.

The pressure member 211c of the third lower mold 21c is a part corresponding to the first pressure member 211a of the first lower mold 21a. Note that the third lower mold 21c does not have a part corresponding to the second pressure member 212a of the first lower mold 21a used in the method for manufacturing the wire harness according to the first embodiment of the present invention.

The pressure member 211c of the third lower mold 21c is a part capable of, in the state where the third lower holding tool 11c is placed on the upper side of the third lower mold 21c, accommodating the lower side of the pressure member 111c of the third lower holding tool 11c, and a part in contact with the lower surface of the pressure member 111c of the third lower holding tool 11c (= the surface of the convex member corresponding to the pressure member 111c). Accordingly, the pressure member 211c of the third lower mold 21c has size and shape approximately the same as the shape and the size of the lower surface of the pressure member 111c of the third lower holding tool 11c. For example, as shown in Fig. 21, when the lower side of the pressure member 111c of the third lower holding tool 11c has an approximately trapezoidal shape, the pressure member 211c of the third lower mold 21c is formed into a groove shape having an approximately trapezoidal cross-sectional shape. Further, when the lower surface of the pressure member 11c of the third lower holding tool 11c has an approximately semicircular cross-sectional shape, the pressure member 211c of the third lower mold 21c is formed to a groove shape having an approximately semicircular cross-sectional shape.

The support member 213c is a part having a function of supporting the third lower holding tool 11c, placed on the upper side of the third lower mold 21c, from moving, easily falling, or easily being removed from the upper side of the third lower mold 21c. It has the same structure as that of the support members 213a of the first lower mold 21a corresponding to the first lower holding tool 11a. Accordingly, the explanation thereof will be omitted. The support member 213c of the third lower mold 21c shown in Fig. 21 has a size smaller than the height of the side walls 113c of the third lower holding tool 11c. With this size, it is possible to support a part of the lower side of the third lower holding tool 11c.

In this manner, the upper side of the third lower mold 21c has a structure where a "groove" having a predetermined axial shape is formed. That is, the support member 213c corresponds to the side surface of the "groove", and the pressure member 211c corresponds to the bottom surface of the "groove" . Then the entirety or a part of the lower side of the third lower holding tool 11c can be removably fitted in the "groove". When the third lower holding tool 11c is fitted in the groove, the lower surface of the pressure member 111c of the third lower holding tool 11c is in contact with the bottom surface of the "groove" (= the pressure member 211c), and the entirety or a part of the outer surface of the side walls 113a of the third lower holding tool (= a part on the lower side) is in the vicinity of or in contact with the side surface (= the support member 213c) of the "groove".

The third lower mold 21c has an unshown heating means. Then, it is possible to maintain the pressure member 211c at a "predetermined temperature" with the heating means. The "predetermined temperature" and the heating means are the same as those of the first lower mold 11a.

The fourth upper mold 22d is a tool to heat and pressurize to mold, along with the third lower mold 21c and the third lower holding tool 11c, the third molded body 933.

The entirety or a part of the lower side of the fourth upper mold 22d has a structure to be fitted between the both side walls 113c of the third lower holding tool 11c. That is, the fourth upper mold 22d has a part which is formed to have a predetermined axial shape (= the same shape as the axial shape of the third lower holding tool 11c) and which has a widthwise direction (=size in the direction orthogonal to the axial line) to be loosely inserted between the both side walls 113c of the third lower holding tool 11c. For example, the fourth upper mold 22d has a part formed in a size approximately the same as or slightly smaller than the size of the interval between the both side walls 113c of the third lower holding tool 11c. Otherwise, the entire fourth upper mold 22d is formed in the size and the shape as described above. In the fourth upper mold 22d shown in Fig. 22, a part of the lower side has size and shape to be fitted between the side walls 113c of the third lower holding tool 11c.

A pressure member 221d is formed on the lower side of the fourth upper mold 22d. The pressure member 221d of the fourth upper mold 22d is a part to mold the covering member 92d, and is a groove-shaped concave member capable of accommodating the predetermined part of the electric wires 91. The pressure member 221d of the fourth upper mold 22d is a part corresponding to the first pressure member 221a of the first upper mold 22a. The axial shape of the pressure member 221d of the fourth upper mold is formed to a shape corresponding to the axial shape of the predetermined part of the fourth wire harness 9d according to the embodiment of the present invention (= approximately the same shape). The cross-sectional shape and size of the pressure member 221d of the fourth upper mold 22d are formed to shape and size corresponding to the cross-sectional shape and size of the covering member 92d. That is, they are formed to approximately the same shape and size as the other one of the shapes obtained by dividing the covering member 92d by two. For example, when the cross-sectional shape of the covering member 92d is an approximately hexagonal shape as shown in Fig. 20(a), the pressure member 221d of the fourth upper mold 22d has an approximately trapezoidal groove-shaped structure (= has a groove-shaped structure having an approximately flat-surface bottom surface and a slope rising from the both sides of the bottom surface toward the upper side at a predetermined angle to the bottom surface). As shown in Fig. 20 (b), when it has an approximately circular shape, the pressure member 221d has a groove-shape structure having an approximately semicircular cross-sectional shape.

The fourth upper mold 22d has unshown heating means. Then it is possible to maintain the pressure member 221d of the fourth upper mold 22 at a "predetermined temperature". The "predetermined temperature" is the same as that of the first lower mold 21a. Further, as the heating means, the same heating means as that of the first lower mold 21a is applicable. Accordingly, the explanation thereof will be omitted.

Then, when the third lower holding tool 11c is placed on the upper side of the third lower mold 21c, and in that state, the fourth upper mold 22d and the third lower mold 21c are brought closer to each other, the entirety or a part of the lower side of the fourth upper mold 22d can be removably inserted between the both side walls 113c of the third lower holding tool placed on the third lower mold 21c. Then, the pressure member 111c of the third lower holding tool and the pressure member 221d of the fourth upper mold 22d face each other with a predetermined interval therebetween. Then, in the state where the fourth upper mold 22d and the third lower mold 21c are closer to each other with the predetermined distance therebetween, the shape and the size of space surrounded by the pressure member 111c of the third lower holding tool 11c and the pressure member 221d of the fourth upper mold 22d are the shape and the size of the covering member 92d provided in the predetermined part of the fourth wire harness 9d.

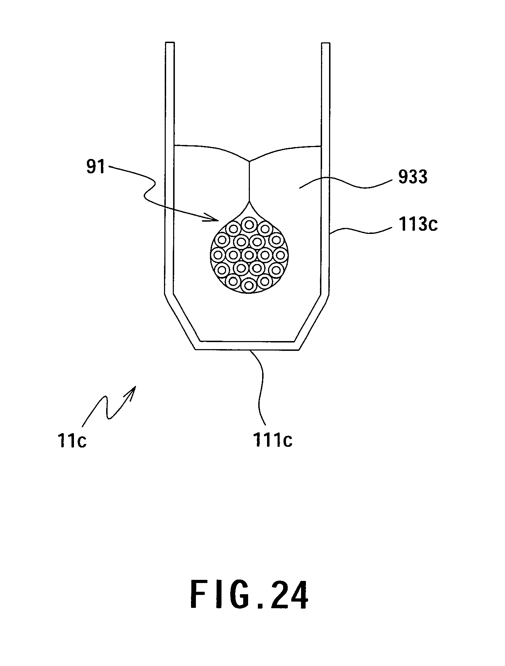

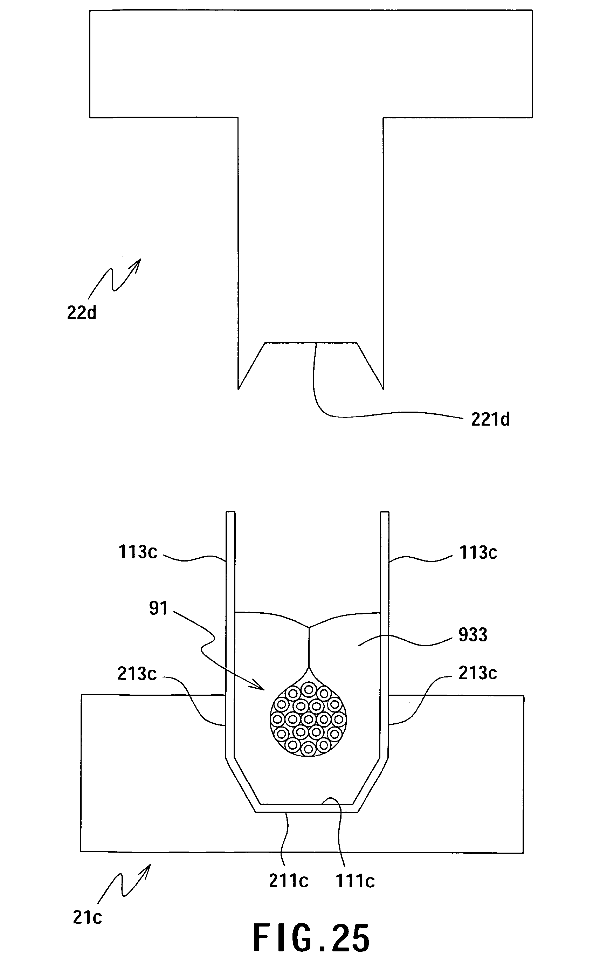

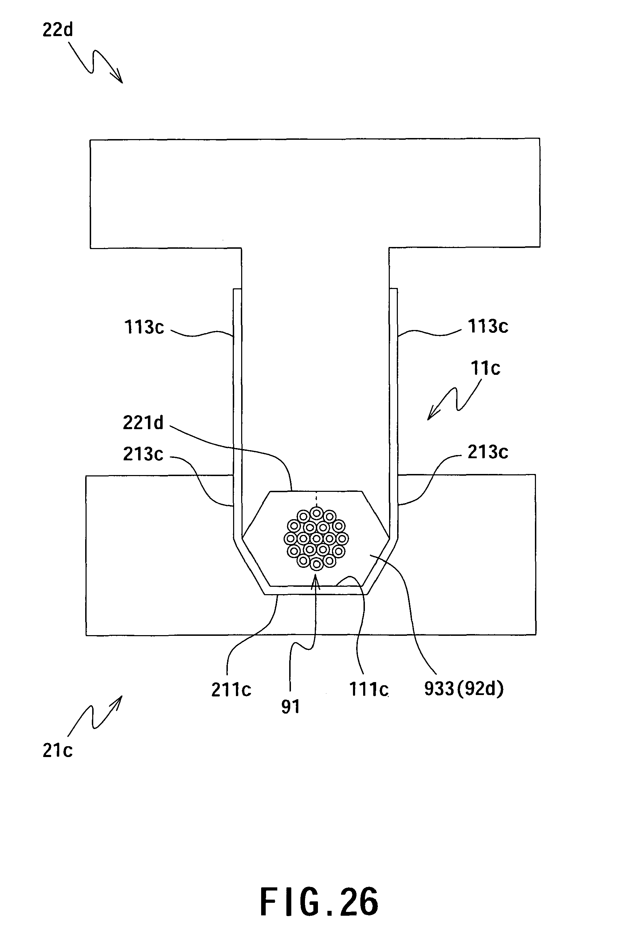

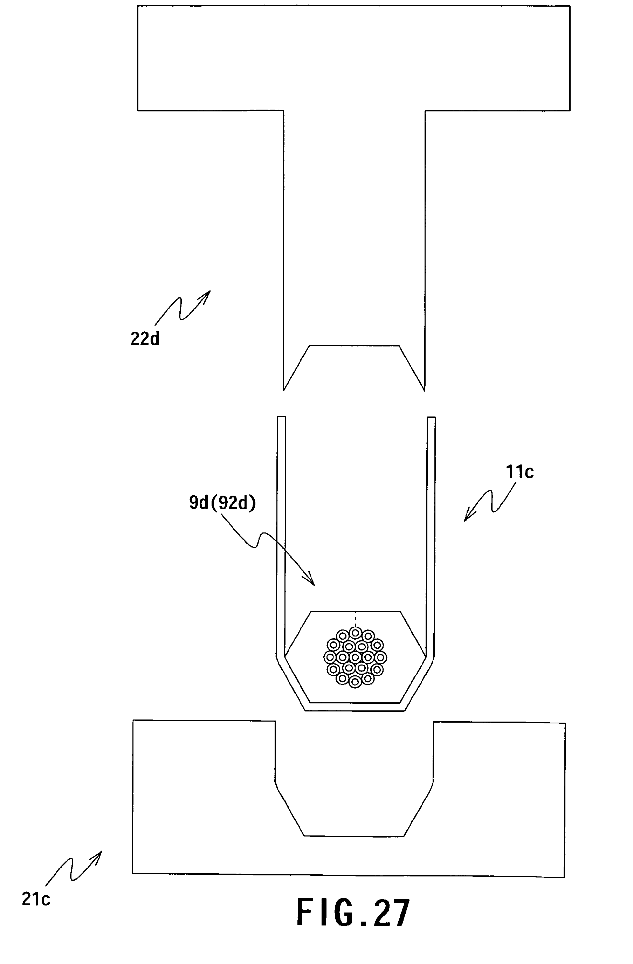

Figs. 23 to 27 are cross-sectional diagrams respectively schematically showing a predetermined process of the method for manufacturing the wire harness according to the fifth embodiment of the present invention. More particularly, Fig. 23 is a diagram showing the structure of the third molded body 933 and a state where the electric wires 91 are wrapped in the third molded body 933. Fig. 24 is a diagram showing a state where the third molded body 933 and the predetermined part of the electric wires 91 are accommodated in the third lower holding tool 11c. Fig. 25 is a diagram showing a state where the third lower holding tool 11c, in which the third molded body 933 and the predetermined part of the electric wires 91 are accommodated, is placed on the third lower mold 21c. Fig. 26 is a diagram showing a state where the third molded body 933 is pressurized with the fourth upper mold 22d and the third lower mold 21c. Fig. 27 is a diagram showing a state where the predetermined part of the manufactured fourth wire harness 9d, in the state where it is placed on the third lower holding tool 11c, is removed from the fourth upper mold 22d and the third lower mold 21c.

As the third molded body 933, as shown in Fig. 23(a), a structure formed in an approximately a flat-plate shape is applicable. Then, the structure formed in the approximately flat-plate shape as shown in Fig. 23(a), is capable of holding (= wrapping) the electric wires 91 when bended in e.g. an approximately "U" shape as shown in Fig. 23 (c). Note that when the third molded body 933 is formed in the approximately flat-plate shape, the third molded body 933 has size and shape such that the size and the shape of a cross-section holding the predetermined part of the electric wires 91 (cross section cut along a surface orthogonal to the axial direction of the predetermined part of the electric wires 91) are larger than the cross-sectional shape and size of the cross section of the molded covering member 92d. Further, a structure to hold (structure to wrap) the predetermined part of the electric wires 91 by bending the third molded body 933 in an approximately "U" shape as well as a structure to wrap the predetermined part of the electric wires 91 by wrapping the third molded body 933 around electric wires 91 may be used.

Further, as shown in Fig. 23(b), as the third molded body 933, a structure which has predetermined cross-sectional shape and size, and in which a slit 9331 is formed from the outer peripheral surface to the center, is applicable. In the arrangement where the third molded body 933 has predetermined cross-sectional shape and size and the slit 9331 is formed, the third molded body 933 has size and shape to accommodate the predetermined part of the electric wires 91 inside the slit 9331 as shown in Fig. 23(d), and has size and shape such that, in the state where the predetermined part of the electric wires 91 is accommodated, the cross-sectional shape and size are larger than the cross-sectional shape and size of the molded the covering member 92d. When the predetermined part of the electric wires 91 is accommodated inside the slit 9331, the predetermined part of the electric wires 91 is wrapped in the third molded body 933.

Then, as shown in Fig. 24, the third molded body 933 holding (or wrapping) the predetermined part of the electric wires 91, or the third molded body 933 in which the predetermined part of the electric wires 91 is inserted in the slit 9331, in that state, is accommodated in a region held between the both size walls 113c of the third lower holding tool 11c.

The size and the shape of the third molded body 933 are larger than the size and the shape of the molded covering member 92d. Accordingly, the third molded body 933 is, in the state where it is accommodated inside the both side walls 113c of the third lower holding tool 11c, is maintained in a state where it is elastic-deformed with the pressure member 111c and the side walls 113c of the third lower holding tool 11c.

Next, as shown in Fig. 25, the third lower holding tool 11c, in which the third molded body 933 and the predetermined part of the electric wires 91 are accommodated, is placed on the upper side of the third lower mold 21c. In this state, the lower surface of the pressure member 111c of the third lower holding tool 11c is in contact with the pressure member 211c of the third lower mold 21c. Then, the entirety or a part of the lower side of the side walls 113c of the third lower holding tool 11c is in the vicinity of or in contact with the support member 213c of the third lower mold 21c. Accordingly, the entirety or a part of the lower side of the third lower holding tool is fitted in the groove formed on the upper side of the third lower mold 21c (= the groove where the support member 213c corresponds to the side surface, and the pressure member 211c corresponds to the bottom surface) . Accordingly, the third lower holding tool 11c placed on the upper side of the third lower mold 21c, is prevented from shifting, easily falling or being removed from the third lower mold 21c.

Note that the pressure member 221d and the pressure member 211c of the third lower mold 21c of the fourth upper mold 22d are maintained at a predetermined temperature with the heating means. The "predetermined temperature" is the same as that in the method for manufacturing the wire harness according to the first embodiment of the present invention.

Next, as shown in Fig. 26, the fourth upper mold 22d and the third lower mold 21c are brought closer to each other, to set the distance between the pressure member 111c of the third lower holding tool 11c and the pressure member 221d of the fourth upper mold 22d to a predetermined distance. That is, the fourth upper mold and the third lower mold 21c are brought closer to each other such that the shape and the size of space surrounded by the pressure member 111c of the third lower holding tool and the pressure member 221d of the fourth upper mold become the shape and the size of the molded covering member 92d, and in this state, the third molded body 933 is molded by heating and pressurization. Then this state is maintained (i.e., the heating and the pressurization are continued) for a predetermined period.

The "predetermined period" is as follows. When the first non-woven fabric is applied to the third molded body 933, it is a period longer than a period in which the temperature of a part of the third molded body 933 to become the surface layer of the covering member 92d rises to the second temperature band and a period in which the temperature of a part to be the central part (= the electric wires 91 and their peripheral part) does not rise to the second temperature band. When the second non-woven fabric or the foam is applied to the third molded body 933, it is a period longer than a period in which, in the third molded body 933, the temperature of a part to be the surface layer of the covering member 92d rises to a temperature around the fusing point of the thermoplastic material and a period in which the temperature of the part to be the central part does not rise to the temperature around the fusing point of the thermoplastic material.

According to this arrangements, the third molded body 933 is heated and pressurized, and becomes the covering member 92d. The temperature and the way of deformation of the third molded body 933 are the same as those of a part of the first molded body 931 and the second molded body 932 to be the main body 921a of the covering member 92a in the method for manufacturing the wire harness according to the first embodiment of the present invention. Accordingly, the central part of the molded covering member 92d has the physical property of the third molded body 933 before the molding. On the other hand, the surface layer of the molded covering member 92d is harder in comparison with the central part, and harder in comparison with the state before the molding. That is, it is the same structure as that of the main body 921a of the covering member 92a in the method for manufacturing the wire harness according to the first embodiment of the present invention.

Then, when the third molded body 933 before the molding is in an approximately plate shape, the ends of the third molded body 933 in the widthwise direction are pressed into contact with pressure applied from the fourth upper mold 22d and the third lower mold 21c. Even when the third molded body 933 before the molding has a structure which has a predetermined cross-sectional shape and size and in which the slit 9331 is formed, the inner surfaces of the slit 9331 are pressed into contact with the pressure applied from the fourth upper mold 22d and the third lower mold 21c.

Upon pressurization, the temperature of a part in the third molded body 933 to be the surface layer of the covering member 92d (= the part in contact with the pressure member 221d of the fourth upper mold 22d and its peripheral part and the part in contact with the pressure member 111c of the third lower holding tool 11c and its peripheral part) has risen to the predetermined temperature. Accordingly, when the first non-woven fabric is applied to the third molded body 933, in the part to be the surface layer of the covering member 92d, the binder material of the binder fiber is melted, and spreads in the contact surfaces of the ends of the third molded body 933 in the widthwise direction or the inner surfaces of the slit 9331. Further, when the second non-woven fabric or the foam is applied, a part of the third molded body 933 is melted. Accordingly, the contact surfaces of the ends of the third molded body 933 in the widthwise direction or the inner surfaces of the slit 9331 are welded.

Note that the heat emitted from the third lower mold 21c is transmitted to the third molded body 933 through the third lower holding tool 11c. As described above, as the third lower holding tool 11c is formed of a material having a high thermal conductivity and has a structure to easily transmit heat in the vertical direction, the heat emitted from the third lower mold 21c is easily transmitted to the third molded body 933. Accordingly, it is not necessary to prolong the above-described "predetermined period".

Next, as shown in Fig. 27, after the elapse of the "predetermined period" , the fourth upper mold 22d and the third lower mold 21c are separated.

Then, the predetermined part of the fourth wire harness 9d (i.e., the molded the covering member 92d and the predetermined part of the electric wires 91), in the state where it is placed on the third lower holding tool 11c, is removed from the third lower mold 21c. Thereafter, the predetermined part of the fourth wire harness 9d, in the state where it is placed on the third lower holding tool 11c, is cooled. Then, in a case where the first non-woven fabric is applied to the third molded body 933, when the temperature of the molded covering member 92d becomes a temperature at which plastic deformation by thermoplasticity does not occur (when the first non-woven fabric is applied to the third molded body 933, a temperature lower than the first temperature band), it is removed from the third lower holding tool 11c . As the cooling method, the same method as that in the method for manufacturing the wire harness according to the first embodiment of the present invention is applicable.

Since the third lower holding tool 11c is formed of a material having a high thermal conductivity and has a structure to easily transmit heat in the vertical direction, the heat of the molded covering member 92d is quickly released to the outside through the third lower holding tool 11c. Further, in the arrangement where the third lower holding tool 11c is formed of a metal plate or the like and formed by sheet metal working or the like (i.e. , in the arrangement where the mass is small), since the thermal storage amount is small, temperature drop is immediately started after the removal of the predetermined part of the fourth wire harness 9d from the third lower mold 21c. Accordingly, the predetermined part of the third wire harness 9c (especially, the molded covering member 92d) placed on the third lower holding tool 11c, when it has been removed from the third lower mold 21c, is not heated by heat of the third lower holding tool 11c. Accordingly, it is possible to prevent overheating of the predetermined part of the fourth wire harness 9d. Accordingly, it is possible to easily control the property of the covering member 92d.

The fourth wire harness 9d is manufactured through the above processes.

The structure and the property of the covering member 92d of the fourth wire harness 9d are approximately the same as those of the main body 921a of the covering member 92a of the first wire harness 9a. Accordingly, the explanations thereof will be omitted.

According to the method for manufacturing the wire harness according to the fifth embodiment of the present invention, it is possible to attain the same effects as those attained by the method for manufacturing the wire harness according to the first embodiment of the present invention. Further, since the covering member 92d is formed from one third molded body 933, in comparison with the arrangement using plural molded bodies , the number of steps of accommodating the third molded body 933 and the electric wires 91 in the third holding tool is smaller.

Next, the method for manufacturing the wire harness according to the sixth embodiment of the present invention will be described. Note that the difference from the method for manufacturing the wire harness according to the fifth embodiment of the present invention will be mainly described, and regarding the corresponding parts, the explanations will be omitted in some cases.

In the method for manufacturing the wire harness according to the sixth embodiment of the present invention, a fifth upper mold 22e, the third lower mold 21c, the third lower holding tool 11c and a third upper holding tool 12c are used. As the third lower mold 21c and the third lower holding tool 11c, the same tools as those used in the method for manufacturing the wire harness according to the fifth embodiment of the present invention are applicable. Accordingly, the explanations thereof will be omitted.

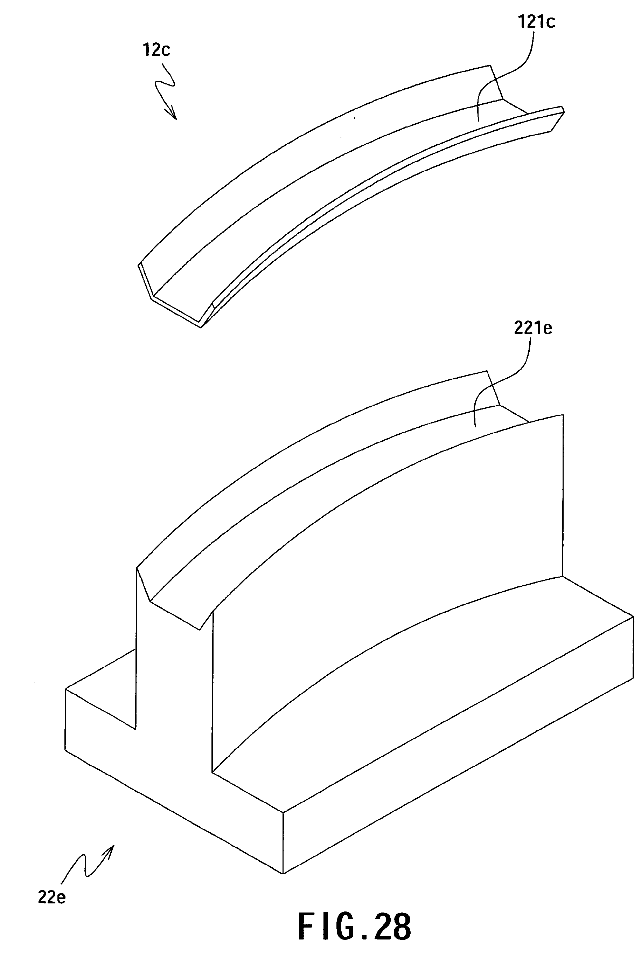

Fig. 28 is an external perspective diagram schematically showing the structures of the fifth upper mold 22e and the third upper holding tool 12c used in the method for manufacturing the wire harness according to the sixth embodiment of the present invention. The upper side in Fig. 28 is the side facing the third lower mold 21c. Hereinbelow, for the sake of convenience of explanation, the upper side in Fig. 28 will be referred to the lower side of the fifth upper mold 22e and the third upper holding tool 12c, and the lower side in Fig. 28 will be referred to as the upper side.

The third upper holding tool 12c is a tool having a function of pressurizing and molding the third molded body 933, a function of maintaining the covering member 92d of the molded fourth wire harness 9d in a predetermined shape (in other words, preventing unexpected deformation or undesired deformation) and the like in the process of manufacturing the fourth wire harness 9d. The third upper holding tool 12c is a tool corresponding to the first upper holding tool 12a used in the method for manufacturing the wire harness according to the second embodiment of the present invention.

A pressure member 121c is formed on the lower side of the third upper holding tool 12c. The pressure member 121c of the third upper holding tool 12c is a part corresponding to the first pressure member 121a of the first upper holding tool 12a.

The pressure member 121c of the third upper holding tool 12c is a part to mold the covering member 92d of the fourth wire harness 9d. The pressure member 121c of the third upper holding tool 12c is a part which is formed in a groove shape capable of accommodating the predetermined part of the electric wires 91, and is formed in shape and size corresponding to the shape and the size of the covering member 92d. That is, the axial shape of the pressure member 121c is approximately the same as the axial shape of the molded the covering member 92d, and the cross-sectional shape and size of the pressure member 121c (here the cross section cut in the direction approximately orthogonal to the axial line) are approximately the same as the other one of the shapes obtained by dividing the cross-sectional shape of the covering member 92d by two.

For example, as shown in Fig. 20(a), when the axial line of the covering member 92d is bended in an arc shape and its cross-sectional shape is an approximately hexagonal shape, the axial line of the pressure member 121c of the third upper holding tool 12c is bended in an approximately arc shape and its cross-sectional shape is an approximately trapezoidal shape obtained by dividing a hexagon by two. That is, it is a structure where an approximately flat-surface bottom surface and a slope rising from the both sides of the bottom surface toward the upper side at a predetermined angle to the bottom surface are formed. Further, as shown in Fig. 20 (b), when a main body 921d of the covering member 92d is formed to have an approximately circular cross-sectional shape, the pressure member 121c has a groove-shaped structure having an approximately semicircular cross-sectional shape.

The third upper holding tool 12c is formed of a material having a high thermal conductivity and has a structure where the thermal storage amount is small. Especially, it has a structure to easily transmit heat in the vertical direction. More specifically, for example, it is formed of a thin metal plate or the like and formed by sheet metal working or the like. When it is formed of a thin metal plate or the like, it easily transmits heat in the vertical direction (the thickness direction of the metal plate). Further, as the mass of the third upper holding tool 12c can be reduced, the thermal storage amount can be reduced.

The shape of the upper side of the third upper holding tool 12c is not particularly limited. When the third upper holding tool 12c is formed by sheet metal working or the like, a convex member corresponding to the pressure member 121c formed on the lower side is formed on the upper side of the third upper holding tool 12c. That is, the cross-sectional shape and size of the third upper holding tool 12c are approximately the same as the other one of the shapes obtained by dividing the cross-sectional shape of the molded covering member 92d by two.

The third upper holding tool 12c is formed in size and shape such that it can be removably inserted in a region held between the both side walls 113c of the third lower holding tool 11c, and in a state where it is fitted there, the pressure member 121c of the third upper holding tool 12c faces the pressure member 111c of the third lower holding tool 11c. For example, the widthwise size of the third upper holding tool 12c is set to a size approximately the same as or slightly smaller than the size of the interval between the both side walls 113c of the third lower holding tool 11c.

The fifth upper mold 22e is a tool which heats and pressurizes to mold, along with the third lower mold 21c and the third lower holding tool 11c, the third molded body 933 via the third upper holding tool 12c. That is, it heats and pressurizes to mold, along with the third lower mold 21c (and the third lower holding tool 11c placed on the upper side of the third lower mold 21c) via the third upper holding tool 12c, the third molded body 933 in a predetermined shape.

The entirety or a part of the lower side of the fifth upper mold 22e has a structure to be fitted between the both side walls 113c of the third lower holding tool 11c. That is, the fifth upper mold 22e has a part formed to have a predetermined axial shape (= the axial shape of the molded covering member 92d) and a widthwise size (= the size in the direction orthogonal to the axial line) to be loosely inserted between the both side walls 113c of the third lower holding tool 11c. For example, the fifth upper mold 22e has a part in a size approximately the same or slightly smaller than the size of the interval between the both side walls 113c of the third lower holding tool 11c. Otherwise, the entire fifth upper mold 22e has shape and size to be fitted between the both side walls 113c of the third lower holding tool 11c. In the fifth upper mold 22e shown in Fig. 28, a part of the lower side has the above-described size and shape.

A pressure member 221e is provided on the lower side of the fifth upper mold 22e. The pressure member 221e is a part in which the upper side of the third upper holding tool 12c can be fitted. Then, when the upper side of the third upper holding tool 12c is fitted, approximately the entire upper side of the third upper holding tool 12c is in contact with the pressure member 221e of the fifth upper mold 22e. Accordingly, the pressure member 221e of the fifth upper mold 22e has size and shape approximately the same as the shape and the size of the upper side of the third upper holding tool 12c. For example, as shown in Fig. 28, when the upper side of the third upper holding tool 12c has an approximately trapezoidal shape, the pressure member 221e has a groove-shaped structure having an approximately trapezoidal cross-sectional shape. Further, when the upper side of the third upper holding tool 12c has an approximately semicircular cross-sectional shape, the pressure member 221e of the fifth upper mold 22e has a groove-shaped structure having an approximately semicircular cross-sectional shape.

The fifth upper mold 22e has unshown heating means. Then, it is possible to maintain the pressure member 221e of the fifth upper mold 22e at a "predetermined temperature" with this heating means. This "predetermined temperature" is the same as that of the first lower mold 21a. Further, as the heating means, the same heating means as that of the first lower mold 21a is applicable. Accordingly, the explanation thereof will be omitted.

Then, when the third lower holding tool 11c is placed on the upper side of the third lower mold 21c, the third upper holding tool 12c is fitted in the fifth upper mold 22e, and in that state, the fifth upper mold 22e and the third lower mold 21c are brought closer to each other (note that actually, the third upper holding tool 12c is moved away and falls from the lower side of the fifth upper mold 22e by its self weight, however, the state where the third upper holding tool 12c is fitted in the fifth upper mold 22e is maintained here), the entirety or a part of the lower side of the fifth upper mold 22e and the third upper holding tool 12c can be fitted between the both side walls 113c of the third lower holding tool 11c placed on the upper side of the third lower mold 21c. Then the pressure member 111c of the third lower holding tool 11c and the pressure member 121c of the third upper holding tool 12c face each other with a predetermined interval therebetween.

Then, in the state where the fifth upper mold 22e and the third lower mold 21c are closer to each other with the predetermined distance therebetween, the shape and the size of space surrounded by the pressure member 111c of the third lower holding tool 11c and the pressure member 121c of the third upper holding tool 12c are the shape and the size of the covering member 92d formed in the predetermined part of the fourth wire harness 9d.

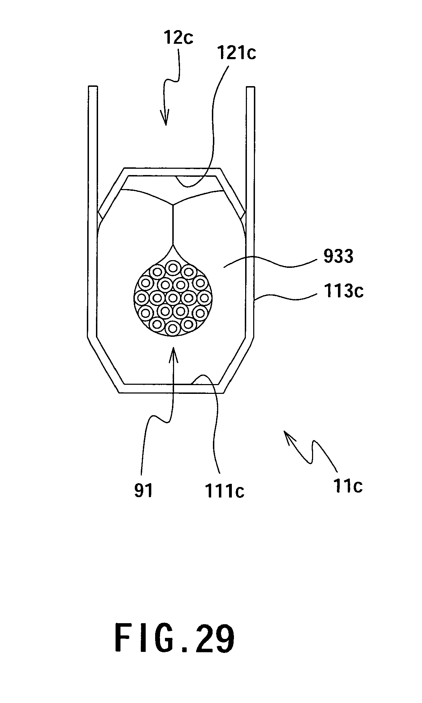

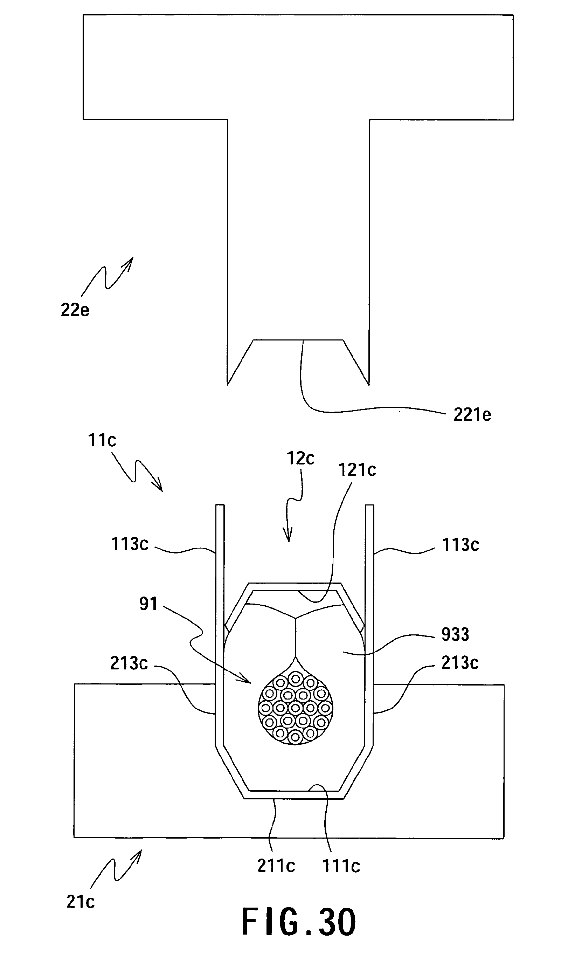

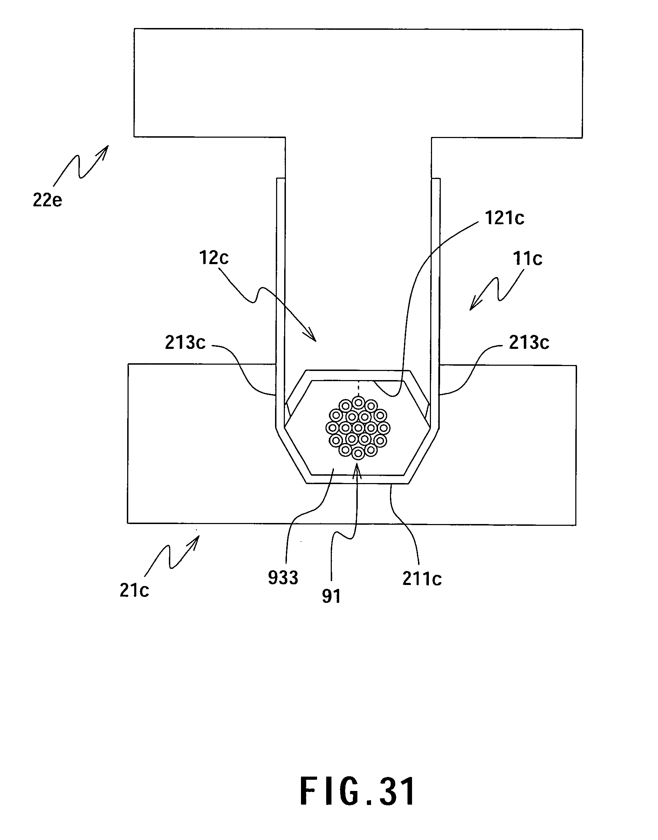

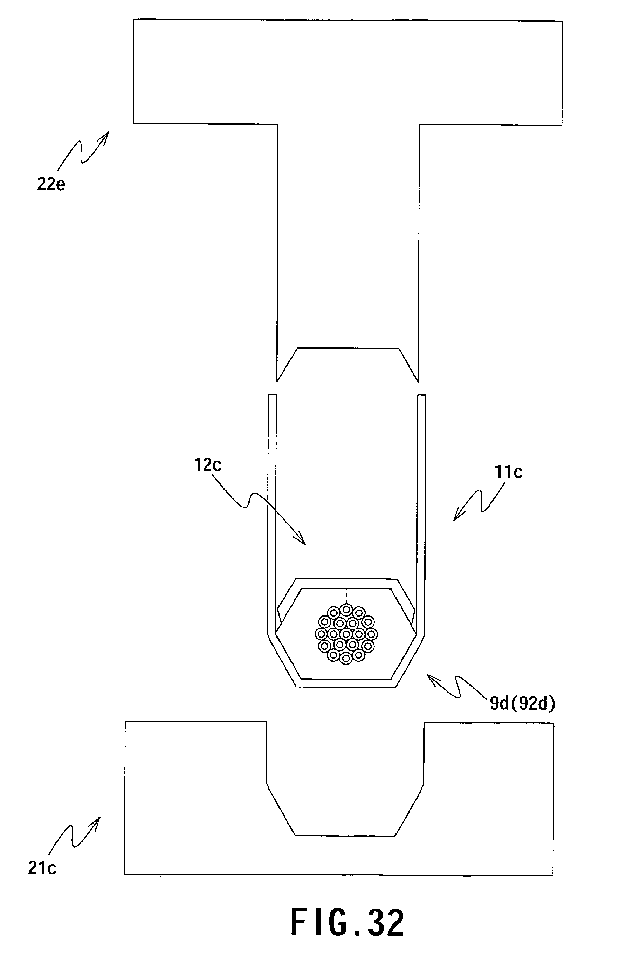

Figs. 29 to 32 are cross-sectional diagrams schematically showing predetermined processes of the method for manufacturing the wire harness according to the sixth embodiment of the present invention. Respectively, Fig. 29 is a diagram showing a state where the third molded body 933 and the predetermined part of the electric wires 91 are accommodated between third lower holding tool 11c and the third upper holding tool 12c. Fig. 30 is a diagram showing a state where the third lower holding tool 11c and the third upper holding tool 12c, in which the third molded body 933 and the predetermined part of the electric wires 91 are accommodated, are placed on the third lower mold 21c. Fig. 31 is a diagram showing a state where the third molded body 933 is heated and pressurized with the fifth upper mold 22e and the third lower mold 21c. Fig. 32 is a diagram showing a state where the predetermined part of the manufactured fourth wire harness 9d, in the state where it is held between the third upper holding tool 12c and the third lower holding tool 11c, is removed from the fifth upper mold 22e and the third lower mold 21c.

First, as shown in Fig. 29, the third molded body 933 holding the predetermined part of the electric wires 91 is accommodated between the both side walls 113c of the third lower holding tool 11c. The way of accommodation of these members is the same as that in the method for manufacturing the wire harness according to the fifth embodiment of the present invention. Then the third upper holding tool 12c is provided between the both side walls 113c of the third lower holding tool 11c so as to cover the third molded body 933 holding the predetermined part of the electric wires 91. In this manner, the third molded body 931 holding the predetermined part of the electric wires 91 is provided between the upper side of the third lower holding tool 11c and the lower side of the third upper holding tool 12c.

Next, as shown in Fig. 30, the third lower holding tool 11c, in which the third molded body 933 holding the predetermined part of the electric wires 91 and the third upper holding tool 12c are accommodated, is placed on the upper side of the third lower mold 21c. In this state, the lower side of the pressure member 111c of the third lower holding tool 11c is in contact with the pressure member 211c of the third lower mold 21c, and the entirety or a part of the lower side of the outer surfaces of the side walls 113c of the third lower holding tool 11c is in the vicinity of or in contact with the support member 213c of the third lower mold 21c.

Note that the pressure member 221e of the fifth upper mold 22e and the pressure member 211c of the third lower mold 21c are maintained at a predetermined temperature with the heating means. The "predetermined temperature" is the same as that in the method for manufacturing the wire harness according to the first embodiment of the present invention.

Then as shown in Fig. 31, the fifth upper mold 22e and the third lower mold 21c are brought closer to each other to set the distance between the pressure member 111c of the third lower holding tool 11c and the pressure member 121c of the third upper holding tool 12c to a predetermined distance. That is, the fifth upper mold 22e and the third lower mold 21c are brought closer to each other such that the shape and the size of space surrounded by the pressure member 111c of the third lower holding tool 11c and the pressure member 121c of the third upper holding tool 12c become the shape and the size of the molded covering member 92d. With this arrangement, the third molded body 933 is molded by heating and pressurization.

Then, this state is maintained (i.e., the heating and the pressurization are continued) for a "predetermined period" . The "predetermined period" is the same as that in the method for manufacturing the wire harness according to the first embodiment of the present invention.

Note that in this process, whether the third molded body 933 is pressurized directly with the fourth upper mold 22d or via the third upper holding tool 12c is the only difference between the method for manufacturing the wire harness according to the sixth embodiment of the present invention and the method for manufacturing the wire harness according to the fifth embodiment of the present invention. That is, the ways of deformation, melting and the like of the third molded body 933 are the same as those in the method for manufacturing the wire harness according to the fifth embodiment of the present invention, further, the same as the part to be the main body 921a of the covering member 92a in the first molded body 931 and the second molded body 932, in the method for manufacturing the wire harness according to the first embodiment of the present invention.

Note that the heat emitted from the third lower mold 21c is transmitted to the third molded body 933 through the third lower holding tool 11c. The heat emitted from the fifth upper mold 22e is transmitted to the third molded body 933 through the third upper holding tool 12c. As described above, since the third lower holding tool 11c is formed of a material having high thermal conductivity and has a structure to easily transmit heat in the vertical direction, the heat emitted from the third lower mold 21c is easily transmitted to the third molded body 933. Similarly, since the third upper holding tool 12c has a material having a high thermal conductivity and has a structure to easily transmit in the vertical direction, the heat emitted from the fifth upper mold 22e is easily transmitted to the third molded body 933. Accordingly, it is not necessary to prolong the above-described "predetermined period".

Next, as shown in Fig. 32, after the elapse of the predetermined period, the fifth upper mold 22e and the third lower mold 21c are separated, and the predetermined part of the fourth wire harness 9d, in the state where it is held between the third lower holding tool 11c and the third upper holding tool 12c, is removed from the third lower mold 21c. Then, it is cooled in that state. At this time, it may be arranged such that a change of the distance between the first upper holding tool 12c and the third lower holding tool 11c (especially increase in the distance) is prevented by holding the third upper holding tool 12c and the third lower holding tool 11c with a clamp or the like. Then, when the temperature of the predetermined part of the fourth wire harness 9d (especially the molded the covering member 92d) becomes a temperature at which plastic deformation by thermoplasticity does not occur (when the first non-woven fabric is applied to the third molded body 933, a temperature lower than the first temperature band), it is removed from the third upper holding tool 12c and the third lower holding tool 11c.

Note that the third lower holding tool 11c and the third upper holding tool 12c are formed of a material having a high thermal conductivity and have a structure to easily transmit heat in the vertical direction. Accordingly, the heat of the molded covering member 92d (= the pressurized third molded body 933) is quickly released to the outside through the third lower holding tool 11c and the third upper holding tool 12c. Further, when the third lower holding tool 11c and the third upper holding tool 12c are formed of a metal plate or the like and manufactured by sheet metal working or the like, the thermal storage amount is small, and the temperature is lowered immediately after the removal from the fifth upper mold 22e and the third lower mold 21c. Accordingly, the predetermined part of the fourth wire harness 9d held between the third lower holding tool 11c and the third upper holding tool 12c, when it is removed from the third lower mold 21c, is not continuously heated by heat of the third lower holding tool 11c and the third upper holding tool 12c. Accordingly, as it is possible to prevent overheating of the molded covering member 92d, it is possible to easily control the property of the covering member 92d.

The fourth wire harness 9d is manufactured through the above-described processes. The covering member 92d of the fourth wire harness 9d manufactured by the method for manufacturing the wire harness according to the sixth embodiment of the present invention has approximately the same structure and the property of the covering member 92d of the fourth wire harness 9d (i.e., approximately the same structure and the property of the main bodies 921a and 921b of the covering members 92a and 92b of the first wire harness 9a and the second wire harness 9b) manufactured by the method for manufacturing the wire harness according to the sixth embodiment of the present invention.

According to this arrangement, it is possible to attain the same effects as those in the method for manufacturing the wire harness according to the fifth embodiment of the present invention. Further, it is possible to attain the same effects as those in the method for manufacturing the wire harness according to the second embodiment of the present invention.

Next, the method for manufacturing the wire harness according to a seventh embodiment of the present invention will be described. The method for manufacturing the wire harness according to the seventh embodiment of the present invention is a manufacturing method capable of improving the joint strength between the electric wires 91 and the covering members 92a, 92b, 92c and 92d. Note that as a process of pressurizing the first molded body 931 and the second molded body 932 or the third molded body 933 to mold the covering members 92a, 92b, 92c and 92d, the pressurizing processes in the methods for manufacturing the wire harness according to the first to sixth embodiments of the present invention are selectively applicable. Note that for the sake of convenience of explanation, the wire harness manufactured by the method for manufacturing the wire harness according to the seventh embodiment of the present invention will be referred to as a "fifth wire harness" 9e.

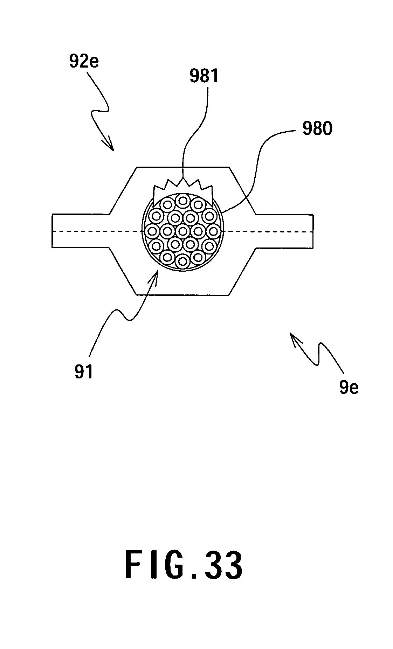

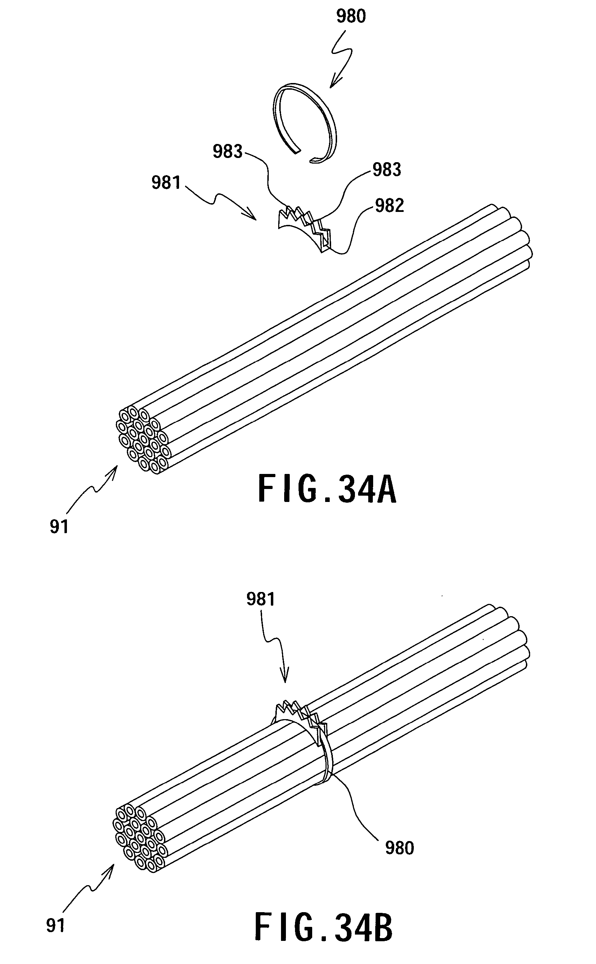

Fig. 33 is a cross-sectional diagram schematically showing a cross-sectional structure of the fifth wire harness 9e. Fig. 34 is a diagram schematically showing structures of the predetermined part of the electric wires 91 of the fifth wire harness 9e, a connection strength improving member 981 attached to the predetermined part of the electric wires 91 and a fixing member 980, showing (a) an exploded perspective diagram and (b) an external perspective diagram showing a built state.

As shown in Figs. 33 and 34, the predetermined part of the fifth wire harness 9e has the electric wires 91, a covering member 92e, the connection strength improving member 981 and the fixing member 980. The covering member 92e has the same structure as that of any of the covering members 92a, 92b, 92c and 92d of the first to fourth wire harnesses 9a, 9b, 9c and 9d (in Fig. 33, the same structure as that of the covering member 92a of the first wire harness 9a is shown as an example).

The connection strength improving member 981 is a member having a bottom member 982 and side members 983 as particularly shown in Fig. 34. The bottom member 982 is formed in a shape along the outer periphery of the predetermined part of the electric wires 91 (e.g., formed in an arc shape having a curvature radius approximately the same as the radius of the electric wire). The side members 983 are structures which rise from the both sides of the bottom member 982. As shown in Figs. 33 and 34, an irregular part is formed at the upper end of the side members 983.

The fixing member 980 is a member to fix the connection strength improving member 981 to the predetermined part of the electric wires 91. The structure of the fixing member 980 is not particularly limited. For example, as shown in Figs. 33 and 34, it may be a ring-shaped member or may be a cord-shaped member. Further, it may be a tie band. In brief, it may have any shape as long as it can fix the connection strength improving member 981 to the predetermined part of the electric wires 91 and at least it disturbs movement of the connection strength improving member 981 in the axial direction in the predetermined part of the electric wires 91.

Then, as shown in respective Figs. 33 and 34, when the fixing member 980 is a ring-shaped member, the fixing member 980 is fitted between the side walls 983 of the connection strength improving member 981, and wrapped around the outer periphery of the predetermined part of the electric wires 91, to be fixed to the outer side of the bottom surface 982 of the connection strength improving member 981. Note that it may be arranged such that the connection strength improving member 981 is fixed to the predetermined part of the electric wires 91 using an adhesive without using the fixing member 980.

Note that the structure of the connection strength improving member 981 and the structure to fix the connection strength improving member 981 to the predetermined part of the electric wires 91 are not limited to the above-described elements. In brief, any structure is applicable as long as it has a shape to engage the connection strength improving member 981 with the covering member 92e (e.g., an element in which a projection or irregular part is formed) and fixes the connection strength improving member 981 to the predetermined part of the electric wires 91.

Then, the covering member 92 is provided on the electric wires 91 to which the connection strength improving member 981 is fixed, by the method for manufacturing the wire harness according to any one of the above-described embodiments of the present invention. Then, as shown in Fig. 33, the irregular part formed at the upper ends of the side walls 983 of the connection strength improving member 981 is engaged with the covering member 92e. Accordingly, even when a pulling force (a force to pull-out the predetermined part of the electric wires 91 from the covering member 92e) in the axial direction is applied to the predetermined part of the electric wires 91, the movement of the predetermined part of the electric wires 91 in the axial direction is prevented with the connection strength improving member 981 engaged with the covering member 92e.

Next, a method for forming the predetermined part of the first to fifth wire harnesses 9a, 9b, 9c, 9d and 9e in a predetermined shape (bending it in the predetermined shape) will be described.

The covering members 92a, 92b, 92c, 92d and 92e are formed with the first molded body 931 and the second molded body 932 or the third molded body 933 formed of a thermoplastic material. Accordingly, the covering members 92a, 92b, 92c, 92d and 92e can be easily plastic-deformed by utilizing thermoplasticity and the shape can be maintained by cooling thereafter.

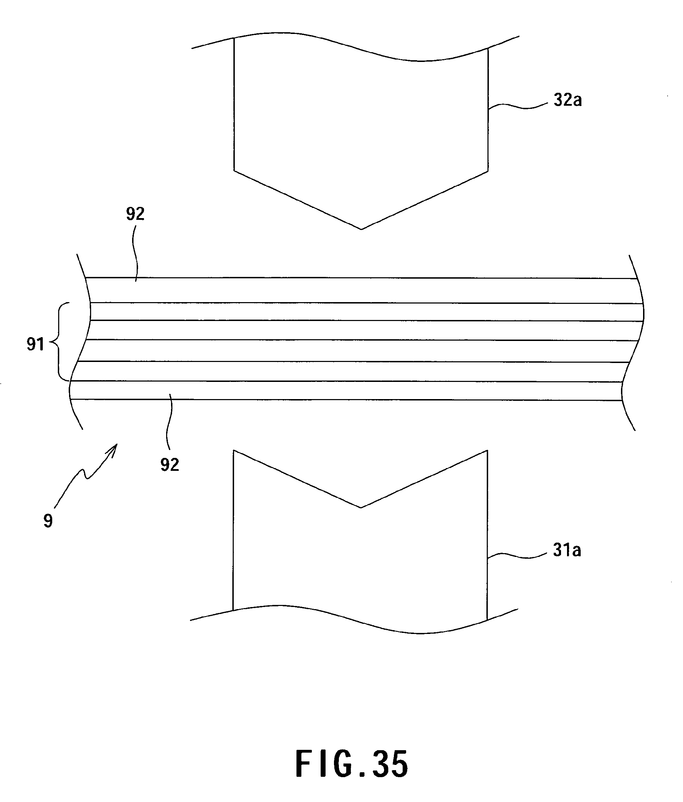

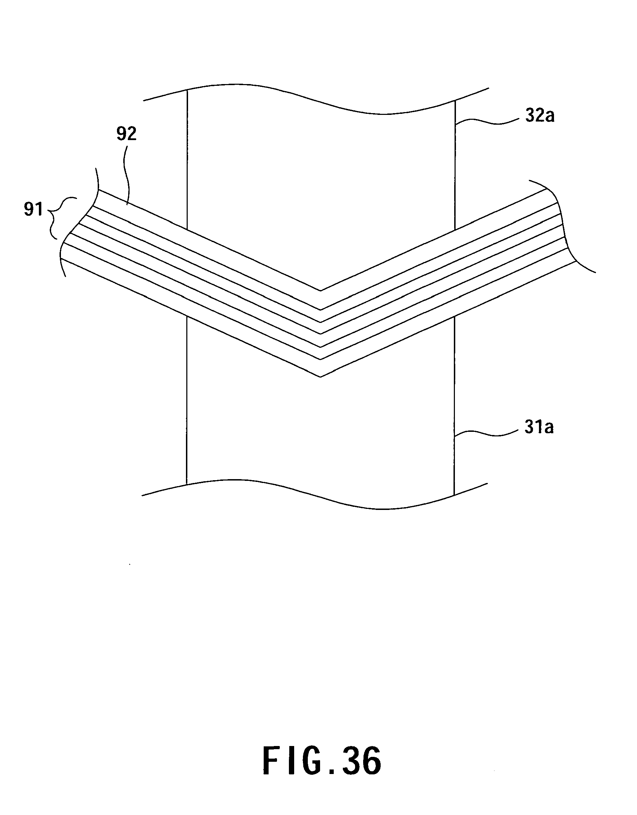

Figs. 35 and 36 are cross-sectional diagrams schematically showing a method for further bending the first to fifth wire harnesses 9a, 9b, 9c, 9d and 9e (hereinbelow, simply referred to as a "wire harness" with reference numeral "9". Further, hereinbelow, reference numeral "92" is added to the covering members 92a, 92b, 92c, 92d and 92e). Respectively, Fig. 35 shows a state before execution of the bending, and Fig. 36 shows a state where the bending is performed. As shown in respective Figs. 35 and 36, in the bending, a pair of molds including a bending upper mold 32a and a bending lower mold 31a is used. The bending upper mold 32a and the bending lower mold 31a have structures to face each other, and the facing surfaces have the shape of the predetermined part of the bended wire harness 9. For example, as shown in Figs. 35 and 36, one has a concave member, and the other has a concave member. In Figs. 35 and 36, the bending upper mold 32a has a convex member, and the bending lower mold 31a has a concave member.

The predetermined part (= the covering member 92 is molded) of the manufactured wire harness 9 is held between the convex member of the bending upper mold 32a and the concave member of the bending lower mold 31a, and in that state, it is heated to a predetermined temperature, to bend the predetermined part of the wire harness 9 into the predetermined shape (the shape of the concave member and the convex member). The "predetermined temperature" is a temperature at which the covering member 92 is plastic-deformable by thermoplasticity while its solid state is maintained. When the covering member 92 is formed of the non-woven fabric, a temperature in the first temperature band and lower than the second temperature band is applied. When the covering member 92 is formed of the second non-woven fabric or the foam, a temperature which is lower than the fusing point and at which plastic deformation by thermoplasticity occurs is applied.

Note that as a structure to heat the predetermined part of the wire harness 9, the following arrangements are applied.

1. An arrangement where the bending upper mold 32a and the bending lower mold 31a have a heating means. According to this arrangement, the bending and the heating are performed by holding the wire harness 9 between the bending upper mold 32a and the bending lower mold 31a. Then when the wire harness is removed from the bending upper mold 32a and the bending lower mold 31a and cooled, the shape of the wire harness 9 is finalized. As the heating means, the same heating means as that of the upper mold and the lower mold is applicable.

2. An arrangement where the bending upper mold 32a and the bending lower mold 31a do not have heating means, and the wire harness 9 is heated from the outside in a state where the wire harness 9 is held between the bending upper mold 32a and the bending lower mold 31a. For example, the wire harness 9 is held between the bending upper mold 32a and the bending lower mold 31a, and in that state, a gas at the above-described predetermined temperature (heated air or superheated steam) is blown to the wire harness 9, so as to plastic-deform the first molded body 931 and the second molded body 932. Thereafter, the blowing of the gas is stopped, then, when the temperature of the wire harness 9 (= the covering member 92 provided in the predetermined part of the electric wires 91) is a temperature at which plastic deformation by the thermoplasticity does not occur, it is removed from the bending upper mold 32a and the bending lower mold 31a.

3. An arrangement where the bending upper mold 32a and the bending lower mold 31a do not have heating means, and after the pressurization of the first molded body 931 and the second molded body 932, before the temperature is lowered to a temperature lower than the predetermined temperature, the bending is performed. In the predetermined part of the wire harness 9, immediately after it is manufactured by the method for manufacturing the wire harness according to any one of the above-described embodiments of the present invention, the temperature of the first molded body 931 and the second molded body 932 is high (in a state where they have plasticity). Accordingly, before the temperature of the first molded body 931 and the second molded body 932 is lowered to a temperature at which plastic deformation by thermoplasticity does not occur, they are held between the bending upper mold 32a and the bending lower mold 31a, and in that state, the predetermined part of the wire harness 9 is cooled. With this arrangement, the shape of the predeterminedpart of the wire harness 9 is finalized. According to this method, it is not necessary to heat the first molded body 931 and the second molded body 932 again. Accordingly, it is possible to simplify the equipment for the bending.

According to these arrangements, even after the pressurization and molding of the first molded body 931 and the second molded body 932, it is possible to form the predetermined part of the wire harness 9 in a predetermined shape (= bend it in the predetermined shape) . Accordingly, it is possible to easily change the shape of the predetermined part of the wire harness 9.

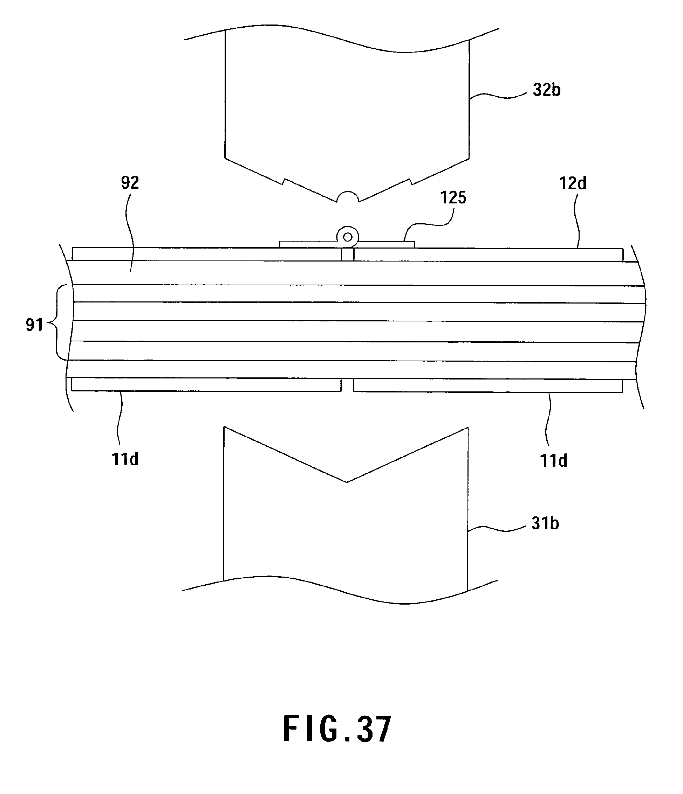

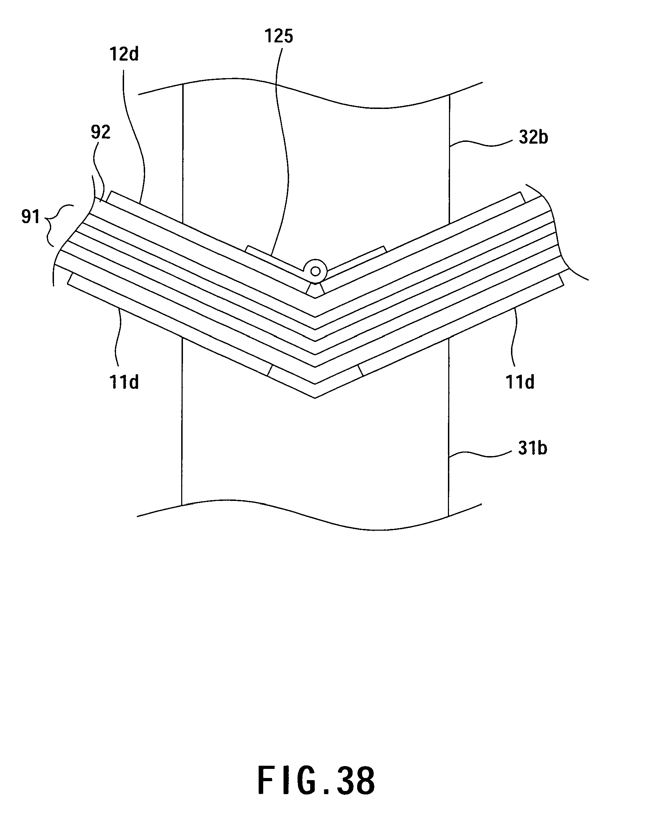

Note that it may be arranged such that upon bending of the wire harness 9, not to deform the other parts than the bended part, a fourth lower holding tool 11d and a fourth upper holding tool 12d are used. Figs. 37 and 38 are cross-sectional diagrams schematically showing an arrangement to perform bending in the state where the wire harness 9 is held between the fourth lower holding tool 11d and the fourth upper holding tool 12d. Respectively, Fig. 37 shows a state before the execution of the bending, and Fig. 38 shows a state where the bending is performed.

As shown in respective Figs. 37 and 38, the fourth lower holding tool 11d is divided in the bended part of the covering member 92 of the wire harness 9. That is, the fourth lower holding tool 11d is formed with plural members. The other elements have the same elements in any one of the first to third lower holding tools 11a, 11b and 11c.

As shown in respective Figs. 37 and 38, the fourth upper holding tool 12d is divided in the bended part of the covering member 92 of the wire harness 9, and connected with a hinge 125. Accordingly, the fourth upper holding tool 12d is inflective at the hinge 125. The other elements have the same structure as that of any one of the first to third upper holding tools 12a, 12b and 12c.

Then, as shown in Fig. 37, the divided part of the fourth upper holding tool 12d (= the part connected with the hinge 125) and the divided part of the fourth lower holding tool 11d are provided between a bending upper mold 32b and a bending lower mold 31b. Next, as shown in Fig. 38, the part is held between the bending upper mold 3 2b and the bending lower mold 31b, to bend the covering member 92 of the wire harness 9. At this time, the covering member 92 of the wire harness 9 is heated. As the heating method, any one of the above-described methods is applicable. The heating temperature is the above-described predetermined temperature.

According to this arrangement, it is possible to bend only a necessary part, and it is possible to prevent the occurrence of unexpected deformation in an unbended part.

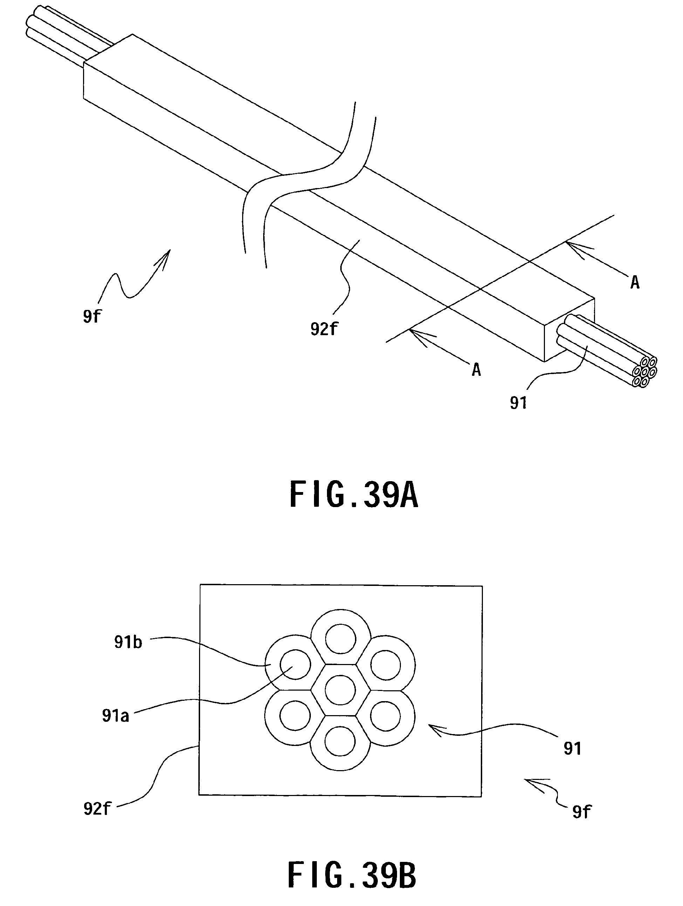

Fig. 39(a) is an external perspective diagram showing the predetermined part (= the part in which the shape maintenance member is provided) of the wire harness manufactured by the method for manufacturing the wire harness according to an eighth embodiment of the present invention. Fig. 39 (b) is a cross-sectional diagram along a line A-A in Fig. 39 (a) and a diagram schematically showing a cross-sectional structure of the predetermined part of the wire harness 9f according to the embodiment of the present invention.

The wire harness 9f according to this embodiment as a whole has predetermined type and predetermined number of electric wires 91, and has a structure where these electric wires 91 are bundled in a predetermined form (or tied). Then the bundled (or tied) electric wires 91 form trunk line and branch line of the wire harness 9f according to this embodiment. A predetermined type of connector or the like is attached to the end of each electric wire 91 included in the wire harness 9f according to the embodiments of the present invention. Note that the type and the number of the electric wires 91 included in the wire harness 9f according to this embodiment, the entire shape (e.g., the size and the shape of the trunk line and the branch line, the number and the form of branch of the branch line, and the like) of the wire harness 9f according to this embodiment, the structure of the connector or the like attached to each electric wire 91 and the like, are arbitrarily set in correspondence with necessity, but are not particularly limited.

As shown in Fig. 39, the predetermined part of the wire harness 9f according to this embodiment is provided with a covering member 92f to cover the electric wires 91. That is, the predetermined part of the wire harness 9f according to this embodiment has the electric wires 91 and the covering member 92f, and the electric wires 91 are covered with the covering member 92f. The covering member 92f has at least one of a function of bundling the electric wires 91, a function of maintaining the electric wires 91 in a predetermined shape (especially a function of maintaining the axial shape of the electric wires 91 in the predetermined shape) and a function of protecting the electric wires 91 (a so-called "protector" function). The position and range of the part in which the covering member 92f is provided are not particularly limited. For example, it is arbitrarily provided in a part to bundle the electric wires 91 (= a part to maintain the tied state), a part to maintain the shape of the electric wires 91 in the predetermined shape, a part to protect the electric wires 91, and the like.

The particular cross-sectional shape and size and the particular axial shape of the covering member 92f are arbitrarily set in correspondence with size, shape and the like of the space of the region in which the first wire harness 9f according to this embodiment is provided. For example, an arrangement where the covering member 92f is formed to have shape and size approximately the same as the shape and the size of the space of the region in which the covering member is provided, or an arrangement where it is formed in a shape convenient for providing is applicable. In this manner, the cross-sectional shape and size and the axial shape of the covering member 92f are not particularly limited.

The covering member 92f is formed of a material which has thermoplasticity and is elastic-deformable (especially, a material which is compression-deformable to reduce the apparent volume). For example, it is formed of non-woven fabric, a foam or the like formed of a thermoplastic resin material or the like. Note that for the sake of convenience of explanation, the member as the material of the covering member 92f (in other words, the covering member 92f before the molding) will be referred to as a "molded body 93f".

As the non-woven fabric as the molded body 93f, as in the case of the first to seventh embodiments, fabric having an intertwined structure of base fiber and binder fiber is applicable. The base fiber is formed of a thermoplastic resin material having a predetermined fusing point. The binder fiber has a structure where a binder material layer is formed on the outer periphery of core fiber. The core fiber is formed of the same thermoplastic resin material the same as that of the base fiber. The binder material layer is formed of a thermoplastic resin material having a fusing point lower than that of the base fiber and the core fiber. Note that for the sake of convenience of explanation, the non-woven fabric having this structure will be referred to as "first non-woven fabric".

When the first non-woven fabric is heated to a temperature equal to or higher than a predetermined temperature, it becomes plastic-deformable by thermoplasticity of the base fiber and the binder fiber. Especially, when it is heated to a temperature higher than the fusing point of the binder material of the binder fiber and in a temperature band lower than the fusing point of the base fiber and the core fiber of the binder fiber, the base fiber and the core fiber of the binder fiber are plastic-deformable by thermoplasticity while their solid state (= fiber state) is maintained. On the other hand, when it is heated to this temperature band, the binder material of the binder fiber is melted, and flows among the base fiber and the core fiber of the binder fiber. Accordingly, thereafter, when the temperature is returned to a temperature lower than the fusing point of the binder material, the binder material returns to the solid state, and connects the base fiber and the core fiber of the binder fiber in an adhesive (or hot-melt resin) like form.

Accordingly, the first non-woven fabric is heated to a temperature band higher than the fusing point of the binder material of the binder fiber and lower than the fusing point of the base fiber and the core fiber of the binder fiber, and formed in a predetermined shape in this temperature band, thereafter, when cooled to a temperature at which the base fiber and the binder fiber are not plastic-deformed by thermoplasticity, the shape molded in the above-described temperature band is maintained. Further, as the molten binder material is solidified to connect the base fiber and the core fiber of the binder fiber, it becomes harder in comparison with its state before the heating.

Note that for the sake of convenience of explanation, the temperature band in which the base fiber and the binder fiber are easily plastic-deformable by thermoplasticity will be referred to as a "first plasticization temperature band". In the "first plasticization temperature band" of the first non-woven fabric, a temperature band equal to or higher than the fusing point of the binder material of the binder fiber and lower than the fusing point of the base fiber and the core fiber of the binder fiber will be referred to as a "second plasticization temperature band" of the first non-woven fabric.

As the base fiber of the first non-woven fabric, fiber formed of PET (polyethylene terephthalate) is applicable. As the binder fiber of the first non-woven fabric, fabric having a structure with core fiber formed of PET and a binder material layer formed of PET and PET-PEI (polyethylene isophthalate) copolymer, in which the binder material layer is formed on the outer periphery of the core fiber, is applicable. The fusing point of the base fiber and the core fiber (i.e., PET) of the non-woven fabric having this structure is about 250 °C. The fusing point of the binder material is 110 to 150 °C. Accordingly, the second plasticization temperature band of this first non-woven fabric is 110 to 250 °C.

In addition, as the molded body 93f, non-woven fabric which does not have binder fiber and which is formed of a thermoplastic resin material is applicable. For the sake of convenience of explanation, this non-woven fabric is referred to as a "secondnon-woven fabric". For example, non-woven fabric formed of PET is applicable. Further, as the molded body 93f, a foam formed of a thermoplastic material is also applicable. For example, a foam formed of PET is applicable. The second non-woven fabric and the foam applied to the molded body 93f are easily plastic-deformable by thermoplasticity when heated to a temperature lower than the fusing point of the thermoplastic resin material as their material and around the fusing point.

The surface layer of the covering member 92f (= the outer surface and its peripheral part) is formed to be harder in comparison with the central part (= a part in contact with the electric wires 91 and its peripheral part). More particularly, the hardness of the surface layer of the covering member 92f is higher than that of the molded body 93f before the molding by the method for manufacturing the wire harness according to this embodiment. Then the hard surface layer can maintain the axial line of the electric wires 91 in a predetermined shape. Further, it can protect the electric wires 91.

On the other hand, the central part of the covering member 92f is formed to be softer in comparison with the surface layer. More particularly, the central part of the covering member 92f has the physical property of the molded body 93f before the molding to the covering member 92f (e.g., the hardness and undeformability) more in comparison with the surface layer. Then the central part of the covering member 92f is elastically in contact with and wraps the electric wires 91, and can protect the electric wires 91 from impact or vibration. That is, as the covering member 92f, in the state where it has elasticity, in contact with and wraps the electric wires 91, even when vibration or an external force is applied to the wire harness 9f according to this embodiment, it prevents transmission of the vibration or the external force to the electric wires 91. Further, the central part of the covering member 92f has a function as a sound proof material. That is, since the electric wires 91 and the covering member 92f are elastically in contact with each other, the occurrence of an impulsive sound or the like is prevented between these members.

As the electric wires 91 in the predetermined part of the wire harness 9f according to this embodiment, the electric wire 91, having a core 91a and a covering member 91b which covers the core 91a, is applied. As this electric wire 91, a conventionally known electric wire is applicable. The covering member 91b of the electric wire 91 is formed of a material which is elastic-deformable and which has thermoplasticity. As the covering member 91b of the electric wires 91, the conventionally known various thermoplastic resin materials are applicable.

Then, as shown in Fig. 39(b), the electric wires 91 in the predetermined part (= the part covered with the covering member 92f) of the wire harness 9f according to the eighth embodiment are closely attached to each other without gap (or almost without gap) except unavoidable space. More particularly, the covering members 91b of the electric wires 91 are, not in line contact, but in surface contact with each other.

The cross-sectional shape of the covering member 91b applied to the wire harness 9f according to this embodiment is not limited. Accordingly, for example, general electric wires 91 in which the cross-sectional shape of the covering member 91b is an approximately circular shape are applied. Then, when the method for manufacturing the wire harness according to this embodiment is applied and this wire harness 9f is manufactured, as shown in Fig. 39 (b), the covering members 91b of the electric wires 91 are deformed, and they are approximately closely attached to each other.

In a state where the covering members 91b of the electric wires 91 are not deformed, even when the electric wires 91 are bundled, since the covering members 91b of the electric wires 91 are in line contact with each other, a gap is formed among the electric wires 91. On the other hand, in the wire harness 9f according to this embodiment, since the covering members 91b of the electric wires 91 are deformed and in surface contact with each other, no gap is formed except unavoidable space or the gap is reduced. Accordingly, it is possible to reduce the cross-sectional size of the predetermined part of the wire harness 9f according to the embodiment of the present invention.

For example, in the arrangement using a shell-type resin protector or shape maintenance member which is an injection molded product, the space inside the protector or the shape maintenance member is formed to have a cross-sectional area larger than the total cross-sectional area of the accommodated electric wires for the sake of convenience of the operation to accommodate the electric wires and for the sake of avoiding application of undue force to the accommodated electric wires. Accordingly, a gap is formed among the electric wires, and a gap is formed between the electric wires and the inner peripheral surface of the protector or the shape maintenance member. Accordingly, the cross-sectional size of the predetermined part of the wire harness is increased. Further, in the arrangement where the electric wires are flatly arrayed and held with a covering member, since the electric wires cannot be closely gathered, the cross-sectional area of the predetermined part of the wire harness is increased, and in addition, the cross-sectional shape is limited to the flat shape.

On the other hand, according to the wire harness 9f according to this embodiment, it can be arranged such that the electric wires 91 are closely gathered and closely attached to each other, and no gap is formed (or the gap is small) among the electric wires 91 except unavoidable space. Further, it can be arranged such that the electric wires 91 and the covering member 92f are in closely attached to each other. Accordingly, in comparison with these arrangements, it is possible to reduce the cross-sectional size of the predetermined part of the wire harness 9f according to this embodiment.

Further, in the arrangement using the protector of shape maintenance member which is an injection molded product, when a gap exists between the inner surface of the protector or the shape maintenance member and the electric wires, the electric wires collide with the inner surface of the protector or the shape maintenance member due to vibration or the like, and an impulsive sound or the like occurs. Note that it may be arranged such that a shock absorbing material such as a sponge is inserted inside the protector or the shape maintenance member which is an injection molded product to prevent an impulsive sound or the like; however, in this arrangement, the number of parts and the number of steps are increased, and there is a possibility of rise of the manufacturing cost and the product price.

On the other hand, according to the wire harness 9f according to this embodiment, the electric wires 91 in the predetermined part are wrapped in and elastically in contact with the covering member 92f. Accordingly, an impulsive sound or the like does not occur between the electric wires 91 and the covering member 92f. Further, the covering member 92f also functions as a protector or a shock-absorbing material to protect the electric wires 91 from impact or vibration. In this manner, since the number of parts or the number of steps is not increased, it is possible to reduce the cost of the parts and the manufacturing cost.

Next, the method for manufacturing the wire harness according to the seventh embodiment will be described.

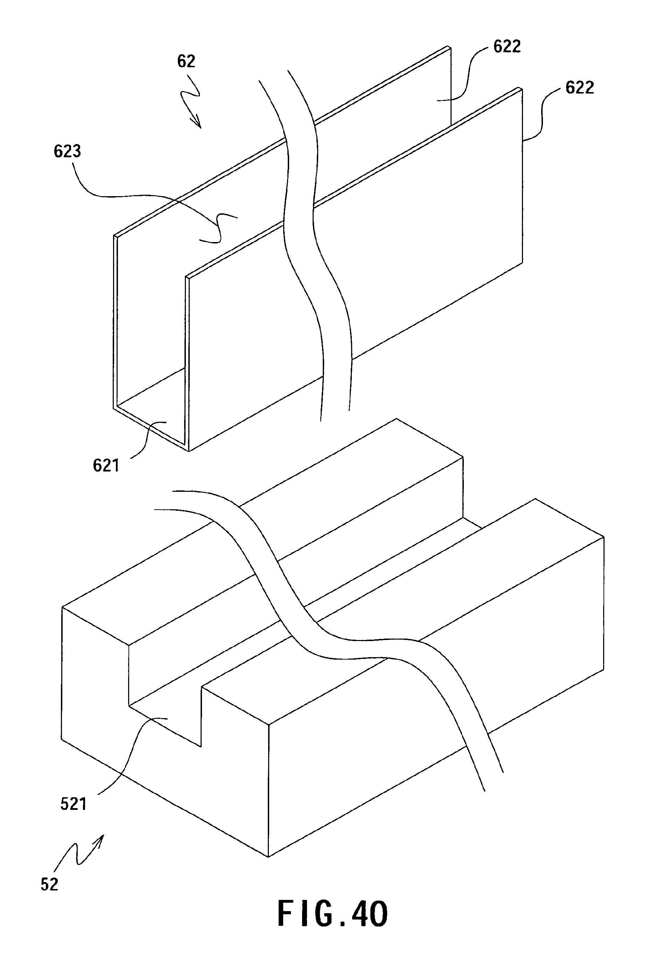

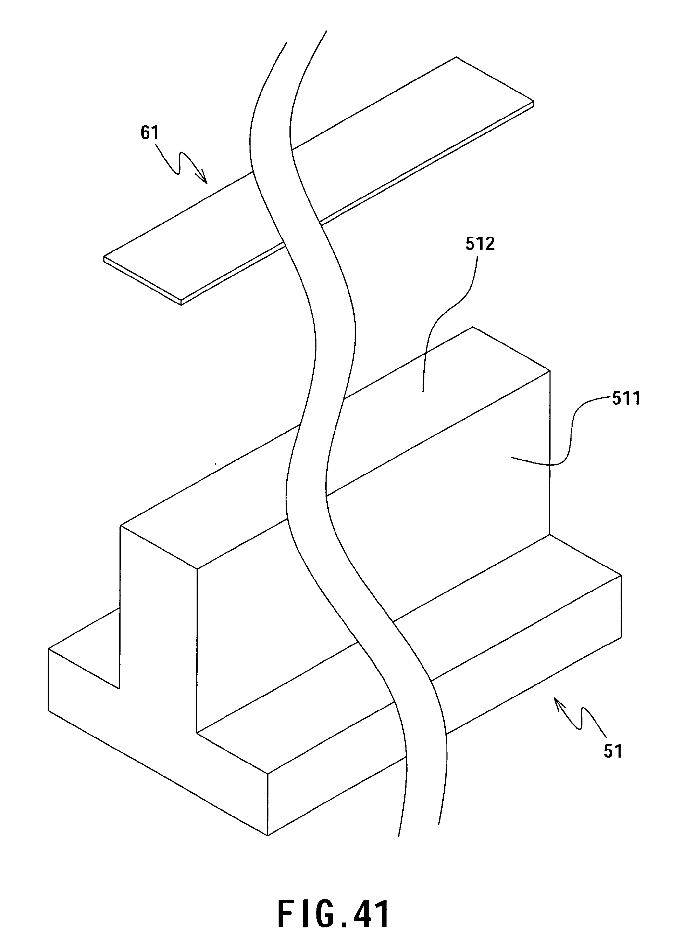

In the method for manufacturing the wire harness according to the eighth embodiment of the present invention, a mold 5, an upper holding tool 61 and a lower holding tool 62 are used. The mold 5 has a pair of upper mold 51 and lower mold 52 (e.g., a metal die is applicable to any of them). Fig. 40 is an external perspective diagram schematically showing principal elements of the lower holding tool 62 and the lower mold 52 of the mold 5. Fig. 41 is an external perspective diagram schematically showing principal elements of the upper holding tool 61 and the upper mold 51 of the mold 5. Regarding the lower holding tool 62 and the lower mold 52 of the mold 5, the upper side in Fig. 40 is the side facing the upper holding tool 61 and the upper mold 51 of the mold 5. Regarding the upper holding tool 61 and the upper mold 51 of the mold 5, the upper side in Fig. 41 is the side facing the lower holding tool 62 and the lower mold 52 of the mold 5. For the sake of convenience of explanation, regarding the lower holding tool 62 and the lower mold 52 of the mold 5, the side facing the upper holding tool 61 and the upper mold 51 of the mold 5 will be referred to as the "upper side", and its opposite side will be referred to as the "lower side". Regarding the upper holding tool 61 and the upper mold 51 of the mold 5, the side facing the lower holding tool 62 and the lower mold 52 of the mold 5 will be referred to as the "lower side", and its opposite side will be referred to as the "upper side". In Fig. 40, the upper side in the figure is the upper side, and in Fig. 41, the upper side in the figure is the lower side.

The lower holding tool 62 and the upper holding tool 61 are tools (or jigs) having a function of pressurizing the molded body 93f to mold the covering member 92f in predetermined shape and size, a function of maintaining the covering member 92f molded in the predetermined shape and size (= the molded body 93f after the molding) in the predetermined shape and size (in other words, prevent unexpected deformation or undesired deformation of the covering member 92f) and the like.

The lower holding tool 62 has a groove-shaped concave member 623 opened upward. More particularly, the lower holding tool 62 has a bottom member 621 which has a predetermined width and which extends in a predetermined axial direction and wall members 622 which rise from the both side members of the bottom member 621 upward. Then, a region surrounded by the upper surface of the bottom member 621 and the inner surface of the wall members 622 on the both sides is the groove-shaped concave member 623 opened upward. Accordingly, the lower holding tool 62 as a whole has a bar-shaped structure having an approximately "U" cross sectional shape.

The axial shape of the groove-shaped the concave member 623 is set in correspondence with the axial shape of the molded covering member 92 f . For example, when the covering member 92f having an approximately liner axial shape is molded, as the axial shape of the groove-shaped concave member 623, an approximately liner shape is applied. Further, when the covering member 92f in an arc shape in which the axial line has a predetermined curvature radius is molded, the axial shape of the groove-shaped concave member 623 is formed in an arc shape having a predetermined curvature radius. In this manner, since the axial shape of the groove-shaped concave member 623 is the axial shape of the molded covering member 92f, the axial shape of the groove-shaped concave member 623 is set in correspondence with the axial shape of the covering member 92f to be molded. Note that it may be arranged such that the axial shape of the groove-shaped concave member 623 is set to be a simple shape (e.g., an approximately liner shape), and after the molding of the covering member 92f, the axial shape of the covering member 92f is changed.

The cross-sectional shape in the vicinity of the bottom member of the groove-shaped concave member 623 (= in the vicinity of the upper surface of the bottom member 621 or in the vicinity of the upper surface of the bottom member 621 and the bottom member 621 in the inner surfaces of the wall members 622. More particularly, in a state where the molded body 93f is pressurized, a part in contact with the molded body 93f) (the cross-sectional shape when the lower holding tool 62 is cut in a direction orthogonal to the axial direction here) is set to shape and size corresponding to the cross sectional shape and size of the covering member 92f to be molded.

For example, when the covering member 92f having an approximately circular cross-sectional shape is molded, the upper surface of the bottom member is formed in an approximately semicircular shape. Further, when the covering member 92f having an approximately rectangular cross-sectional shape is molded, the upper surface of the bottom member 621 and the inner surface of the wall members 622 on the both sides are formed such that the cross-sectional shape of a region surrounded by them is an approximately rectangular shape. That is, the upper surface of the bottom member 621 is formed to be an approximately flat surface, at least a part of the wall members 622 on the both sides in the vicinity of the bottom member is formed to be an approximately flat surface, and at least a part in the wall members 622 on the both sides in the vicinity of the bottom member 621 rises approximately orthogonal to the upper surfaces of the bottom member 621.

The lower holding tool 62 is formed of a material having high thermal conductivity and has a structure where the thermal storage amount is small (i.e., to easily follow the ambient temperature change). Especially, it has a structure to easily transmit heat between the inside and the outside of the groove-shaped concave member 623. More specifically, for example, it is formed of a thin metal plate or the like, and formed by sheet metal working or the like. When it is formed of a thin metal plate or the like, since it easily transmits heat in the thickness direction of the metal plate and since the mass of the lower holding tool 62 can be reduced, the thermal storage amount can be reduced. Further, the bottom member 621 and the wall members 622 are integrally formed by performing sheet metal working or the like on one metal plate. When the bottom member 621 and the wall members 622 are integrally formed from one metal plate or the like, it is not necessary to build parts as separate bodies. Accordingly, in comparison with the arrangement where parts as separate bodies are built, it is possible to prevent rise of the cost of the parts of the lower holding tool 62 and the manufacturing cost. Further, it is possible to reduce the labor of the manufacturing of the lower holding tool 62.

The outer shape of the groove-shaped concave member 623 of the lower holding tool 62 (= the shape of the lower surface of the bottom member 621, and the shape of the outer surface of the wall members 622) is not particularly limited. When the lower holding tool 62 is formed of a thin plate or the like and formed by sheet metal working or the like, the shape of the outer surface of the groove-shaped concave member 623 of the lower holding tool 62 is an approximately similar shape to the shape of the upper surface of the bottom member 621 and the shape of the inner surface of the wall members 622.

The upper holding tool 61 has a structure which can be removably fitted in the groove-shaped concave member 623 of the lower holding tool 62. More specifically, the axial shape of the upper holding tool 61 is set to be the same as the axial shape of the lower holding tool 62, and the width is set to the same as or slightly smaller than the size of the interval between the wall members 622 of the lower holding tool 62. The lower surface of the upper holding tool 61 is set to shape and size corresponding to the cross-sectional shape and size of the molded covering member 92f. For example, when the covering member 92f having an approximately circular cross-sectional shape is to be molded, the lower surface is formed to have an approximately semicircular cross-sectional shape in a surface orthogonal to the axial direction. Further, when the covering member 92f having an approximately rectangular cross-sectional shape is to be molded, it is formed to have an approximately flat surface. Accordingly, the upper holding tool 61 as a whole has an approximately flat-plate shaped structure having a predetermined width and a predetermined axial shape.

The upper holding tool 61 is formed of a material having high thermal conductivity, and has a structure where the thermal storage amount is small (i.e., to easily follow the ambient temperature change). Especially, it has a structure to easily transmit heat in the vertical direction. More specifically, an arrangement where it is formed of a thin metal plate or the like, and is formed by sheet metal working or the like is applicable. When the upper holding tool 61 is formed of a thin metal plate or the like and formed by sheet metal working or the like, it attains the same effects as those of the above-described lower holding tool 62.

The shape of the upper surface of the upper holding tool 61 is not particularly limited. For example, when the upper holding tool 61 is formed of a thin plate or the like and formed by sheet metal working or the like, the shape of the upper surface of the upper holding tool 61 is a shape approximately similar to the lower surface.

The lower mold 52 of the mold 5 is a tool to heat and pressurize the molded body 93f, along with the upper holding tool 61 and the upper mold 51 of the mold 5, via the lower holding tool 62, to mold the covering member 92f. That is, it plastic-deforms the molded body 93f by utilizing thermoplasticity, and forms the covering member 92f having predetermined cross-sectional shape and size.

An engagement member 521 is formed on the upper side of the lower mold 52 of the mold 5. The engagement member 521 is a groove-shaped concave member opened upward, and has a structure capable of accommodating the entirety or a part of the lower side of the lower holding tool 62 (the bottom member 621 and a part of the wall members 622 in the vicinity of the bottom member 621). In Fig. 40, a structure capable of accommodating a part of the lower side of the lower holding tool 62 is shown. Then, by engaging the lower holding tool 62 with the engagement member 521, it can be placed on the upper side of the lower mold 52 of the mold 5 in a state where the open side of the groove-shaped concave member 623 of the lower holding tool 62 is directed upward (= in a state where it is directed to the upper mold 51 of the mold 5).

The lower mold 52 of the mold 5 has unshown heating means. Then, it is possible to maintain the surface of the engagement member 521 at a predetermined temperature with this heating means. Note that the "predetermined temperature" will be described later. As the heating means, various known heating means are applicable. For example, an arrangement where a heating wire is applied as the heating means and the heating wire is embedded inside the lower mold 52 of the mold 5, or an arrangement where the heating wire is attached to the outer periphery of the lower mold 52 of the mold 5 is applicable. Further, an arrangement where a passage (e.g. a hole) to pass fluid is formed inside the lower mold 52 of the mold 5, and temperature-controlled fluid (temperature-controlled air, liquid (oil or the like), steam (superheated steam or the like)) is passed through this passage is applicable. In this manner, any heating means is applicable as long as it has a structure to maintain the lower mold 52 of the mold 5 (especially the surface of the engagement member 521) at the predetermined temperature, and its type and structure are not limited.

Note that it is preferable that the engagement member 521 of the lower mold 52 of the mold 5 has a structure to uniformly transmit heat to the lower holding tool 62 (= a structure to heat a part of the lower holding tool 62, engaged with the engagement member 521 of the lower mold 52 of the mold 5, to have a uniform temperature). Accordingly, an arrangement where, when the lower holding tool 62 is engaged with the engagement member 521 of the lower mold 52 of the mold 5, the surface of the engagement member 521 is in contact with approximately the entire outer surface of the lower holding tool 62 (= approximately the entire outer surface of the lower holding tool 62, or the lower surface of the bottom member 621 of the lower holding tool 62 and a part of the outer surface of the wall members 622 in the vicinity of the bottom member 622) is applicable.

More specifically, for example, the engagement member 521 of the lower mold 52 of the mold 5 is set to have size and shape approximately the same as or slightly larger than the entirety or a part of the outer surface of the lower holding tool 62 (= the outer surface of the bottom member 621, or the bottom member 621 and the outer surface of the wall members 622 in the vicinity of the bottom member 621). Accordingly, as shown in Fig. 40, when the bottom member 621 of the lower holding tool 62 and a cross-sectional shape of the wall members 622 in the vicinity of the bottom member 621 are an approximately rectangular shape, the cross-sectional shape of the engagement member 521 is set to an approximately rectangular shape. Further, when the cross-sectional shape of the bottom member of the lower holding tool 62 is an approximately semicircular shape, the cross-sectional shape of the engagement member 521 is set to an approximately semicircular shape, or a shape having a part formed in an approximately semicircular shape (= when the engagement member 521 is regarded as a groove, the bottom surface of the groove is set to an approximately semicircular shape).

According to this arrangement, the inner surface of the engagement member 521 of the lower mold 52 of the mold 5 is in contact with approximately the entirety of the outer surface of the lower holding tool 62 engaged with the engagement member 521. Accordingly, it is possible to approximately uniformly heat the part of the lower holding tool engaged with the engagement member 521 to have a predetermined temperature.

The upper mold 51 of the mold 5 is a tool to heat and pressurize, along with the lower mold 52 of the mold 5 and the lower holding tool 62, the molded body 93f via the upper holding tool 61.

A part of the lower side of the upper mold 51 of the mold 5 has a structure which can be fitted between the wall members 622 of the lower holding tool 62 (= can be fitted in the groove-shaped concave member 623). More specifically, as shown in Fig. 41, a convex structure 511 projected downward is formed on the upper mold 51 of the mold 5, and the entirety or a part of the lower side of the convex structure 511 can be fitted between the walls of the lower holding tool. Accordingly, the widthwise size of the convex structure 511 (= the size in the direction orthogonal to the axial direction) is approximately the same as or slightly smaller than the interval between the wall members 622 of the lower holding tool 62.

Note that in addition to the structure shown in Fig. 41, a structure where the entire upper mold 51 of the mold 5 can be fitted between the wall members 622 of the lower holding tool 62 is applicable.

A pressure surface 512 is formed on the lower side of the upper mold 51 of the mold 5. The pressure surface 512 is a part to pressurize and heat the molded body 93f via the upper holding tool 61 to mold the covering member 92f having a predetermined cross-sectional shape. When the lower holding tool 62 is engaged with the engagement member 521 of the lower mold 52 of the mold 5, the pressure surface 512 faces the upper surface of the bottom member 621 of the lower holding tool 62, with the upper holding tool 61 therebetween. As shown in Fig. 41, in a structure where the convex structure 511 is formed on the upper mold 51 of the mold 5, the lower surface of the convex structure 511 becomes the pressure surface 512. On the other hand, when the entire upper mold 51 of the mold 5 has a structure which can be fitted between the wall members 622 of the lower holding tool 62, approximately the entire lower surface of the upper mold 51 of the mold 5 becomes the pressure surface 512.

The cross-sectional shape and size of the pressure surface 512 when the convex structure 511 (or the entire upper mold 51 of the mold 5) is cut in a surface orthogonal to the axial direction is set in correspondence with the shape and the size of the upper surface of the upper holding tool 61. Then, it is preferable that, when the upper surface of the upper holding tool 61 is in contact with the pressure surface 512, the heat of the upper mold 51 of the mold 5 is uniformly transmitted to the entire upper holding tool 61. For example, an arrangement where the pressure surface 512 is formed to have shape and size approximately the same as those of the upper surface of the upper holding tool 61, and the pressure surface 512 is in contact with approximately the entire upper surface of the upper holding tool 61 is applicable.

The upper mold 51 of the mold 5 has unshown heating means. Then, it is possible to maintain, especially the pressure surface 512, at a predetermined temperature. The "predetermined temperature" is the same as that of the lower mold 52 of the mold 5. Further, as the heating means, the same heating means as that of the lower mold 52 of the mold 5 is applicable. Accordingly, the explanation thereof will be omitted.

When the lower holding tool 62 is engaged with (= fitted in) the engagement member 521 of the lower mold 52 of the mold 5 and the upper holding tool 61 is engaged with (= into a state where it is attached to) the pressure surface 512 of the upper mold 51 of the mold 5, and in that state, the upper mold 51 of the mold 5 and the lower mold 52 are brought closer to each other, then the upper holding tool 61 and a part of or the entire upper mold 51 of the mold 5 (= the convex structure 511) is removably fitted between the wall members 622 of the lower holding tool 62. Then, the lower surface of the upper holding tool 61 and the upper surface of the bottom member 621 of the lower holding tool 62 face each other with a predetermined interval therebetween.

The shape and the size of space surrounded by the inner surface of the groove-shaped concave member 623 of the lower holding tool 62 (= the upper surface of the bottom member 621, or the upper surface of the bottom member 621 and a part of the mutually facing surfaces of the wall members 622 in the vicinity of the bottom member 621) and the lower surface of the upper holding tool 61, when the upper mold 51 of the mold 5 and the lower mold 52 are closer to each other with the predetermined distance there between, become the shape and the size of the covering member 92f formed in the predetermined part of the wire harness 9f according to the embodiment of the present invention. Accordingly, the size and the shape of the inner surface of the groove-shaped concave member 623 of the lower holding tool 61 and the size and the shape of the lower surface of the upper holding tool 61 are set based on the size and the shape of the covering member 92f. Note that actually, the upper holding tool 61 is moved away and falls from the pressure surface 512 of the upper mold 51 of the mold 5 by its self weight; however, the description here is made on the assumption that it does not fall.

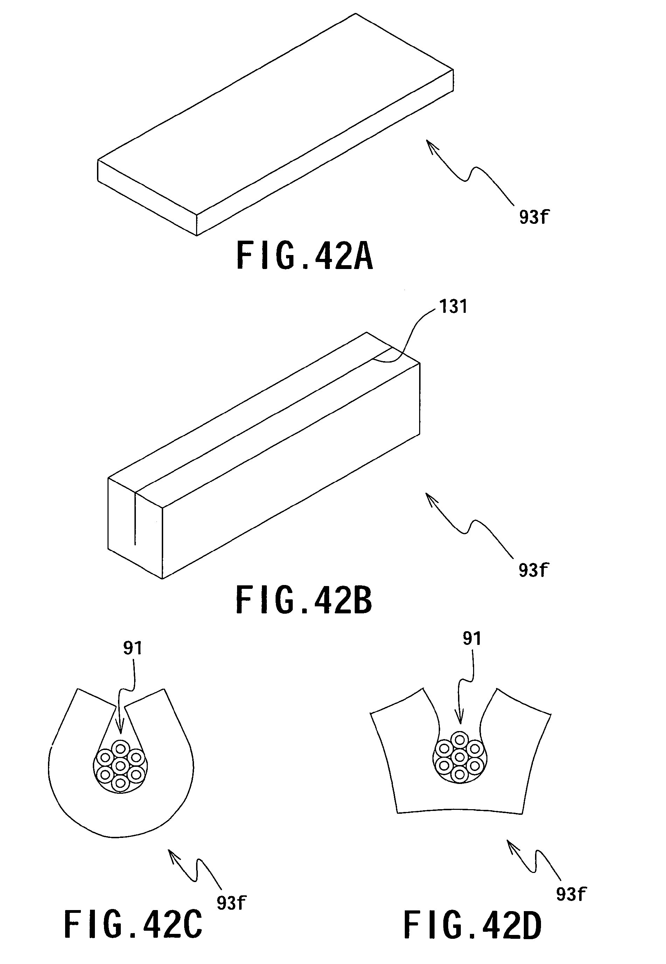

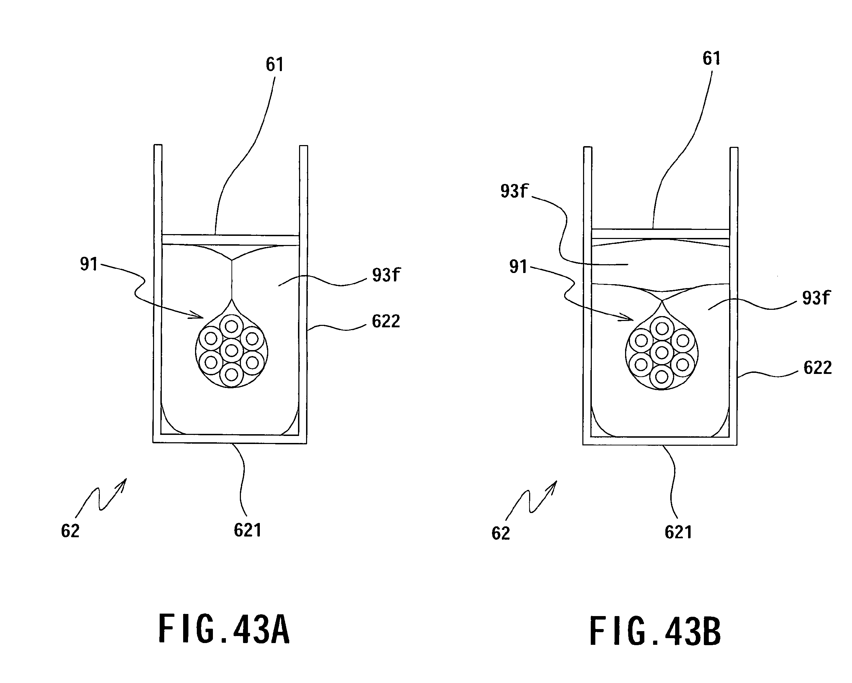

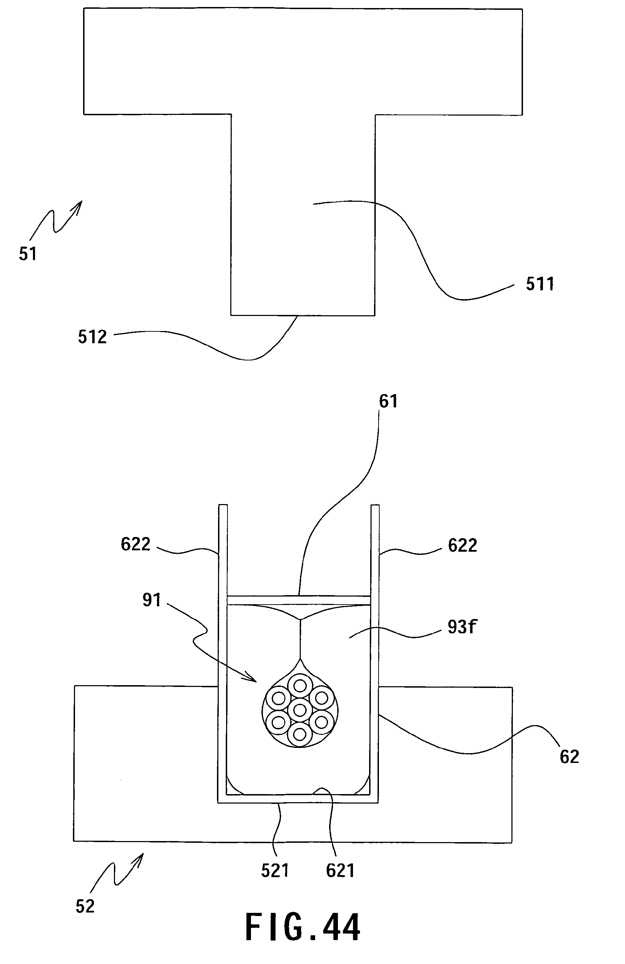

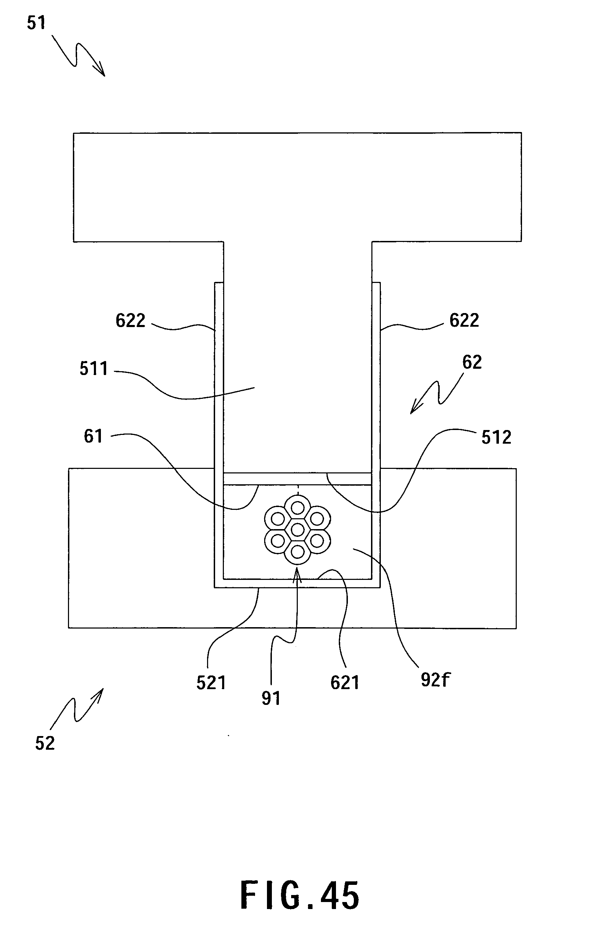

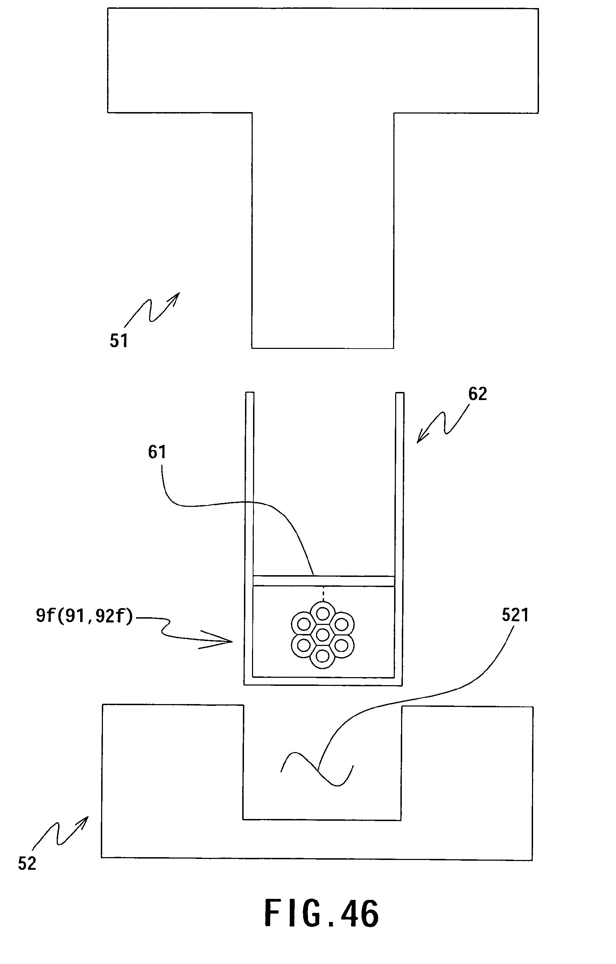

Figs. 42 to 46 are cross-sectional diagrams schematically showing predetermined processes included in the method for manufacturing the wire harness according to the eighth embodiment. More specifically, Fig. 42 is a diagram showing a process of wrapping the electric wires 91 in the molded body 93f. Fig. 43 is a diagram showing a process of accommodating the electric wires 91 and the molded body 93f in the lower holding tool 62 and placing the upper holding tool 61. Fig. 44 is a diagram showing a process of engaging the lower holding tool 62 with the engagement member 521 of the lower mold 52 of the mold 5. Fig. 45 is a diagram showing a process of heating and pressurizing the molded body 93f with the upper mold 51 and the lower mold 52 of the mold 5. Fig. 46 is a diagram showing a process of removing the electric wires 91 and the covering member 92f molded to have a predetermined cross-sectional shape from the upper mold 51 and the lower mold 52 of the mold 5.

First, as shown in Figs. 42(c) and (d), the electric wires 91 in the predetermined part of the wire harness 9f according to this embodiment are wrapped in the molded body 93f. The electric wire 91 has the core 91a formed of a conductor, and the covering member 91b which is formed of an insulator and which covers the core 91a. The covering member 91b of the electric wires 91 is formed with a material which is elastic-deformable and which has thermoplasticity. For example, it is formed of a thermoplastic resin material. The cross-sectional shape of the covering member 91b of the electric wires 91 is not limited. For example, a general approximately circular shape is applicable. Then, in the stage where the electric wires 91 are wrapped in the molded body 93f, a force to cause mutual press-contact is not applied to the electric wires 91, and the electric wires 91 are partially in line contact with each other.

As the molded body 93f, an approximately flat-plate shaped structure as shown in Fig. 42(a) or a bar-shaped structure in which a slit 131 (= a cut or groove formed from the outer peripheral surface to the inside) is formed along the axial direction as shown in Fig. 42 (b) is applicable. Then, when the approximately flat-plate shaped molded body 93f is applied, as shown in Fig. 42 (c), the molded body 93f is bended in an approximately "U" shape, so as to wrap-hold the electric wires 91. On the other hand, when the bar-shaped molded body 93f is applied, the electric wires 91 are inserted in the slit 131 formed in the molded body 93f, so as to wrap the electric wires 91 in the molded body.

The cross-sectional shape and size of the molded body 93f are acceptable as long as the cross-sectional area (the cross-sectional area including the electric wires 91) is larger than the cross-sectional area of the covering member 92f (the cross-sectional area including the electric wires 91) in the state where it wraps the electric wires 91. In other words, they are not particularly limited, as long as the contour line of the outer shape of the molded covering member 92f (the contour line of the outer shape of the cross section including the electric wires 91) is included inside the contour line of the outer shape of the cross section of the molded body 93f in the state where it wraps the electric wires 91.

Next, as shown in Fig. 43(a), the molded body 93f wrapping the electric wires 91 is accommodated in the groove-shaped concave member 623 of the lower holding tool 62, and the upper holding tool 61 is placed on the upper side of the accommodated molded body 93f. The molded body 93f accommodated in the groove-shaped concave member 623 of the lower holding tool 62 is held with the both wall members 623, thus maintained in the state where it wraps the electric wires 91.

Note that it may be arranged such that the electric wires 91 is wrapped in plural molded bodies 93f. For example, as shown in Fig. 43 (b), an arrangement using two molded bodies 93f, to wrap the electric wires 91 by holding the electric wires with one of the two molded bodies 93f and covering the electric wires 91 with the other one of the molded bodies 93f, is applicable. In this manner, the number of the molded bodies 93f is not limited.

Next, as shown in Fig. 44, the lower holding tool 62, in which the molded body 93f wrapping the electric wires 91 is accommodated, is engaged with the engagement member 521 of the lower mold 52 of the mold 5. That is, the lower holding tool 62 is placed on the upper side of the lower mold 52 of the mold 5.

The pressure surface 512 of the upper mold 51 of the mold 5 and the engagement member 521 of the lower mold 52 of the mold 5 are respectively maintained at a predetermined temperature with the heating means. As the "predetermined temperature", when the first non-woven fabric is applied to the molded body 93f, a temperature within the second plasticization temperature band of the first non-woven fabric is applied. When the second non-woven fabric of the foam is applied to the molded body 93f, a temperature equal to or higher than the fusing point of the material of the second non-woven fabric or the material of the foam and around the fusing point is applied.

Next, as shown in Fig. 45, the upper mold 51 and the lower mold 52 of the mold 5 are brought closer to each other. Then, the size and the shape of the space surrounded by the lower surface of the upper holding tool 61 and the inner surface of the groove-shaped concave member 623 of the lower holding tool 62 are set to the shape and the size of the molded covering member 92f. With this arrangement, the molded body 93f is pressurized and compression-deformed and heated with the upper mold 51 of the mold 5 and the lower mold 52 of the mold 5 via the upper holding tool 61 and the lower holding tool 62. Then, this state is maintained (i.e., the heating and the pressurization of the molded body 93f are continued for a predetermined period).

The "predetermined period" is as follows.

When the first non-woven fabric is applied to the molded body 93f, it is a period in which in the molded body 93f, the temperature of a part in contact with the inner surface of the groove-shaped concave member 623 of the lower holding tool 62 and the lower surface of the upper holding tool 61 and its peripheral part (in other words, the part which becomes the surface layer of the covering member 92f) rises to the second plasticization temperature band. However, it is a period in which the temperature of a part in contact with the electric wires 91 and its peripheral part (in other words, the part which becomes the central part of the covering member 92f) does not rise to the second plasticization temperature band. Especially, when the electric wire 91 has the core 91a and the covering member 91b, a period in which the covering member 91b is not damaged by heat (in other words, the covering member 91b of the electric wires 91 is not melted or its quality is not degraded by heat) is applied.

When the second non-woven fabric or the foam is applied to the molded body 93f, it is a period in which in the molded body 93f, the temperature of the part in contact with the inner surface of the groove-shaped concave member 623 of the lower holding tool 62 and the lower surface of the upper holding tool 61 and its peripheral part rises to a temperature equal to or higher than the fusing point of the second non-woven fabric or the foam. However, it is a period shorter than a period in which the temperature of the part in contact with the electric wires 91 and its peripheral part rises to the fusing point. Especially, when the electric wire 91 has the core 91a and the covering member 91b, a period in which the covering member 91b of the electric wires 91 is not damaged by heat is applied.

When the moldedbody 93f is heated and pressurized at the "predetermined temperature" for the "predetermined period", a force to cause mutual press-attachment is applied to the electric wires 91 via the molded body 93f. The electric wire 91 has the core 91a and the covering member 91b covering the core 91a, and the covering member 91b is formed of a thermoplastic-deformable material such as a resin material. Accordingly, when the force to cause mutual press-attachment is applied to the electric wires 91, the covering member 91b of the electric wires 91 is deformed, and the state of line contact is changed to the state of area contact. Accordingly, there is no gap among the electric wires 91 except unavoidable space, or the gap among the electric wires 91 is reduced.

Note that the "unavoidable space" means space formed among the electric wires 91 even when the electric wires 91 are closely attached to each other. That is, as the pressure applied from the upper mold 51 and the lower mold 52 of the mold 5 is increased, the degree of deformation of the covering member 91b of the electric wires 91 is increased, and the space formed among the covering members 91b of the electric wires 91 is reduced. However, it is difficult or impossible to cause them in completely close attachment without gap. In this manner, even when the covering members 91b of the electric wires 91 are pressurized and deformed and brought in area contact with each other, a gap remains among the covering members 91 of the electric wires 91. This gap is referred to as the "unavoidable space".

The heat emitted from the upper mold 51 and the lower mold 52 of the mold 5 is transmitted to the electric wires 91 via the molded body 93f. Accordingly, when the covering member 91b of the electric wires 91 is formed of a material having thermoplasticity (e.g., a thermoplastic resin material), the covering member 91b of the electric wires 91 is softened by the transmitted heat and is plastic-deformable. Accordingly, when a force to cause mutual press-attachment is applied to the electric wires, the softened covering members 91b of the electric wires 91 are deformed, and the gap among the electric wires 91 easily disappears or is easily reduced.

When the gap among the electric wires 91 easily disappears or is easily reduced, as a whole, the cross-sectional area of the predetermined part of the wire harness 9f according to the embodiment of the present invention is reduced. In this manner, according to the method for manufacturing the wire harness according to the embodiment of the present invention, it is possible to manufacture a wire harness with a small cross-sectional area.

Further, when the molded body 93f is heated and pressurized at the "predetermined temperature" for the "predetermined period", the covering member 92f is formed through the following processes.

When the first non-woven fabric is applied to the molded body 93f, the part of the molded body 93f in which the temperature has risen to the first plasticization temperature band is plastic-deformed by thermoplasticity. During the heating and the pressurization, the temperature of the surface layer of the molded body 93f (the part in contact with the inner surface of the groove-shaped concave member 623 of the lower holding tool 62 and the lower surface of the upper holding tool 61 and its peripheral part) is higher in comparison with that of the central part (the part in contact with the electric wires 91 and its peripheral part). Accordingly, the degree of the plastic deformation of the surface layer of the molded body 93f is higher in comparison with that of the central part. Accordingly, the density of the base fiber and the binder fiber of the molded body 93f is increased from the central part toward the surface layer.

Since the temperature of the surface layer of the molded body 93f rises to the second plasticization temperature band, the binder material of the binder fiber is melted, and welds the base fiber and the binder fiber. Accordingly, the surface layer of the molded body 93f, in the state where the density of the base fiber and the binder fiber is high, is welded with the binder material of the binder fiber, and therefore it becomes harder in comparison with the central part. Further, when the molded body 93f has a flat-plate shaped structure and bended to wrap the electric wires, the parts in contact at ends of the molded body 93f in the widthwise direction are welded with the molten binder material of the binder fiber. When the molded body 93f has a bar- shaped structure and the electric wires 91 are accommodated in the slit 131, the inner surfaces of the slit 131 are welded. When the electric wires 91 are wrapped in plural molded bodies 93f, the molten binder material of the binder fiber welds the contact surfaces of the plural molded bodies 93f. Accordingly, the molded body 93f has a structure to continuously cover the periphery of the electric wires 91.

When the second non-woven fabric or the foam is applied to the molded body 93f, in the molded body 93f, the part in which the temperature has risen to a temperature to cause plastic deformation by thermoplasticity is plastic-deformed. During the heating and the pressurization, the temperature of the surface layer of the molded body 93f is higher in comparison with the central part, and therefore the degree of plastic deformation of the surface layer of the molded body is higher in comparison with the central part. Accordingly, the density of the molded body 93f is increased from the central part toward the surface layer.

Since the temperature of the surface layer of the molded body 93f rises to a temperature equal to or higher than the fusing point, the surface layer of the molded body 93f is melted. Accordingly, when the second non-woven fabric is applied to the molded body 93f, the molten fibers are connected and integrated, and the fiber structure disappears. When the foam is applied to the molded body 93f, it is melted and the bubbles are released. Accordingly, in the surface layer of the molded body 93f, the density is higher and the hardness is increased in comparison with the fiber state or the foam state.

When the molded body 93f has a flat-plate shaped structure, and is bended to wrap the electric wires 91, the ends of the molded body 93f in the widthwise direction are melted and welded. When the molded body 93f has a bar-shaped structure and the electric wires are accommodated in the slit 131, the inner surfaces of the slit 131 are melted and welded. When the electric wires are wrapped in plural molded bodies 93f, the contact surfaces of the molded bodies 93f are melted and welded. Accordingly, the molded body 93f has a structure to continuously cover the periphery of the electric wires 91.

In this manner, regardless of whether the first non-woven fabric, the second non-woven fabric or the foam is applied as the molded body 93f, in the molded covering member 92f, the surface layer is harder in comparison with the central part and harder than the molded body 93f before the molding. On the other hand, the central part is in approximately the same state as that before the pressure-molding. In this manner, by hardening the surface layer of the covering member 92f, the hardened surface layer has a function of maintaining and/or a function of protecting the axial shape of the predetermined part of the wire harness according to the embodiment of the present invention. On the other hand, since the central part of the covering member 92f can be maintained in the soft state before the pressure-molding, it has a function as a shock-absorbing material or a sound proof material for the electric wires 91.

Note that the heat emitted from the lower mold 52 of the mold 5 is transmitted to the molded body 93f through the lower holding tool 62. Similarly, the heat emitted from the upper mold 51 of the mold 5 is transmitted to the molded body 93f through the upper holding tool 61. As described above, since the lower holding tool 62 and the upper holding tool 61 are formed of a material having high thermal conductivity and have a structure to easily transmit heat from the outer surface toward the inner surface, the heat emitted from the upper mold 51 and the lower mold 52 of the mold 5 is easily transmitted to the molded body 93f. Accordingly, it is not necessary to prolong the above-described "predetermined period".

Next, as shown in Fig. 46, after the elapse of the predetermined period, the upper mold 51 and the lower mold 52 of the mold 5 are separated. Then, the predetermined part of the wire harness 9f (i.e., the molded covering member 92f and the part of the electric wires 91 covered with the covering member 92f) according to the embodiment of the present invention, in the state where it is placed on the lower holding tool 62, is removed from the lower mold 52 of the mold 5.

Thereafter, the predetermined part of the wire harness 9f according to this embodiment, in the state where it is held with the upper holding tool 61 and the lower holding tool 62, is cooled. Note that the cooling method is not particularly limited. For example, a method of placing in a refrigerator, a method of blowing gas at a normal or low temperature, and further, a method of leaving at a normal temperature, or the like, is applicable.

The upper holding tool 61 and the lower holding tool 62 are formed of a material having high thermal conductivity, and have a structure to easily transmit heat in the vertical direction. Accordingly, the heat of the molded covering member 92f is quickly released to the outside through the upper holding tool 61 and the lower holding tool 62. Further, when the upper holding tool 61 and the lower holding tool 62 are formed of a metal plate or the like and formed by sheet metal working or the like (i.e., they have a structure where the mass is small), since the thermal storage amount is small, temperature drop is started immediately after the removal from the lower mold 52 of the mold 5. Accordingly, the predetermined part of the wire harness 9f according to the embodiment of the present invention, removed from the lower mold 52 of the mold 5, is not heated with the upper holding tool 61 and the lower holding tool 62. According to this arrangement, it is possible to prevent overheating the predetermined part of the wire harness 9f according to the embodiment of the present invention. Accordingly, it is possible to easily control the property of the covering member 92f, and it is possible to prevent the electric wires 91 from being damaged by heat.

Note that preferably, it is arranged such that, during the cooling, the distance between the lower surface of the upper holding tool 61 and the upper surface of the bottom member 621 of the lower holding tool 62 is not changed (especially, the distance is not increased), by holding the upper holding tool 61 and the lower holding tool 62 with a clamp or the like. According to this arrangement, it is possible to prevent the molded covering member 92f from restoring the initial shape, and it is possible to improve the accuracy of the size of the covering member 92f.

Then, when the temperature of the molded covering member 92f is lowered to a temperature at which plastic deformation by thermoplasticity does not occur, the predetermined part of the wire harness according to the embodiment of the present invention is removed from the lower holding tool 62.

The wire harness 9f according to the embodiment of the present invention is manufactured through the above processes.

According to the method for manufacturing the wire harness according to the embodiment of the present invention, it is possible to attain the following effects.

According to the method for manufacturing the wire harness according to the eighth embodiment, as the covering members 91b of the electric wires 91 are deformed, the electric wires 91 are closely attached without gap (or almost without gap). More specifically, the covering members 91b of the electric wires 91 are, not in line contact, but in surface contact, with each other. Accordingly, it is possible to reduce the cross-sectional size of the predetermined part of the wire harness 9f according to the embodiment of the present invention, in comparison with the arrangement where the electric wires 91 are in line contact with each other.

That is, in the state where the covering members 91b of the electric wires 91 are not deformed, even when the electric wires 91 are bundled, since the covering members 91b of the electric wires 91 are in line contact with each other, a gap is formed among the electric wires 91. On the other hand, according to the method for manufacturing the wire harness according to the embodiment of the present invention, since the covering members 91b of the electric wires 91 are deformed and brought into surface contact with each other, a gap among the electric wires 91 disappears or the gap can be reduced.

Further, according to the method for manufacturing the wire harness according to the embodiment, it is possible to bring the electric wires 91 elastically in contact with the covering member 92f. Accordingly, a gap is not formed between the electric wires 91 and the covering member 92f, and it is possible to reduce the cross-sectional size of the covering member 92f.

Themoldedcoveringmember92f, in the state where it is accommodated in the groove-shaped concave member 623 of the lower holding tool 62, is removed from the lower mold 52 of the mold 5. Accordingly, it is possible to prevent the covering member 92f from being deformed by its self weight or the like. Further, the periphery of the molded covering member 92f is covered with the upper holding tool 61 and the lower holding tool 62. Accordingly, when the molded covering member 92f is removed from the lower mold 52 of the mold 5, it is not necessary to directly touch the covering member 92f, and contact between a foreign material and the covering member 92f is prevented. In this manner, it is possible to prevent the occurrence of unexpected deformation or undesired deformation in the covering member 92f.

According to the method for manufacturing the wire harness according to the embodiment of the present invention, it is easy to harden the surface layer of the covering member 92f and maintain the central part in a soft state (the state having the physical property of the molded body before the molding).

Further, according to the method for manufacturing the wire harness according this embodiment, the molded body 93f accommodated in the lower holding tool 62 entirely becomes the covering member 92f. Accordingly, after the molding of the covering member 92f, an operation to eliminate unnecessary part (so-called trimming) is unnecessary. Accordingly, it is possible to reduce the number of steps (or prevent increment in the number of steps). Further, it is possible to eliminate waste of the molded body 93f.

In the arrangement using the lower holding tool 62, in comparison with the arrangement without it (= the arrangement where the molded body 93f is directly pressurized and heated with the lower mold 52 of the mold 5), it is possible to attain the following effects.

In the arrangement where the molded body 93f is pressurized and heated with the upper mold 51 and the lower mold 52 of the mold 5 without using the lower holding tool 62, an operation to directly provide the molded body 93f on the upper surface of the lower mold 52 of the mold 5 and an operation to further provide the electric wires 91 thereon are required. Accordingly, when it takes much time in these operations (especially, when a long time passes in the state where the molded body 93f is provided on the upper side of the lower mold 52 of the mold 5), the molded body 93f is heated with the heating means of the lower mold 52 of the mold 5 before the pressurize-molding. Accordingly, there is a possibility that the molded body 93f is plastic-deformed in an unexpected shape by thermoplasticity, and there is a possibility that the molded body 93f cannot be molded in a predetermined shape.

Further, when a long time elapses in the state where the molded body 93f is placed on the upper side of the lower mold 52 of the mold 5, there is a possibility that the temperature of the entire molded body 93f rises to the predetermined temperature. When the molded body 93f is the first non-woven fabric, when the temperature of the entire molded body 93f rises to the predetermined temperature, the binder material of the binder fiber is melted all over the molded body 93f. On the other hand, when the molded body 93f is the second non-woven fabric or the foam, there is a possibility that the entire molded body 93f is melted. As a result, there is a possibility that in the molded covering member 92f, the central part (= the part in contact with the electric wires 91 and its peripheral part) in addition to the surface layer is also hardened. In this case, since the central part of the covering member 92f loses elasticity (or become hardly elastic-deformable), it cannot perform the function as a shock-absorbing material or the function as the shock-absorbing material is lowered.

Further, when a long time elapses in the state where the molded body 93f is placed on the lower mold 52 of the mold 5, the heat of the lower mold 52 of the mold 5 is transmitted to the electric wires 91 through the molded body 93f, and there is a possibility that the covering member 91b of the electric wires 91 is damaged by heat.

Further, the upper mold 51 and the lower mold 52 of the mold 5 are maintained at a temperature where the molded body 93f is plastic-deformable by thermoplasticity. Accordingly, in this state, when an operation to place the molded body 93f and the electric wires 91 on the lower mold 52 of the mold 5 is performed, there is a possibility that an operator touches the upper mold 51 of the mold 5 and/or the lower mold 52 of the mold 5 and gets burned.

Note that it may be arranged such that the upper mold 51 and the lower mold 52 of the mold 5 are heated only upon pressurization of the molded body 93f. According to this arrangement, it is possible to perform the operation to provide the molded body 93f and the electric wires 91 on the lower mold 52 of the mold 5 when the temperature of the lower mold 52 of the mold 5 is low (= a temperature at which the molded body 93f is not plastic-deformed and a temperature at which the operator does not get burned). Accordingly, it is possible to prevent the occurrence of unexpected deformation of the molded body 93f and the operator's burn injury. However, in this arrangement, it is necessary to heat and cool the upper mold 51 and the lower mold 52 of the mold 5 every time the wire harness is manufactured (i.e., every time one covering member 92f is molded). Accordingly, time required for the manufacturing is increased considerably.

Further, this method has the following problem. In the arrangement where the upper mold 51 and the lower mold 52 of the mold 5 are heated only upon pressurization (e.g., the heating of the upper mold 51 and the lower mold 52 of the mold 5 is started immediately after the start of the pressurization), the molded body 93f is heated before the temperature of the upper mold 51 and the lower mold 52 of the mold 5 rises to the above-described predetermined temperature. Then, when the temperature of the upper mold 51 and the lower mold 52 of the mold 5 rises to the predetermined temperature, the heat is transmitted from the surface of the molded body 93f to the inside, and the temperature of the central part of the molded body 93f rises to the predetermined temperature in some cases. As a result, similarly to the arrangement without the lower holding tool 62, there is a possibility that the central part of the covering member 92f loses elasticity and the covering member 92f does not have the predetermined performance. Further, when the temperature of the central part is high, there is a possibility that the covering member 91b of the electric wires 91 (generally formed of a thermoplastic synthetic resin material) is damaged by heat. When the covering member 91b of the electric wires 91 is damaged by heat, there is a possibility that it is impossible to maintain the predetermined performance of the wire harness e.g. it is impossible to maintain insulation between the electric wires 91.

On the other hand, according to the method for manufacturing the wire harness according to this embodiment, during the operation to accommodate the molded body 93f and the electric wires 91 in the lower holding tool 62, it is not necessary to heat the lower holding tool 62. Accordingly, it is possible to heat the molded body 93f only upon pressurization with the upper mold 51 and the lower mold 52 of the mold 5. In this manner, since the molded body 93f is not heated before pressurization, there is no possibility of the occurrence of unexpected deformation of the molded body 93f before the pressurization. Accordingly, it is possible to accurately mold the molded body 93f in the shape of the covering member.

Further, it is possible to perform heating and pressurization immediately after the lower holding tool 62 in which the molded body 93f and the electric wires 91 are accommodated is placed on the lower mold 52 of the mold 5. That is, the molded body 93f is not heated for a long time before the start of the pressurization. Accordingly, it is possible to perform pressurization before the heat is transmitted to the central part of the molded body 93f (= before the temperature of the central part of the molded body 93f rises to the predetermined temperature). Accordingly, as it is possible to prevent the central part of the molded body 93f from being hardened, the molded covering member 92f has its function as a sound proof material, a shock-absorbing material and the like.

Further, it is possible to perform the operation to accommodate the molded body 93f and the electric wires 91 in the lower holding tool 62 in a position away from the upper mold 51 and the lower mold 52 of the mold 5. Accordingly, it is possible to perform the operation in wide space and to easily perform the operation. That is, generally the upper mold 51 and the lower mold 52 of the mold 5 are built in a pressing machine. Therefore, it is necessary to perform the operation to directly provide the molded body 93f and the electric wires 91 in the lower mold 52 of the mold 5 in limited space between the upper mold 51 and the lower mold 52 of the mold 5, and the upper mold 51 of the mold 5 may be an disincentive. On the other hand, in the arrangement using the lower holding tool 62, since it is possible to perform the operation regardless of operation space, it is possible to perform the operation in a position without any disincentive. Further, in the operation to accommodate the molded body 93f and the electric wires 91 in the lower holding tool, since the operator does not touch the upper mold 51 of the mold 5 and/or the lower mold 52 of the mold 5, there is no possibility of burn injury.

Further, in comparison with the arrangement where the upper mold 51 and the lower mold 52 of the mold 5 are heated only upon pressurization, it is possible to maintain the upper mold 51 and the lower mold 52 of the mold 5 at the predetermined temperature in addition to the time of pressurization and other time (e.g. in stand-by time). Accordingly, it is possible to start heating and pressurization immediately after the completion of the operation to accommodate the molded body 93f and the electric wires 91 in the lower holding tool 62. Accordingly, it is possible to reduce time required for manufacturing the wire harness 9f according to the embodiment of the present invention. Further, since it is possible to maintain the upper mold 51 and the lower mold 52 of the mold 5 always at the predetermined temperature, it is possible to easily control of the temperature of the molded body 93f upon pressurization.

Further, in the arrangement using the lower holding tool 62, it is possible to prevent the occurrence of unexpected deformation (or undesired deformation) upon removal of the predetermined part of the manufactured wire harness 9f according to this embodiment from the lower mold 52 of the mold 5 and during the cooling after the removal.

That is, in the arrangement without the lower holding tool 62, it is necessary to directly hold the wire harness 9f according to this embodiment upon removal from the lower mold 52 of the mold 5 after the pressurization. At least the surface layer of the covering member 92f immediately after the heating and the pressurization with the upper mold 51 and the lower mold 52 of the mold 5 has a high temperature (= a temperature at which it is plastic deformable by thermoplasticity). Accordingly, when the covering member 92f is held, there is a possibility that the held part and its peripheral part are deformed. Further, upon removal from the lower mold 52 of the mold 5, the covering member 92f is distortion-deformed by its self weight or the like in some cases. Further, there is a possibility that deformation occurs even after the removal from the lower mold 52 of the mold 5 and while it has a temperature at which plastic deformation by thermoplasticity is possible.

On the other hand, according to the method for manufacturing the wire harness according to this embodiment of the present invention, it is possible to remove the molded covering member 92f, in the state where it is placed on the lower holding tool 62, from the lower mold 52 of the mold 5. Further, it is possible to cool the covering member 92f removed from the lower mold 52 of the mold 5 in the state where it is placed on the lower holding tool 62.

That is, when the covering member 92f is removed from the lower mold 52 of the mold 5, since it is possible to hold the lower holding tool 62 and remove it, it is not necessary to directly touch the covering member 92f. Further, since the covering member 92f is supported with the lower holding tool 62, it is possible to remove the covering member 92f, in the state where the pressurized and molded shape is maintained, from the lower mold 52 of the mold 5. Further, it is possible to cool the covering member 92f in the state where it is placed on the lower holding tool 62. Accordingly, it is possible to prevent the occurrence of unexpected deformation (or undesired deformation) in the covering member 92f after the pressurization.

Note that to prevent the occurrence of unexpected deformation in the molded covering member 92f, it may be arranged such that the upper mold 51 and the lower mold 52 of the mold 5 are cooled and then it is removed. However, in this arrangement, since much time is required for cooling the upper mold 51 and the lower mold 52 of the mold 5, the time required for manufacturing the wire harness 9 according to this embodiment is prolonged. Further, since it is necessary to perform heating and cooling on the upper mold 51 and the lower mold 52 of the mold 5 upon each pressurization, the above-described problem occurs. Further, before the lower mold 52 of the mold 5 is cooled, the molded covering member 92f is continuously heated by heat of the lower mold 52 of the mold 5. Accordingly, the heat is transmitted to the central part of the covering member 92f, and there is a possibility of progress of plastic deformation in the central part, in addition to a possibility that the covering member 91b of the electric wires 91 is damaged by heat.

Further, in the above-described embodiment, the arrangement using the upper holding tool 61 has been shown. However, an arrangement without it (= the arrangement where the molded body 93f is directly pressurized with the upper mold 52 of the mold 5) is also applicable.

The arrangement without the upper holding tool 61, in comparison with the arrangement using it, attains an effect that it is possible to reduce the number of tools (jigs) required for manufacturing the wire harness 9f according to this embodiment. Further, since it is not necessary to provide the upper holding tool 61, it is possible to reduce the number of steps.

On the other hand, the arrangement using the upper holding tool 61, in comparison with the arrangement without it, attains the following effects.

When the upper mold 51 and the lower mold 52 of the mold 5 are separated after the molding of the covering member 92f, since pressure applied to the molded covering member 92f disappears, the covering member 92f may be deformed so as to restore the initial shape (i.e., a phenomenon corresponding to spring back in plastic processing for metal or the like occurs in some cases) Especially, in the central part of the molded covering member 92f, since the temperature upon heating and pressurization is lower in comparison with the surface layer, it is elastic-deformed in some cases. Accordingly, the cross-sectional shape and size of the molded covering member 92f are changed (especially, increased) in some cases.

According to the arrangement using the upper holding tool 61, while the predetermined part of the wire harness 9f according to this embodiment is cooled (= after the removal from the lower mold 52 of the mold 5 before it has a temperature at which plastic deformation by thermoplasticity does not occur), it is possible to continuously add a compression force to the covering member 92f with the upper holding tool 61 and the lower holding tool 62. Accordingly, it is possible to prevent the molded covering member 92f from restoring the size and the shape before the molding. Then, when the covering member 92f has a temperature at which plastic deformation by thermoplasticity does not occur, the molded shape is maintained and is not deformed. Accordingly, it is possible to improve the accuracy of the size of the covering member 92f.

Further, after the pressurization, upon separation between the upper mold 51 and the lower mold 52 of the mold 5, it is possible to prevent attachment of the covering member 92f to the upper mold 51 of the mold 5.

That is, during the heating of the molded body 93f or immediately after the molding of the covering member 92f, when the first non-woven fabric is applied, the temperature of the surface layer of the molded body 93f or the covering member 92f has risen to a temperature equal to or higher than the fusing point of the binder material of the binder fiber, and when the second non-woven fabric or the foam is applied, the temperature has risen to the fusing point of the thermoplastic material. Accordingly, the surface of the member has viscosity in some cases. In the arrangement without the upper holding tool 61 in which the surface has viscosity (i.e., the surface of the upper mold 51 of the mold 5 is directly in contact with the molded body 93f or the covering member 92f), in some cases, the upper side of the covering member 92f is adhered to the upper mold 51 of the mold 5, and the lower side is adhered to the lower holding tool 62. Accordingly, upon separation between the upper mold 51 and the lower mold 52 of the mold 5, a vertically pulling force is applied to the covering member 92f. As a result, the welded parts are peeled away and there is a possibility that an opening is formed in the covering member 92f. Especially, in the arrangement using plural molded bodies 93f, there is a possibility of separation of the covering member 92f into plural pieces.

On the other hand, in the arrangement using the upper holding tool 62, upon separation between the upper mold 51 and the lower mold 52 of the mold 5, the vertically pulling force is not applied to the molded covering member 92f. Accordingly, it is possible to prevent the covering member 92f from being damaged and separation thereof into plural pieces.

Further, according to the method for manufacturing the wire harness according to this embodiment, in comparison with the arrangement using the protector of shape maintenance member which is an injection molded product, the following effects can be attained.

The upper mold 51 and the lower mold 52 of the mold 5 used in the method for manufacturing the wire harness according to this embodiment have a simple structure in comparison with the metal dies for manufacturing injection moldedproducts (so-called injection molding metal dies) . Accordingly, they can be manufactured at a low cost, and it is possible to reduce the equipment cost. Further, according to the method for manufacturing the wire harness according to this embodiment, in comparison with the arrangement using the protector of shape maintenance member which is an injection molded product, since a cheap material (thermoplastic material) can be applied to the molded body 93f, it is possible to manufacture the wire harness 9f at a low cost. Accordingly, it is possible to realize a low price of the product.

Further, the operation to mold the covering member 92f is simple in comparison with that in the method of fitting the electric wires in the protector or the shape maintenance member which is an injection molded product. Especially, in the arrangement using the protector of shape maintenance member which is an injection molded product, the process of manufacturing the protector or the shape maintenance member and the process of attaching the manufactured protector of the shape maintenance member to the wire harness are separate processes. On the other hand, according to the method for manufacturing the wire harness according to this embodiment, it is possible to mold the covering member 92f and at the same time cover the electric wires 91. Accordingly, it is possible to reduce the number of steps in the manufacturing of the wire harness 9f.

Further, in comparison with the arrangement where the tape is wrapped around so as to maintain the axial shape of the electric wires 91 in a predetermined shape, since the content of the operation is greatly simplified, it is possible to greatly reduce the labor and time required for the manufacturing. Further, in comparison with the arrangement to manually wrap around the tape, it is possible to stabilize the quality. Further, in comparison with the wire harness in which the tape is wrapped around the electric wires, the appearance of the wire harness 9f manufactured by the method for manufacturing the wire harness according to the embodiment of the present invention is good.

In addition, in the method for manufacturing the wire harness according to this embodiment, upon mass production of the wire harness 9f, by using plural lower holding tools 62, it is possible to reduce the operation cycle. For example, when three lower holding tools 62 are used, the following operations are possible.

While the molded body and the electric wires accommodated in a first lower holding tool 62 are heated and pressurized with the upper mold 51 and the lower mold 52 of the mold 5, an operation to accommodate the molded body 93f and the electric wires 91 in a second lower holding tool 62 is performed. When the pressurization of the molded body 93f and the electric wires 91 placed on the first lower holding tool 62 is completed and while they are cooled, the molded body 93f and the electric wires 91 placed on a second lower holding tool 62 are heated and pressurized with the upper mold 51 and the lower mold 52 of the mold 5. Concurrently, an operation to accommodate the molded body 93f and the electric wires 91 in a third lower holding tool 62 is performed.

Then, when the pressurization of the molded body 93f and the electric wires 91 accommodated in the second lower holding tool 62 is completed and while they are cooled, the molded body 93f and the electric wires 91 accommodated in the third lower holding tool 62 are heated and pressurized with the upper mold 51 and the lower mold 52 of the mold 5. Concurrently, an operation to accommodate the molded body 93f and the electric wires in the first lower holding tool 62 (after the cooling, the covering member 92f is removed and it is in an empty state) is performed. Hereinbelow, these processes are repeated.

In this manner, by using plural lower holding tools 62 and maintaining the upper mold 51 and the lower mold 52 of the mold 5 always at a predetermined temperature , it is possible to concurrently perform the "operation to accommodate the molded body 93f and the electric wires 91 in the lower holding tool 62", the "heating and pressurization", and the "cooling". Accordingly, it is possible to reduce the operation cycle, and it is possible to reduce time required for the manufacturing upon mass production or the like.

### [Industrial Applicability]

As described above, the various embodiments of the present invention have been described in detail. However, the present invention is not limited to the above-described respective embodiments at all, and various changes can be made within the scope not departing from the subject matter of the present invention.

In the method for manufacturing the wire harness according to the above-described respective embodiments of the present invention, the arrangement where the cross-sectional shape of the main body of the shape maintenance member or the cross-sectional shape of the entire shape maintenance member is formed to have an approximately hexagonal shape or an approximately circular shape and the arrangement where it is formed to have an approximately circular shape are shown. However, the cross-sectional shape of the wire harness is not limited. Generally, the cross-sectional shape of the wire harness is set in correspondence with the shape of place where the manufactured wire harness is provided.

For example, the cross-sectional shape of the main body of the shape maintenance member or the cross-sectional shape of the entire shape maintenance member may be an approximately rectangular shape or the like. Further, it may be a vertically and laterally asymmetric shape. When the cross-sectional shape is an approximately rectangular shape, an arrangement where a groove-shaped concave member having an approximately rectangular cross-sectional shape is formed on the upper side of the lower holding tool, and the pressure member is formed on the both sides of this groove-shaped concave member is applied. Then an arrangement where a groove-shaped concave member having an approximately rectangular cross-sectional shape is formed on the lower side of the upper mold (when the upper holding tool is used, on the lower side of the upper holding tool), and the pressure member is formed on the both sides of the groove-shaped concave member, is applied. In this manner, by forming the cross-sectional shape of the groove-shaped concave member formed on the upper side of the lower holding tool and that formed on the lower side of the upper mold (when the upper holding tool is used, on the lower side of the upper holding tool) in a predetermined shape, it is possible to mold the cross-sectional shape of the shape maintenance member in the predetermined part of the wire harness in various shapes.

Further, the arrangement where the cross-sectional shape of the covering member 92f is also formed to have an approximately rectangular shape has been shown. However, the cross-sectional shape and size of the covering member 92f are not particularly limited.

For example, the cross-sectional shape of the covering member 92f may be an approximately hexagonal shape or an approximately circular shape. Further, it may be a vertically or laterally asymmetrical shape. When the cross-sectional shape is an approximately hexagonal shape, as the lower holding tool 62, an arrangement where the groove-shaped concave member 623 having an approximately trapezoidal cross-sectional shape is formed on the upper side is applied. Then, as the upper holding tool 61, an arrangement where a groove-shaped concave member having an approximately trapezoidal cross-sectional shape opened downward is formed is applied. In this manner, by forming the cross-sectional shape of the upper surface of the bottom member 621 of the lower holding tool 62 and the cross-sectional shape of the lower surface of the upper holding tool 61 in various shapes, it is possible to mold the cross-sectional shape of the covering member 92f provided in the predetermined part of the wire harness 9f in various shapes.

## Claims

1. A method for manufacturing a wire harness in which a periphery of a predetermined part of electric wires is covered with a thermoplastic material, comprising:
placing the predetermined part of the electric wires and the thermoplastic material, in a state where the predetermined part of the electric wires is held or wrapped in the thermoplastic material, on an upper side of a lower holding tool;
heating the thermoplastic material holding the predetermined part of the electric wires to a predetermined temperature, while pressurizing the thermoplastic material holding the predetermined part of the electric wires, in a state where it is placed on the upper side of the lower holding tool, by pressing a lower side of the lower holding tool with one of a pair of molds having heating means and pressing the thermoplastic material holding the predetermined part of the electric wires, placed on the lower holding tool, with the other one of the pair of molds, to cover the periphery of the predetermined part of the electric wires with the thermoplastic material and welding contact surfaces of the thermoplastic material; and
thereafter, removing the predetermined part of the electric wires covered with the thermoplastic material, in the state where it is placed on the upper side of the lower holding tool, from the pair of molds.

2. The method for manufacturing the wire harness according to claim 1, wherein, when the predetermined part of the electric wires covered with the thermoplastic material, in the state where the predetermined part of the electric wires is placed on the upper side of the lower holding tool, is removed from the pair of molds, the thermoplastic material, in the state where the predetermined part of the electric wires covered with the thermoplastic material is placed on the upper side of the lower holding tool, is cooled.

3. The method for manufacturing the wire harness according to claim 1 or 2,
wherein a concave member capable of accommodating the predetermined part of the electric wires is formed in the other one of the pair of molds and at least upper one of the lower holding tool, and a pressure member to apply a compression force to the contact surfaces of the thermoplastic material is formed on the outer side of the concave member, and
wherein parts of the contact surfaces of the thermoplastic material to which the compression force is applied with the pressure member are welded.

4. A method for manufacturing a wire harness in which a periphery of a predetermined part of electric wires is covered with a thermoplastic material, comprising:
providing the predetermined part of the electric wires and the thermoplastic material, in a state where the predetermined part of the electric wires is held or wrapped in the thermoplastic material, between an upper side of a lower holding tool and a lower side of an upper holding tool;
pressurizing the thermoplastic material holding the predetermined part of the electric wires, in the state where it is held with the lower holding tool and the upper holding tool, by pressing the lower side of the lower holding tool with one of a pair of molds having heating means and pressing the upper side of the upper holding tool with the other one of the pair of molds and heating the thermoplastic material to a predetermined temperature, to cover a periphery of the predetermined part of the electric wires with the thermoplastic material and weld contact surfaces of the thermoplastic material; and
thereafter, removing the predetermined part of the electric wires covered with the thermoplastic material, in the state where it is held with the lower holding tool and the upper holding tool, from the pair of molds.

5. The method for manufacturing the wire harness according to claim 4, wherein when the predetermined part of the electric wires covered with the thermoplastic material, in the state where it is held between the lower holding tool and the upper holding tool, is removed from the pair of molds, then the thermoplastic material, in the state where the predetermined part of the electric wires covered with the thermoplastic material is held between the lower holding tool and the upper holding tool, is cooled.

6. The method for manufacturing the wire harness according to claim 5,
wherein a concave member capable of accommodating the predetermined part of the electric wires is formed in at least one of the upper side of the lower holding tool and the lower side of the upper holding tool, and a pressure member to apply a compression force to the contact surfaces of the thermoplastic material is formed on the outer side of the concave member, and
wherein parts of the contact surfaces of the thermoplastic material to which the compression force is applied with the pressure member are welded.

7. The method for manufacturing the wire harness according to claim 3 or 6, wherein in the thermoplastic material, a surface layer of a part fitted in the concave member is heated to the predetermined temperature, plastic-deformed and hardened, to have hardness improved in comparison with a central part of the part of the thermoplastic material fitted in the concave member.

8. The method for manufacturing the wire harness according to any one of claims 1 to 7,
wherein side walls to hold the thermoplastic material are formed on the both sides of the lower holding tool, and
wherein the electric wires and the thermoplastic material, placed on the upper side of the lower holding tool, by being held with the side walls on the both sides, are maintained in a state where they hold or wrap the predetermined part of the electric wires.

9. The method for manufacturing the wire harness according to claim 8,
wherein the thermoplastic material has two separate thermoplastic materials, and
wherein, as the two thermoplastic materials are held with the side walls on the both sides formed in the lower holding tool, the predetermined part of the electric wires is held between the two thermoplastic materials.

10. The method for manufacturing the wire harness according to claim 8,
wherein as the thermoplastic material is held between the side walls on the both sides formed in the lower holding tool, the thermoplastic material is maintained in a state where it is bended, and
wherein the predetermined part of the electric wires is maintained in the state where it is held or wrapped inside the bended thermoplastic material.

11. The method for manufacturing the wire harness according to any one of claims 1 to 10,
wherein a pressure projection to pressurize the thermoplastic material is provided on at least one of the pair of molds, and
wherein upon pressurization of the thermoplastic material holding the predetermined part of the electric wires, one of the contact surfaces of the thermoplastic material holding the predetermined part of the electric wires is engaged with the other surface by engaging the pressure projection with the thermoplastic material.

12. The method for manufacturing the wire harness according to any one of claims 1 to 11, wherein, prior to pressurization of the thermoplastic material holding the predetermined part of the electric wires, a connection strength improving member to improve connection strength between the electric wires and the thermoplastic material is previously fixed to the predetermined part of the electric wires.

13. The method for manufacturing the wire harness according to any one of claims 1 to 12,
wherein, prior to pressurization of the thermoplastic material holding the predetermined part of the electric wires, a shield material having an extension part is previously attached to the outer periphery of the predetermined part of the electric wires,
wherein the thermoplastic material is pressurized in a state where the extension part of the shield material is held between the thermoplastic material, and
wherein a tieback member electrically conductive to the extension part of the shield material is attached to the thermoplastic material.

14. The method for manufacturing the wire harness according to any one of claims 1 to 13, wherein, when the predetermined part of the electric wires covered with the thermoplastic material is removed from the pair of molds, by further pressurizing and bending the predetermined part of the electric wires covered with the thermoplastic material while heating it, the predetermined part of the electric wires covered with the thermoplastic material is bended to a predetermined shape.

15. The method for manufacturing the wire harness according to any one of claim 1 to 13, wherein, when the predetermined part of the electric wires covered with the thermoplastic material is removed from the pair of molds, before its temperature is lowered to a temperature at which a softened state of the thermoplastic material cannot be maintained, by further pressurizing and bending the predetermined part of the electric wires covered with the thermoplastic material, the predetermined part of the electric wires covered with the thermoplastic material is bended to a predetermined shape.

16. A method for manufacturing a wire harness in which a predetermined part has a plurality of electric wires each including a core covered with a covering material and a covering member to cover the plurality of electric wires, comprising:
wrapping the plurality of electric wires in a member having thermoplasticity; and
by pressurizing the plurality of electric wires and the thermoplastic member wrapping the plurality of electric wires with a mold having heating means while heating them to a predetermined temperature, deforming the covering material of the plurality of electric wires to closely attach the plurality of electric wires to each other, and plastic-deforming the thermoplastic member to mold it to have a predetermined cross-sectional shape.

17. The method for manufacturing the wire harness according to claim 16, wherein the covering material of the plurality of electric wires is softened by heat emitted from the heating means of the mold to closely attach them to each other.

18. The method for manufacturing the wire harness according to claim 17,
wherein the thermoplastic member and the plurality of electric wires are accommodated in one holding tool in which a groove-shaped concave member is formed in a state where the thermoplastic member wraps the plurality of electric wires, and
wherein the thermoplastic member and the plurality of electric wires are pressurized while they are heated with the mold via the holding tool.

19. The method for manufacturing the wire harness according to claim 18, wherein, after the thermoplastic member and the plurality of electric wires are pressurized while they are heated with the mold via the holding tool, the thermoplastic member and the plurality of electric wires, in the state where they are accommodated in the one holding tool, are cooled.

20. The method for manufacturing the wire harness according to claim 19,
wherein the thermoplastic member and the plurality of electric wires are accommodated in the one holding tool in which the groove-shaped concave member is formed, in the state where the thermoplastic member wraps the plurality of electric wires, and the thermoplastic member accommodated in the one holding tool is covered with the other one holding tool, and
wherein the thermoplastic member and the plurality of electric wires are pressurized while they are heated with the mold via the one holding tool and another one holding tool.

21. The method for manufacturing the wire harness according to claim 20, wherein, after the thermoplastic member and the plurality of electric wires are pressurized while they are heated with the mold via the holding tool, the thermoplastic member and the plurality of electric wires, in the state where they are accommodated in the one holding tool and covered with the other one holding tool, are cooled.

22. A wire harness in which a predetermined part has a plurality of electric wires each including a core covered with a covering material and a covering member to cover the plurality of electric wires,
wherein the covering materials of the plurality of electric wires are in surface contact without gap except unavoidable space, and an inner peripheral surface of the covering member is closely attached to outer peripheral surfaces of the plurality of electric wires except unavoidable space.

23. The wire harness according to claim 22, wherein in the covering member, a central part is softer in comparison with a surface layer.

24. The wire harness according to claim 22 or 23, wherein the covering member is non-woven fabric or a foam formed of a thermoplastic material.
